(19) **Europäisches Patentamt**
**European Patent Office**
**Office européen des brevets**

(11) **EP 4 692 260 A1**

(12) **EUROPEAN PATENT APPLICATION**
published in accordance with Art. 153(4) EPC

(43) Date of publication:
**11.02.2026 Bulletin 2026/07**

(21) Application number: **24779558.6**

(22) Date of filing: **15.03.2024**

(51) International Patent Classification (IPC):
$C09D\ 175/04$ (2006.01)    $B05D\ 3/00$ (2006.01)
$B05D\ 5/00$ (2006.01)    $B05D\ 7/00$ (2006.01)
$B05D\ 7/14$ (2006.01)    $B05D\ 7/24$ (2006.01)
$C09D\ 7/61$ (2018.01)

(52) Cooperative Patent Classification (CPC):
**B05D 3/00; B05D 5/00; B05D 7/00; B05D 7/14;
B05D 7/24; C09D 7/61; C09D 175/04**

(86) International application number:
**PCT/JP2024/010162**

(87) International publication number:
**WO 2024/203429 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023057851**

(71) Applicant: **Kansai Paint Co., Ltd
Amagasaki-shi,
Hyogo 661-8555 (JP)**

(72) Inventors:
• **KOMURA, Katsuto**
  **Hiratsuka-shi, Kanagawa 254-8562 (JP)**
• **NAKAOKA, Haruka**
  **Hiratsuka-shi, Kanagawa 254-8562 (JP)**

(74) Representative: **Gill Jennings & Every LLP
The Broadgate Tower
20 Primrose Street
London EC2A 2ES (GB)**

(54) **KIT FOR THREE-COMPONENT COATING COMPOSITION, THREE-COMPONENT COATING COMPOSITION, AND IN-MOLD COATING METHOD**

(57) The purpose of the present invention is to provide a kit for a three-component coating composition that has a low VOC content, is capable of shortening a process required for cleaning a coating device when performing multi-coloring, has excellent hardness and adhesion, and makes it possible to form a coating film in which uneven coloring is suppressed. The present invention relates to a kit for a three-component coating composition including (A) a main agent containing (a1) an isocyanate-reactive group-containing compound, (B) a curing agent containing (b1) a polyisocyanate compound, and (C) a pigment paste containing (c1) an isocyanate-reactive group-containing compound and (c2) a pigment, wherein the viscosity ($V_A$) of the main agent (A) under specific conditions is in the range of 20-1,800 mPa·s, the viscosity($V_B$) of the curing agent (B) under specific conditions is in the range of 20-1,800 mPa·s, and the viscosity ($V_C$) of the pigment paste (C) under specific conditions is in the range of 20-1,800 mPa·s.

**EP 4 692 260 A1**

## Description

FIELD

The present invention relates to a kit for a three-component coating composition, a three-component coating composition, and an in-mold coating method using the kit or the three-component coating composition.

BACKGROUND

Conventionally, in order to impart excellent appearance and performance to the surface of a substrate, a coating composition is applied to the surface of the substrate, and the formed wet coating film is cured to form a coating film. In recent years, from the viewpoint of reducing the environmental load, there has been a demand for a reduction in volatile organic compounds (VOCs) in the coating composition and a reduction in the air conditioning energy required during coating.

Furthermore, in recent years, in various technical fields, there has been a demand for the suppression of color unevenness, as well as coating film performance such as hardness of the coating film and high adhesion between the coating film and the substrate.

Furthermore, in a case where a coating composition is used in multiple colors, there is a problem in that it takes labor to clean the coating equipment when changing the coating color.

Described in PTL 1 is a two-component coating material composition comprising a paint base component A and a curing component B, in which the paint base component A comprises: i. one or more polyols A1 selected from the group of polyols containing ester groups and having a hydroxyl value of 300 to 500 mg KOH/g and a hydroxyl group functionality of more than 2; ii. one or more aliphatic polyols A2 of general formula (I): $R^1$-$(OH)_p$ (wherein $R^1$ is a p-valent branched, cyclic or linear, saturated or unsaturated aliphatic hydrocarbon radical having 5 to 18 carbon atoms, the radical $R^1$ optionally containing one or more tertiary amino groups, and p is 2 to 6) that do not contain ether groups or ester groups; iii. one or more species A3 of general formula (II): $R^2$-$(C=O)_r$-O-$(AO)_s$-$R^3$ (wherein $R^2$ is a saturated or unsaturated aliphatic hydrocarbon radical having 6 to 30 carbon atoms, $R^3$ is H, the radical $PO(OH)_2$, or a radical of an optionally partially phosphorylated mono- or disaccharide or a radical of an optionally partially phosphorylated alditol, AO represents one or more alkylene oxide radicals selected from the group consisting of ethylene oxide, propylene oxide, and butylene oxide, r is 0 or 1, and s is 0 to 30); iv. one or more crosslinking catalysts A4 selected from the group of organotin compounds; v. any one or more polyamines A5 having at least two secondary amino groups and an amine value of 120 to 280 mg KOH/g; and ix. any one or more additives A9 selected from the group consisting of wetting agents and/or dispersants, rheological aids and flow control agents, and the curing component B comprises i. one or more polyisocyanates B1 having an average of 2.4 to 5 NCO groups, the two-component coating material composition comprising a solid content of at least 96 % by mass according to ASTM D2369 (2015), based on the total mass of the two-component coating material composition, and a molar ratio of NCO groups in the curing component B to acidic hydrogen atoms of hydroxyl groups, primary amino groups and secondary amino groups in the paint base component A of 1:1.15 to 1:0.95, and the two-component coating material composition allows damage-free release from normally metallic mold surfaces without the use of external mold release agents, while ensuring very good adhesion to the substrate, and can be recoated with further coating films, such as, for example, base coats and clear coats, forming a surface of very good quality without costly and inconvenient cleaning and/or polishing steps.

[CITATION LIST]

[PATENT LITERATURE]

[PTL 1] Japanese Unexamined Patent Application Publication (Translation of PCT Application) No. 2020-528103

SUMMARY

[TECHNICAL PROBLEM]

In the technology described in PTL 1, although the VOC content in the resulting two-component coating composition is low, there is a problem in that, in a case where the composition is multicolored, the labor required for cleaning the coating equipment is required.

The present invention aims to provide a kit for a three-component coating composition that has a low VOC content, can shorten the process of cleaning the coating equipment in a case where the composition is multicolored, and can form a coating film that is excellent in hardness and adhesion, and has reduced color unevenness.

[SOLUTION TO PROBLEM]

As a result of intensive research to achieve the above objectives, the present inventors have found out that a kit for a three-component coating composition, comprising: a main agent (A) containing an isocyanate reactive group-containing compound (a1); a curing agent (B) containing a polyisocyanate compound (b1); and a pigment paste (C) containing an isocyanate reactive group-containing compound (c1) and a pigment (c2), wherein a viscosity ($V_A$) of the main agent (A) under a shear rate of 100 sec$^{-1}$ and a temperature of 65 °C is within a range of 20 to 1800 mPa·s, a viscosity ($V_B$) of the curing agent (B) under a shear rate of 100 sec$^{-1}$ and a temperature of 65 °C is within a range of 20 to 1800 mPa·s, and a viscosity ($V_C$) of the pigment paste (C) under a shear rate of 100 sec$^{-1}$ and a temperature of 65 °C is within a range of 20 to 1800 mPa·s can solve the above-mentioned problems.

That is, the present invention relates to the following aspects <1> to <8>.

Aspect <1> A kit for a three-component coating composition, comprising:

a main agent (A) containing an isocyanate reactive group-containing compound (a1);
a curing agent (B) containing a polyisocyanate compound (b1); and
a pigment paste (C) containing an isocyanate reactive group-containing compound (c1) and a pigment (c2), wherein

a viscosity ($V_A$) of the main agent (A) under a shear rate of 100 sec$^{-1}$ and a temperature of 65 °C is within a range of 20 to 1800 mPa·s,
a viscosity ($V_B$) of the curing agent (B) under a shear rate of 100 sec$^{-1}$ and a temperature of 65 °C is within a range of 20 to 1800 mPa·s, and
a viscosity ($V_C$) of the pigment paste (C) under a shear rate of 100 sec$^{-1}$ and a temperature of 65 °C is within a range of 20 to 1800 mPa·s.

Aspect <2> The kit according to Aspect 1, wherein a solid content concentration of the three-component coating composition to be formed from the kit is 95 % by mass or more.

Aspect <3> The kit according to Aspect 1 or 2, wherein a solid content concentration of the pigment paste (C) is within a range of 85 to 98 % by mass.

Aspect <4> The kit according to any one of Aspects 1 to 3, wherein the isocyanate reactive group-containing compound (c1) includes an isocyanate reactive group-containing compound with a number average molecular weight within a range of 250 to 2500.

Aspect <5> The kit according to any one of Aspects 1 to 4, wherein a content of the pigment (c2) is within a range of 1.0 to 65 % by mass based on a total amount of the pigment paste (C).

Aspect <6> The kit according to any one of Aspects 1 to 5, wherein the ($V_A$), the ($V_B$) and the ($V_C$) satisfy following formulae (1) and (2).

$$0.4 \leqq (V_B) / (V_A) \leqq 2.5 \text{ Formula (1)}$$

$$0.3 \leqq (V_C) / (V_A) \leqq 3.0 \text{ Formula (2)}$$

Aspect <7> A three-component coating composition, comprising:

a main agent (A) containing an isocyanate reactive group-containing compound (a1);
a curing agent (B) containing a polyisocyanate compound (b1); and
a pigment paste (C) containing an isocyanate reactive group-containing compound (c1) and a pigment (c2), wherein

a viscosity ($V_A$) of the main agent (A) under a shear rate of 100 sec$^{-1}$ and a temperature of 65 °C is within a range of 20 to 1800 mPa·s,
a viscosity ($V_B$) of the curing agent (B) under a shear rate of 100 sec$^{-1}$ and a temperature of 65 °C is within a range of 20 to 1800 mPa·s, and
a viscosity ($V_C$) of the pigment paste (C) under a shear rate of 100 sec$^{-1}$ and a temperature of 65 °C is within a range of 20 to 1800 mPa·s.

Aspect <8> An in-mold coating method comprising steps of:

injecting an in-mold coating composition between a molded substrate and an inner wall of a mold;
curing the in-mold coating composition, and

removing a coated molded article from the mold, wherein

the in-mold coating composition is the three-component coating composition formed from the kit according to any one of Aspects 1 to 6, or the three-component coating composition according to Aspect 7.

[ADVANTAGEOUS EFFECTS OF INVENTION]

According to the present invention, a kit for a three-component coating composition that has a low VOC content, can shorten the process of cleaning the coating equipment in a case where the composition is multicolored, and can form a coating film that is excellent in hardness and adhesion, and has reduced color unevenness can be provided.

DESCRIPTION OF EMBODIMENTS

The present invention will be described in detail below, however, these are examples of preferred embodiments and the present invention is not limited to the contents thereof.

[The kit for the three-component coating composition and the three-component coating composition]

The kit for the three-component coating composition according to the present invention (hereinbelow, which may be referred simply to as "the kit") is a kit for a three-component coating composition, comprising: a main agent (A) containing an isocyanate reactive group-containing compound (a1); a curing agent (B) containing a polyisocyanate compound (b1); and a pigment paste (C) containing an isocyanate reactive group-containing compound (c1) and a pigment (c2), wherein a viscosity ($V_A$) of the main agent (A) under a shear rate of 100 sec$^{-1}$ and a temperature of 65 °C is within a range of 20 to 1800 mPa·s, a viscosity ($V_B$) of the curing agent (B) under a shear rate of 100 sec$^{-1}$ and a temperature of 65 °C is within a range of 20 to 1800 mPa·s, and a viscosity ($V_C$) of the pigment paste (C) under a shear rate of 100 sec$^{-1}$ and a temperature of 65 °C is within a range of 20 to 1800 mPa·s.
Furthermore, the three-component coating composition according to the present invention can be formed by mixing the main agent (A), the curing agent (B), and the pigment paste (C).
Incidentally, the method for measuring the viscosity ($V_A$), the viscosity ($V_B$) and the viscosity ($V_C$) will be described in the Examples.
The reasons why the kit according to the present invention can form the three-component coating composition that has a low VOC content, can shorten the process of cleaning the coating equipment in a case where the composition is multicolored, and can form a coating film that is excellent in hardness and adhesion, and has reduced color unevenness is speculated as follows.
In a case where a two-component coating composition containing a main agent containing a pigment, and a curing agent is multi-colored, when changing colors, the main agent tank and piping are washed, or the number of main agent tanks is prepared so as to be the same as the number of colors, and only the piping is washed. Since tanks of main agents that are used in large quantities often have a large volume, in a case where the main agent tank and piping are washed, the labor required to wash the main agent tank with a large volume is large, and in a case where a plurality of main agent tanks are prepared, the size of the main agent tanks is a large burden on the painting site.
In a case where a three-component coating composition containing the main agent (A), the curing agent (B), and the pigment paste (C) is multi-colored, when changing colors, the pigment paste (C) tank and piping are washed, or the number of pigment paste (C) tanks is prepared so as to be the same as the number of colors, and only the piping is washed. Since the volume of the pigment paste (C) tank is often small when a small amount of pigment paste (C) is used, in a case where the pigment paste (C) tank and piping are cleaned, the labor required to clean the pigment paste (C) tank with a small volume is small. Also, in a case where a plurality of pigment paste (C) tanks are prepared, the burden on the painting site is small because the pigment paste (C) tanks are small.
However, in a case where multiple colors are used, a three-component coating composition can shorten the process of cleaning the coating equipment when changing colors, however, it has been found that if a coating composition with low VOC content is used as the three-component coating composition, color unevenness is likely to occur and hardness and adhesion are likely to decrease.
The reason why color unevenness is likely to occur and hardness and adhesion are likely to decrease when the above-mentioned coating composition with low VOC content is used as the three-component coating composition is presumed that since it is difficult to adjust the viscosity of the coating composition with low VOC content using a solvent, it is difficult for the three liquids of the main agent (A), curing agent (B) and pigment paste (C) to mix.
Accordingly, as a result of intensive research by the present inventors, by adjusting the viscosity ($V_A$) of the main agent (A) under a shear rate of 100 sec$^{-1}$ and a temperature of 65 °C to be within a range of 20 to 1800 mPa·s, the viscosity ($V_B$) of the curing agent (B) under a shear rate of 100 sec$^{-1}$ and a temperature of 65 °C to be within a range of 20 to 1800 mPa·s, and a viscosity ($V_C$) of the pigment paste (C) under a shear rate of 100 sec$^{-1}$ and a temperature of 65 °C to be within a range of 20 to 1800 mPa·s, it was found that even the above-mentioned three-component coating composition with low VOC content can form a coating film with excellent hardness and adhesion and suppressed color unevenness.

In the kit according to the present invention, the reason why the color unevenness is suppressed and the hardness and adhesion are excellent, even in the case of the above-mentioned three-component coating composition with low VOC content is presumed to be because the three liquids of the main agent (A), the curing agent (B) and the pigment paste (C) are easily mixed and the entire coating film hardens uniformly.

The solid content concentration of the three-component coating composition formed from the kit according to the present invention or the three-component coating composition according to the present disclosure is preferably 95% by mass or more, more preferably 96% by mass or more, and even more preferably 97% by mass or more, from the viewpoints of reducing the VOC content in the resulting coating composition and the hardness and color unevenness of the coating film formed. The upper limit of the solid content concentration is 100% by mass.

Incidentally, in this description, "solid content" means non-volatile components such as resins, hardeners, and pigments remaining after drying the same at 80 °C for 30 minutes. The solid content can be determined, for example, by weighing a sample into a heat-resistant container such as an aluminum foil cup, spreading the sample on the bottom of the container, drying the same at 80 °C for 30 minutes, and weighing the mass of the components remaining after drying.

Furthermore, in this description, "solid content concentration" means the mass ratio of the solid content in the composition. Therefore, the solid content concentration of a composition can be calculated, for example, by weighing 1.0 g of the composition into a heat-resistant container such as an aluminum foil cup, spreading the composition on the bottom of the container, drying the same at 80 °C for 30 minutes, weighing the mass of the components in the composition remaining after drying, and determining the ratio of the mass of the components remaining after drying to the total mass of the composition before drying.

From the viewpoint of improving the hardness, adhesion, and color unevenness of the coating film to be formed, it is preferable that the viscosity ($V_A$) of the main agent (A) under a shear rate of 100 sec$^{-1}$ and a temperature of 65 °C, the viscosity ($V_B$) of the curing agent (B) under a shear rate of 100 sec$^{-1}$ and a temperature of 65 °C, and the viscosity ($V_C$) of the pigment paste (C) under a shear rate of 100 sec$^{-1}$ and a temperature of 65 °C satisfy the following formulae (1) and (2).

$$0.1 \leqq (V_B) / (V_A) \leqq 7.1$$

$$0.2 \leqq (V_C) / (V_A) \leqq 5.6$$

From the viewpoint of improving the hardness, adhesion, and color unevenness of the coating film to be formed, it is more preferable that the viscosity ($V_A$) of the main agent (A) under a shear rate of 100 sec$^{-1}$ and a temperature of 65 °C, the viscosity ($V_B$) of the curing agent (B) under a shear rate of 100 sec$^{-1}$ and a temperature of 65 °C, and the viscosity ($V_C$) of the pigment paste (C) under a shear rate of 100 sec$^{-1}$ and a temperature of 65 °C satisfy the following formulae (1) and (2) .

$$0.4 \leqq (V_B) / (V_A) \leqq 2.5 \qquad \text{Formula (1)}$$

$$0.3 \leqq (V_C) / (V_A) \leqq 3.0 \qquad \text{Formula (2)}$$

From the viewpoint of improving the hardness, and adhesion of the coating film to be formed, the viscosity ($V_A$) of the main agent (A) under a shear rate of 100 sec$^{-1}$ and a temperature of 65 °C, and the viscosity ($V_B$) of the curing agent (B) under a shear rate of 100 sec$^{-1}$ and a temperature of 65 °C satisfy:

preferably $0.4 \leqq (V_B) / (V_A) \leqq 2.0$, and
more preferably $0.4 \leqq (V_B) / (V_A) \leqq 1.5$.

From the viewpoint of the color unevenness of the coating film to be formed, it is preferable that the viscosity ($V_A$) of the main agent (A) under a shear rate of 100 sec$^{-1}$ and a temperature of 65 °C, and the viscosity ($V_C$) of the pigment paste (C) under a shear rate of 100 sec$^{-1}$ and a temperature of 65 °C satisfy:

preferably $0.3 \leqq (V_C) / (V_A) \leqq 2.5$, and
more preferably $0.4 \leqq (V_C) / (V_A) \leqq 2.0$.

[The main agent (A)]

The main agent (A) contains an isocyanate reactive group-containing compound (a1). [The isocyanate reactive group-containing compound (a1)]

The isocyanate reactive group-containing compound (a1) is a compound having at least one isocyanate reactive group in one molecule.

The isocyanate reactive group is not particularly limited as long as it is a group that is reactive with an isocyanate group. Examples of the isocyanate reactive group include a hydroxyl group, an amino group, and a thiol group. From the viewpoint of improving the hardness, adhesion, and color unevenness of the coating film to be formed, it is preferable that the compound contains at least one selected from a hydroxyl group and an amino group, and it is more preferable that the compound contains a hydroxyl group.

Therefore, examples of the isocyanate reactive group-containing compound (a1) include hydroxyl group-containing compounds (a11), amino group-containing compounds (a12), and thiol group-containing compounds (a13), and from the viewpoint of improving the hardness, adhesion, and color unevenness of the coating film to be formed, it is preferable to include at least one compound selected from the hydroxyl group-containing compound (a11) and the amino group-containing compound (a12), and it is more preferable to include the hydroxyl group-containing compound (a11).

From the viewpoints of reducing the VOC content in the resulting coating composition and improving the hardness, adhesion, and color unevenness of the coating film formed, the above-mentioned isocyanate reactive group-containing compound (a1) preferably contains an isocyanate reactive group-containing compound having a number average molecular weight within a range of 250 to 2500, more preferably contains an isocyanate reactive group-containing compound having a number average molecular weight within a range of 300 to 1800, and even more preferably contains an isocyanate reactive group-containing compound having a number average molecular weight within a range of 300 to 1500.

[The hydroxyl group-containing compound (a11)]

The hydroxyl group-containing compound (a11) is a compound having at least one hydroxyl group in one molecule. Examples of the hydroxyl group-containing compound (a11) include hydroxyl group-containing oligomers and hydroxyl group-containing polymers, such as hydroxyl group-containing polyester resins, hydroxyl group-containing polycaprolactone resins, hydroxyl group-containing polyether resins, hydroxyl group-containing polycarbonate resins, hydroxyl group-containing acrylic resins, hydroxyl group-containing polyurethane resins, hydroxyl group-containing epoxy resins, and hydroxyl group-containing alkyd resins. Among these, from the viewpoints of reducing the VOC content in the resulting coating composition and improving the hardness, adhesion, and color unevenness of the coating film formed, it is preferable to include at least one resin selected from hydroxyl group-containing polyester resins, hydroxyl group-containing polycaprolactone resins, and hydroxyl group-containing polyether resins, and it is more preferable to include at least one resin selected from hydroxyl group-containing polyester resins and hydroxyl group-containing polycaprolactone resins. These can be used alone or in combination of two or more kinds.

The hydroxyl group-containing polyester resin can usually be produced by an esterification reaction or transesterification reaction between an acid component and an alcohol component.

As the acid component, a compound usually used as a polycarboxylic acid in producing the hydroxyl group-containing polyester resin can be used. Examples of such polycarboxylic acids include aliphatic polybasic acids, alicyclic polybasic acids, and aromatic polybasic acids.

The aliphatic polybasic acids are generally aliphatic compounds having two or more carboxyl groups in one molecule, acid anhydrides of the aliphatic compounds, and esters of the aliphatic compounds. Examples of the aliphatic polybasic acid include aliphatic polycarboxylic acids such as succinic acid, glutaric acid, adipic acid, pimelic acid, suberic acid, azelaic acid, sebacic acid, undecane diacid, dodecane diacid, brassylic acid, octadecanedioic acid, citric acid, and butanetetracarboxylic acid; an anhydride of the aliphatic polycarboxylic acids; and a lower alkyl ester of said aliphatic polycarboxylic acids having 1 to 6 carbon atoms, and preferably 1 to 4 carbon atoms. The above aliphatic polybasic acids may be used alone or in combination of two or more kinds.

The alicyclic polybasic acid is generally a compound having one or more alicyclic structures and two or more carboxyl groups in one molecule, an acid anhydride of the compound, and an esterification product of the compound. The alicyclic structure can be mainly a 4- to 6-membered ring structure. Examples of the alicyclic polybasic acid include alicyclic polycarboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid; anhydrides of the alicyclic polycarboxylic acids; and lower alkyl esterification products of the alicyclic polycarboxylic acids having 1 to 6 carbon atoms, preferably 1 to 4 carbon atoms. The above alicyclic polybasic acids may be used alone or in combination of two or more kinds.

The aromatic polybasic acids are generally aromatic compounds having two or more carboxyl groups in one molecule, acid anhydrides of the aromatic compounds, and esters of the aromatic compounds. Examples of aromatic polybasic acids include aromatic polycarboxylic acids such as phthalic acid, isophthalic acid, terephthalic acid, naphthalenedicarboxylic acid, 4,4'-biphenyldicarboxylic acid, trimellitic acid, and pyromellitic acid; anhydrides of the aromatic polycarboxylic acids; and lower alkyl esters of the aromatic polycarboxylic acids having 1 to 6 carbon atoms, preferably 1 to 4 carbon atoms. The aromatic polybasic acids may be used alone or in combination of two or more kinds.

In addition, acid components other than the aliphatic polybasic acids, alicyclic polybasic acids, and aromatic polybasic acids may also be used. Such acid components are not particularly limited, and examples thereof include fatty acids such as coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; monocarboxylic acids such as isononanoic acid, neodecanoic acid, lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid; and hydroxycarboxylic acids such as lactic acid, 3-hydroxybutanoic acid, and 3-hydroxy-4-ethoxybenzoic acid. These acid components may be used alone or in combination of two or more kinds.

As the alcohol component, a polyhydric alcohol having two or more hydroxyl groups in one molecule can be suitably used. Examples of the polyhydric alcohol include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecane dimethanol, hydroxypivalic acid neopentyl glycol ester, hydrogenated bisphenol A, hydrogenated bisphenol F, dimethylolpropionic acid; polylactone diols obtained by adding lactone compounds such as ε-caprolactone to these dihydric alcohols; ester diol compounds such as bis(hydroxyethyl)terephthalate; polyether diol compounds such as alkylene oxide adducts of bisphenol A, polyethylene glycol, polypropylene glycol, and polytetramethylene glycol; trihydric or higher alcohols such as glycerin, trimethylolethane, trimethylolpropane, diglycerin, triglycerin, 1,2,6-hexanetriol, pentaerythritol, dipentaerythritol, tris(2-hydroxyethyl)isocyanuric acid, sorbitol, and mannite; polylactone polyol compounds obtained by adding lactone compounds such as ε-caprolactone to these trihydric or higher alcohols; and fatty acid esters of glycerin, etc.

Alcohol components other than the above polyhydric alcohols can also be used. The alcohol component is not particularly limited, and examples thereof include monoalcohols such as methanol, ethanol, propyl alcohol, butyl alcohol, isobutyl alcohol, pentyl alcohol, 2-ethylhexyl alcohol, stearyl alcohol, benzyl alcohol, phenethyl alcohol, and 2-phenoxyethanol; and alcohol compounds obtained by reacting monoepoxy compounds such as propylene oxide, butylene oxide, and "Cardura E10P" (trade name, manufactured by Hexion, glycidyl ester of synthetic highly branched saturated fatty acid) with an acid.

The method of producing the hydroxyl group-containing polyester resin is not particularly limited, and can be carried out according to a conventional method. For example, the hydroxyl group-containing polyester polyol resin can be produced by heating the above-mentioned acid component and the alcohol component in a nitrogen gas flow at about 150 to 250 °C for about 5 to 10 hours to carry out an esterification reaction or an ester exchange reaction between the acid component and the alcohol component.

When the acid component and the alcohol component are subjected to the esterification reaction or ester exchange reaction, these components may be added to the reaction vessel at once, or one or both may be added in several portions. Alternatively, the hydroxyl group-containing polyester resin may be first synthesized, and then the resulting hydroxyl group-containing polyester resin may be reacted with an acid anhydride to half-esterify the same to produce a carboxyl group- and hydroxyl group-containing polyester resin. Alternatively, the carboxyl group-containing polyester resin may be first synthesized, and then the alcohol component may be added to produce the hydroxyl group-containing polyester resin.

When the esterification or ester exchange reaction is carried out, a catalyst known per se, such as dibutyltin oxide, antimony trioxide, zinc acetate, manganese acetate, cobalt acetate, calcium acetate, lead acetate, tetrabutyl titanate, or tetraisopropyl titanate, may be used as a catalyst to promote the reaction.

The hydroxyl group-containing polyester resin can be modified with fatty acids, monoepoxy compounds, polyisocyanate compounds, etc., during or after the production of the resin.

Examples of the fatty acids include coconut oil fatty acids, cottonseed oil fatty acids, hemp seed oil fatty acids, rice bran oil fatty acids, fish oil fatty acids, tall oil fatty acids, soybean oil fatty acids, linseed oil fatty acids, tung oil fatty acids, rapeseed oil fatty acids, castor oil fatty acids, dehydrated castor oil fatty acids, safflower oil fatty acids, etc., and an example of the monoepoxy compound that can be suitably used is "Cardura E10P" (trade name, manufactured by Hexion, glycidyl ester of synthetic highly branched saturated fatty acid).

The polyisocyanate compounds include, for example, aliphatic diisocyanate compounds such as lysine diisocyanate, hexamethylene diisocyanate, and trimethylhexane diisocyanate; alicyclic diisocyanate compounds such as hydrogenated xylylene diisocyanate, isophorone diisocyanate, methylcyclohexane-2,4-diisocyanate, methylcyclohexane-2,6-diisocyanate, 4,4'-methylenebis(cyclohexylisocyanate), 1,3-(isocyanatomethyl)cyclohexane, and 1,4-(isocyanatomethyl)cyclohexane; aromatic diisocyanate compounds such as trilene diisocyanate, xylylene diisocyanate, tetramethyl xylylene diisocyanate, and diphenylmethane diisocyanate; organic polyisocyanates themselves, such as trivalent or higher polyisocyanates such as lysine triisocyanate and 4-(isocyanatomethyl)octamethylene diisocyanate; adducts of these organic polyisocyanates with polyhydric alcohols, low molecular weight polyester resins, water, and the like; cyclized polymers of these organic polyisocyanates (for example, isocyanurates), biuret adducts, and allophanate adducts. These polyisocyanate compounds can be used alone or in combination of two or more kinds.

The hydroxyl value of the hydroxyl group-containing polyester resin is preferably within a range of 50 to 800 mgKOH/g, more preferably within a range of 100 to 700 mgKOH/g, and even more preferably within a range of 300 to 600 mgKOH/g, from the viewpoint of improving the hardness and adhesion of the coating film to be formed.

The number average molecular weight of the hydroxyl group-containing polyester resin is preferably within a range of 250 to 2500, more preferably within a range of 300 to 1800, and even more preferably within a range of 350 to 1500, from the viewpoint of reducing the VOC content in the resulting coating composition, and the hardness, adhesion, and color unevenness of the coating film to be formed.

Furthermore, from the viewpoints of reducing the VOC content in the resulting coating composition and the hardness, adhesion, and color unevenness of the coating film formed, the glass transition temperature (Tg) of the hydroxyl group-containing polyester resin is preferably within a range of -80 to 10 °C, more preferably within a range of -70 to 5 °C, and even more preferably within a range of -60 to 0 °C.

Incidentally, in this description, the number average molecular weight and weight average molecular weight are values obtained by converting the retention time (retention volume) measured using a gel permeation chromatograph (GPC) into the molecular weight of polystyrene using the retention time (retention volume) of a standard polystyrene of known molecular weight measured under the same conditions. Specifically, the gel permeation chromatograph used is "HLC-8120GPC" (trade name, manufactured by Tosoh Corporation), and four columns, "TSKgel G4000HXL", "TSKgel G3000HXL", "TSKgel G2500HXL" and "TSKgel G2000HXL" (trade names, all manufactured by Tosoh Corporation), are used; a differential refractometer is used as the detector; and measurements can be performed under the following conditions: mobile phase: tetrahydrofuran, measurement temperature: 40 °C, flow rate: 1 mL/min.

The glass transition temperature can be measured, for example, by using a differential scanning calorimeter "DSC-50Q" (manufactured by Shimadzu Corporation, trade name) to place a sample in a measuring cup, vacuum suction to completely remove the solvent, and then measuring the change in heat quantity in the range of -100 °C to 150 °C at a heating rate of 3 °C/ min, and taking the first change in the baseline on the low temperature side as the static glass transition temperature.

In a case where the hydroxyl group-containing compound (a11) contains the hydroxyl group-containing polyester resin, the content of the hydroxyl group-containing polyester resin is preferably within a range of 50 to 100 % by mass, more preferably within a range of 60 to 95 % by mass, and even more preferably within a range of 70 to 90 % by mass, based on the total solid content of the hydroxyl group-containing compound (a11), from the viewpoints of reducing the VOC content in the resulting coating composition and of improving the hardness, adhesion, and color unevenness of the coating film formed.

The hydroxyl group-containing polycaprolactone resin can be obtained, for example, by ring-opening polymerization of ε-caprolactone using a dihydric to tetrahydric polyhydric alcohol as an initiator. Examples of the divalent or higher polyhydric alcohol include ethylene glycol, glycerin, trimethylolethane, trimethylolpropane, diglycerin, ditrimethylolpropane, 1,2,6-hexanetriol, pentaerythritol, tris(2-hydroxyethyl)isocyanuric acid, and polyhydric alcohol compounds obtained by reacting dimethylolalkanoic acid with a monoepoxy compound (for example, "Cardura E10P; glycidyl ester of synthetic highly branched saturated fatty acid" manufactured by HEXION Specialty Chemicals). These can be used alone or in combination of two or more kinds.

In addition, commercially available products can be used as the hydroxyl group-containing polycaprolactone resin. Commercially available products include, for example, "Placcel 205", "Placcel 205H", "Placcel L205AL", "Placcel 205U", "Placcel 208", "Placcel 210", "Placcel 210N", "Placcel 210CP", "Placcel 212", "Placcel L212AL", "Placcel 220", "Placcel 220N", "Placcel 220CPB", "Placcel 220CPT", "Placcel 220UA", "Placcel 220NP1", "Placcel L220AL", "Placcel 220EB", "Placcel 230", "Placcel 230N", "Placcel 240", "Placcel 303", "Placcel 305", "Placcel 308", "Placcel 309", "Placcel 312", "Placcel 320", "Placcel L320AL", and "Placcel 410" (all of the above are trade names, manufactured by Daicel Corporation), "TONE 0201", "TONE 0230", "TONE 0249", "TONE 0301", "TONE 0305", "TONE 0310", "TONE 1241", "TONE 1278", "TONE 2221" (all of the above are trade names, manufactured by The Dow Chemical Company), "Capa 2043", "Capa 2101", "Capa 2201", "Capa 2205", "Capa 2209", "Capa 2201A", "Capa 2203A", "Capa 7201A", "Capa 7203", "Capa 3031", "Capa 3050J", "Capa 3091", and "Capa 4101" (all of the above are trade names, manufactured by Ingevity) can be mentioned.

The hydroxyl value of the hydroxyl group-containing polycaprolactone resin is preferably within a range of 50 to 900 mgKOH/g, more preferably within a range of 100 to 750 mgKOH/g, and even more preferably within a range of 130 to 600 mgKOH/g, from the viewpoint of improving the hardness and adhesion of the coating film to be formed.

The number average molecular weight of the hydroxyl group-containing polycaprolactone resin is preferably within a range of 250 to 2500, more preferably within a range of 280 to 1500, and even more preferably within a range of 300 to 1000, from the viewpoint of reducing the VOC content in the resulting coating composition, and the hardness, adhesion, and color unevenness of the coating film to be formed.

In a case where the hydroxyl group-containing compound (a11) contains the above-mentioned hydroxyl group-containing polycaprolactone resin, the content of the hydroxyl group-containing polycaprolactone resin is preferably within a range of 5 to 100 % by mass, more preferably within a range of 10 to 75 % by mass, and even more preferably within a range of 10 to 50 % by mass, based on the total solid content of the hydroxyl group-containing compound (a11), from the viewpoints of reducing the VOC content in the resulting coating composition and of improving the hardness, adhesion, and color unevenness of the coating film to be formed.

As the hydroxyl group-containing polyether resin, an alkylene oxide adduct of a hydroxyl group-containing monomer, a ring-opening (co)polymer of an alkylene oxide or a cyclic ether (such as tetrahydrofuran), etc., as described below, can be used. Specific examples include polyethylene glycol, polypropylene glycol, polytetramethylene glycol, ethylene glycol-propylene glycol (block or random) copolymers, polyhexamethylene glycol, polyoctamethylene glycol, etc.

The above hydroxyl group-containing polyether resins can be used alone or in combination of two or more kinds.

From the viewpoint of improving the hardness and adhesion of the coating film to be formed, the hydroxyl value of the above hydroxyl group-containing polyether resin is preferably within a range of 50 to 600 mgKOH/g, more preferably within a range of 70 to 500 mgKOH/g, and even more preferably within a range of 90 to 400 mgKOH/g.

The number average molecular weight of the hydroxyl group-containing polyether resin is preferably within a range of 250 to 2500, more preferably within a range of 300 to 1500, and even more preferably within a range of 350 to 1000, from the viewpoints of reducing the VOC content in the resulting coating composition, and of improving the hardness, adhesion, and color unevenness of the coating film to be formed.

In the case where the hydroxyl group-containing compound (a11) contains the hydroxyl group-containing polyether resin, the content of the hydroxyl group-containing polyether resin is preferably within a range of 20 to 100 % by mass, more preferably within a range of 40 to 100 % by mass, and even more preferably within a range of 50 to 100 % by mass, based on the total solid content of the hydroxyl group-containing compound (a11), from the viewpoints of reducing the VOC content in the resulting coating composition, and of improving the hardness, adhesion, and color unevenness of the coating film formed.

The hydroxyl group-containing polycarbonate resin is a compound obtained by polycondensation reaction of a known polyol component with a carbonylating agent by a conventional method. Examples of the polyol component include a diol component and a polyhydric alcohol component such as a trihydric or higher alcohol.

The above diol components include linear diols such as 1,3-propanediol, 1,4-butanediol, 1,5-pentanediol, 1,6-hexanediol, 1,7-heptanediol, 1,8-octanediol, 1,9-nonanediol, and 1,10-decanediol; branched diols such as 2-methyl-1,3-propanediol, 3-methyl-1,5-pentanediol, neopentyl glycol, 2-ethyl-1,6-hexanediol, 2,2-diethyl-1,3-propanediol, 2-butyl-2-ethyl-1,3-propanediol, 2-methyl-1,8-octanediol, 2,2,4-trimethyl-1,3-pentanediol and 2-ethyl-1,3-hexanediol; alicyclic diols such as 1,3-cyclohexanediol, 1,4-cyclohexanediol, 1,4-cyclohexanedimethanol and 2,2,4,4-tetramethyl-1,3-cyclobutanediol; aromatic diols such as p-xylenediol and p-tetrachloroxylenediol; ether-based diols such as diethylene glycol and dipropylene glycol; and polylactone diols obtained by adding lactone compounds such as ε-caprolactone to these diol components. These diol components can be used alone or in combination of two or more kinds.

The trihydric or higher alcohols include glycerin, trimethylolethane, trimethylolpropane, a dimer of trimethylolpropane, and pentaerythritol; and polylactone polyols obtained by adding lactone compounds such as ε-caprolactone to these trihydric or higher alcohols. These trihydric or higher alcohols can be used alone or in combination of two or more kinds.

The carbonylating agent can be any known agent. Specific examples include alkylene carbonate, dialkyl carbonate, diallyl carbonate, phosgene, etc., and these can be used alone or in combination of two or more kinds. Among these, preferred ones include ethylene carbonate, propylene carbonate, dimethyl carbonate, diethyl carbonate, dibutyl carbonate, diphenyl carbonate, etc.

The hydroxyl value of the hydroxyl group-containing polycarbonate resin is preferably within a range of 50 to 800 mgKOH/g, more preferably within a range of 70 to 700 mgKOH/g, and even more preferably within a range of 90 to 600 mgKOH/g, from the viewpoint of improving the hardness and adhesion of the coating film to be formed.

The number average molecular weight of the hydroxyl group-containing polycarbonate resin is preferably within a range of 250 to 2500, more preferably within a range of 300 to 1800, and even more preferably within a range of 400 to 1500, from the viewpoint of reducing the VOC content in the resulting coating composition and the hardness, adhesion, and color unevenness of the coating film to be formed.

In a case where the hydroxyl group-containing compound (a11) contains the above-mentioned hydroxyl group-containing polycarbonate resin, the content of the hydroxyl group-containing polycarbonate resin is preferably within a range of 5 to 80 % by mass, more preferably within a range of 10 to 50 % by mass, and even more preferably within a range of 10 to 40 % by mass, based on the total solid content of the hydroxyl group-containing compound (a11), from the viewpoints of reducing the VOC content in the resulting coating composition, and of improving the hardness, adhesion, and color unevenness of the coating film to be formed.

The hydroxyl group-containing acrylic resin can be produced, for example, by copolymerizing a hydroxyl group-containing polymerizable unsaturated monomer and another polymerizable unsaturated monomer that is copolymerizable with the hydroxyl group-containing polymerizable unsaturated monomer by a method known per se, such as a solution polymerization method in an organic solvent or an emulsion polymerization method in water.

The hydroxyl group-containing polymerizable unsaturated monomer is a compound that has one or more hydroxyl groups and one or more polymerizable unsaturated bonds in one molecule. Examples of the hydroxyl group-containing polymerizable unsaturated monomer include monoesters of (meth)acrylic acid and dihydric alcohols having 2 to 8 carbon atoms, such as 2-hydroxyethyl (meth)acrylate, 2-hydroxypropyl (meth)acrylate, 3-hydroxypropyl (meth)acrylate, and 4-hydroxybutyl (meth)acrylate; ε-caprolactone-modified monoesters of the (meth)acrylic acid and dihydric alcohols having 2 to 8 carbon atoms; N-hydroxymethyl (meth)acrylamide; allyl alcohol; and (meth)acrylates having polyoxyethylene chains with hydroxyl groups at the molecular ends.

It should be noted that, in the present invention, monomers that fall under the category of (xvii) polymerizable unsaturated monomers having an ultraviolet absorbing functional group, which will be described later, should be defined as other polymerizable unsaturated monomers that are copolymerizable with the above hydroxyl group-containing polymerizable unsaturated monomers, and are excluded from the hydroxyl group-containing polymerizable unsaturated monomers. These can be used alone or in combination of two or more kinds.

Other polymerizable unsaturated monomers that can be copolymerized with the above hydroxyl group-containing polymerizable unsaturated monomers include, for example, the following monomers (i) to (xx). These polymerizable unsaturated monomers can be used alone or in combination of two or more kinds.

(i) Alkyl or cycloalkyl (meth)acrylate: For example, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate, cyclododecyl (meth)acrylate, tricyclodecanyl (meth)acrylate, etc.

(ii) Polymerizable unsaturated monomers having an isobornyl group: isobornyl (meth)acrylate, etc.

(iii) Polymerizable unsaturated monomers having an adamantyl group: adamantyl (meth)acrylate, etc.

(iv) Polymerizable unsaturated monomers having a tricyclodecenyl group: tricyclodecenyl (meth)acrylate, etc.

(v) Polymerizable unsaturated monomers containing an aromatic ring: benzyl (meth)acrylate, styrene, α-methylstyrene, vinyltoluene, etc.

(vi) Polymerizable unsaturated monomers having an alkoxysilyl group: vinyltrimethoxysilane, vinyltriethoxysilane, vinyltris(2-methoxyethoxy)silane, γ-(meth)acryloyloxypropyltrimethoxysilane, γ-(meth)acryloyloxypropyltriethoxysilane, etc.

(vii) Polymerizable unsaturated monomers having a fluorinated alkyl group: perfluoroalkyl (meth)acrylates such as perfluorobutylethyl (meth)acrylate and perfluorooctylethyl (meth)acrylate; fluoroolefins, etc.

(viii) Polymerizable unsaturated monomers having a photopolymerizable functional group such as a maleimide group.

(ix) Vinyl compounds: N-vinylpyrrolidone, ethylene, butadiene, chloroprene, vinyl propionate, vinyl acetate, etc.

(x) Carboxyl group-containing polymerizable unsaturated monomers: (meth)acrylic acid, maleic acid, crotonic acid, β-carboxyethyl (meth)acrylate, etc.

(xi) Nitrogen-containing polymerizable unsaturated monomers: (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylene bis(meth)acrylamide, ethylene bis(meth)acrylamide, adducts of glycidyl (meth)acrylate and amine compounds, etc.

(xii) Polymerizable unsaturated monomers having two or more polymerizable unsaturated groups in one molecule: allyl (meth)acrylate, ethylene glycol di(meth)acrylate, 1,4-butanediol di(meth)acrylate, neopentyl glycol di(meth)acrylate, 1,6-hexanediol di(meth)acrylate, etc.

(xiii) Epoxy group-containing polymerizable unsaturated monomers: glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, allyl glycidyl ether, etc.

(xiv) (Meth)acrylates having a polyoxyethylene chain with an alkoxy group at the molecular end.

(xv) Sulfonic acid group-containing polymerizable unsaturated monomers: 2-acrylamido-2-methylpropanesulfonic acid, 2-sulfoethyl (meth)acrylate, allylsulfonic acid, 4-styrenesulfonic acid, etc.; sodium salts and ammonium salts of these sulfonic acids, etc.

(xvi) Polymerizable unsaturated monomers having a phosphoric acid group: acid phosphooxyethyl (meth)acrylate, acid phosphooxypropyl (meth)acrylate, acid phosphooxypoly(oxyethylene)glycol (meth)acrylate, acid phosphooxypoly(oxypropylene)glycol (meth)acrylate, etc.

(xvii) Polymerizable unsaturated monomers having an ultraviolet absorbing functional group: 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, 2-(2'-hydroxy-5'-methacryloyloxyethylphenyl)-2H-benzotriazole, etc.

(xviii) Light-stable polymerizable unsaturated monomers: 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6 -tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-crotonoyl-4-crotonoyloxy-2,2,6,6-tetramethylpiperidine, etc.

(xix) Polymerizable unsaturated monomers having a carbonyl group: acrolein, diacetone acrylamide, diacetone methacrylamide, acetoacetoxyethyl methacrylate, formyl styrene, vinyl alkyl ketones having 4 to 7 carbon atoms (e.g., vinyl methyl ketone, vinyl ethyl ketone, vinyl butyl ketone), etc.

(xx) Polymerizable unsaturated monomers having an acid anhydride group: maleic anhydride, itaconic anhydride, citraconic anhydride, etc.

In this description, the polymerizable unsaturated group means an unsaturated group capable of radical polymerization. Examples of such polymerizable unsaturated groups include vinyl groups, (meth)acryloyl groups, (meth)acrylamide groups, vinyl ether groups, allyl groups, propenyl groups, isopropenyl groups, and maleimide groups.

In addition, in this description, "(meth)acrylate" means acrylate and/or methacrylate. "(Meth)acrylic acid" means acrylic acid and/or methacrylic acid. Furthermore, "(meth)acryloyl" means acryloyl and/or methacryloyl. Still further, "(meth)acrylamide" means acrylamide and/or methacrylamide.

The hydroxyl value of the hydroxyl group-containing acrylic resin is preferably within a range of 5 to 240 mgKOH/g, more preferably within a range of 20 to 220 mgKOH/g, and even more preferably within a range of 25 to 200 mgKOH/g, from the viewpoint of improving the hardness and adhesion of the coating film to be formed.

Furthermore, the number average molecular weight of the hydroxyl group-containing acrylic resin is preferably within a range of 250 to 2500, more preferably within a range of 300 to 1800, and even more preferably within a range of 500 to 1500, from the viewpoint of reducing the VOC content in the resulting coating composition and the hardness, adhesion, and color unevenness of the coating film to be formed.

The glass transition temperature (Tg) of the hydroxyl group-containing acrylic resin is preferably within a range of -60 to 80 °C, more preferably within a range of -50 to 70 °C, and even more preferably within a range of -40 to 60 °C, from the viewpoints of reducing the VOC content in the resulting coating composition and of improving the hardness, adhesion, and color unevenness of the coating film to be formed.

Incidentally, in this description, the glass transition temperature (Tg) of the hydroxyl group-containing acrylic resin is a value calculated by the following formula.

$$1 / Tg\,(K) = W1 / T1 + W2 / T2 + ...Wn / Tn$$

$$Tg\,(^{\circ}C) = Tg(K) - 273$$

where W1, W2,...Wn are the mass fractions of each monomer, and T1, T2...Tn are the glass transition temperatures Tg (K) of the homopolymers of each monomer.

Incidentally, the glass transition temperatures of the homopolymers of each monomer are values according to POLYMER HANDBOOK Fourth Edition, edited by J. Brandrup, E. h. Immergut, and E. A. Grulke (1999), and the glass transition temperatures of monomers not listed in the literature are the static glass transition temperatures when the homopolymers of the monomers are synthesized so that the weight-average molecular weight thereof is about 50,000.

In a case where the hydroxyl group-containing compound (a11) contains the hydroxyl group-containing acrylic resin, the content of the hydroxyl group-containing acrylic resin is preferably within a range of 5 to 100 % by mass, more preferably within a range of 10 to 75 % by mass, and even more preferably within a range of 15 to 50 % by mass, based on the total solid content of the hydroxyl group-containing compound (a11), from the viewpoints of reducing the VOC content in the resulting coating composition, and of improving the hardness, adhesion, and color unevenness of the coating film to be formed.

In addition, the hydroxyl group-containing compound (a11) may contain hydroxyl group-containing monomers such as, for example, ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2, 5-hexanediol, neopentyl glycol, 1,4-cyclohexanedimethanol, tricyclodecane dimethanol, hydroxypivalic acid neopentyl glycol ester, hydrogenated bisphenol A, hydrogenated bisphenol F, glycerin, trimethylolethane, trimethylolpropane, diglycerin, triglycerin, 1,2,6-hexanetriol, pentaerythritol, dipentaerythritol, tris(2-hydroxyethyl)isocyanuric acid, sorbitol, mannite, hydroxyacetone, 4-(2-hydroxyethyl)morpholine, benzyl alcohol, 2-phenylethanol, 2-phenoxyethanol, naphthalene-1-ol, (1,3-benzoxol-5-yl)methanol, nonylphenol, dinonylphenol, nonylphenol ethoxylate, monostyrenated phenol, distyrenated phenol, tristyrenated phenol, etc. These may be used alone or in combination of two or more kinds.

In a case where the hydroxyl group-containing compound (a11) contains the hydroxyl group-containing monomer, the content of the hydroxyl group-containing monomer is preferably within a range of 5 to 100 % by mass, more preferably within a range of 5 to 50 % by mass, and even more preferably within a range of 5 to 30 % by mass, based on the total solid content of the hydroxyl group-containing compound (a11), from the viewpoints of reducing the VOC content in the resulting coating composition, and of improving the hardness, adhesion, and color unevenness of the coating film to be formed.

In a case where the isocyanate reactive group-containing compound (a1) contains the above hydroxyl group-containing compound (a11), the content of the hydroxyl group-containing compound (a11) is preferably within a range of 50 to 100 % by mass, more preferably within a range of 60 to 100 % by mass, and even more preferably within a range of 70 to 100 % by mass, based on the total solid content of the isocyanate reactive group-containing compound (a1), from the viewpoints of reducing the VOC content in the resulting coating composition, and of improving the hardness, adhesion, and color unevenness of the coating film to be formed.

[The amino group-containing compound (a12)]

The amino group-containing compound (a12) is a compound having at least one primary amino group and/or secondary amino group in the molecule.

Examples of the amino group-containing compound (a12) include aliphatic polyamines such as ethylenediamine, pentamethylenediamine, hexamethylenediamine, trimethylhexamethylenediamine, diethylenetriamine, dipropylenetriamine, triethylenetetramine, N,N'-bis-(3-aminopropyl)ethylenediamine, and tetraethylenepentamine; alicyclic polyamines such as 1,2-cyclohexanediamine, 1,3-cyclohexanediamine, 1,4-cyclohexanediamine, 4-methyl-1,3-cyclohexanediamine, 2-methyl-1,3-cyclohexanediamine, isophoronediamine, 4,4'-methylenebis(cyclohexylamine), 3,3'-dimethyl-4,4'-methylenebis(cyclohexylamine), N,N'-(isophoronediamino)bispropionitrile, N,N'-di-sec-butyl-4,4'-methylenebis(cyclohexylamine), 1,2-bis(aminomethyl)cyclohexane, 1,3-bis(aminomethyl)cyclohexane, 1,4-bis(aminomethyl)cyclohexane, and norbornanediamine; heterocyclic polyamines such as piperazine and N-(2-aminoethyl)piperazine; aromatic polyamines such as 2,4-toluenediamine, 2,6-toluenediamine, 4,4'-diaminodiphenylmethane, diethyltoluenediamine, dimethylthiotoluenediamine, 4,4'-methylenebis[N-(1-methylpropyl)aniline], 4,4'-diaminodiphenylsulfone, 3,3'-diaminodiphenylsulfone, 4, 4'-diaminodiphenyl ether, 1,3-bis(3-aminophenoxy)benzene, 4,4'-(1,3-phenylenediisopropylidene)bisaniline, 4,4'-(1,4-phenylenediisopropylidene)bisaniline, aminobenzylamine, m-xylylenediamine, p-xylylenediamine, and N,N'-di-sec-butyl-p-phenylenediamine; polyether polyamine compounds such as polyoxypropylenediamine, polyoxyethylenediamine, poly(oxyethylene/ oxypropylene)diamine, trimethylolpropane poly(oxypropylene)triamine, and glyceryl poly(oxypropylene)triamine; polyaspartic acid ester compounds such as tetraethyl N,N'-(2-methylpentane-1,5-diyl)bisaspartate, tetraethyl N,N'-[methylenebis(cyclohexane-4,1-diyl)]bisaspartate, tetraethyl N,N'-[methylenebis(2-methylcyclohexane-4,1-diyl)]bisaspartate, tetraethyl $\alpha$-{2-[(1,4-diethoxy-1,4-dioxobutan-2-yl)amino]propyl}-$\omega$-{2-[(1,4-diethoxy-1,4-dioxobutan-2-yl)amino]propoxy } poly[oxy(methylethylene)]; and aminosilane compounds such as N-$\beta$(aminoethyl)-$\gamma$-aminopropyltrimethoxysilane, N-$\beta$(aminoethyl)-$\gamma$-aminopropylmethyldimethoxysilane, and $\gamma$-anilinopropyltrimethoxysilane. Each of these may be used alone or in combination of two or more kinds.

Commercially available products can be used as the amino group-containing compound (a12). Trade names of commercially available products include, for example, "Baxxodur EC110", "DETA", "N4 Amine", "Baxxodur EC210", "Baxxodur EC201", "Baxxodur EC330", "Baxxodur EC331", "Baxxodur PC136", "Baxxodur EC130", "Baxxodur EC280", "Baxxodur EC301", "Baxxodur EC302", "Baxxodur EC303", "Baxxodur EC310", and "Baxxodur EC311" (all of the above are trade names, manufactured by BASF), "Clearlink 1000", "Unilink 4200", "Unilink 4100" (all of the above are trade names, manufactured by DORF KETAL), "JEFFAMINE M-600", "JEFFAMINE M-1000", "JEFFAMINE M-2005", "JEFFAMINE M-2070", "JEFFAMINE M-3085", "JEFFAMINE D-230", "JEFFAMINE D-400", "JEFFAMINE D-2000", "JEFFAMINE D-4000", "JEFFAMINE ED-600", "JEFFAMINE ED-900", "JEFFAMINE ED-2003", "JEFFAMINE EDR-1 48", "JEFFAMINE RT-1000", "JEFFAMINE T-403", "JEFFAMINE T-3000", "JEFFAMINE T-5000" (all of the above are trade names, manufactured by HUNTSMAN), "MXDA", "1,3-BAC" (all of the above are trade names, manufactured by Mitsubishi Gas Chemical Company, Inc.), "WANAMINE MDA-100H", "ETHACURE 100 Plus", "ETHACURE 300", "ETHACURE 420", "Bisaniline-M", "Bisaniline-P" (all of the above are trade names, manufactured by Mitsui Fine Chemicals, Inc.), "VESTAMIN IPD", "VESTAMIN TMD", "VESTAMIN PACM", "ANCAMINE 2049", "AMICURE IC-321", "AMICURE IC-322" (all of the above are trade names, manufactured by EVONIK Industries), "D.E.H.20", "D.E.H.24", "D.E.H.26", "D.E.H.29", "D.E.H.39", "D.E.H.444", "D.E.H.445", "D.E.H.4042", "D.E.H.4044", "D.E.H.487", "D.E.H.488", "D.E.H.530", "D.E.H." (all of the above are trade names, manufactured by The Dow Chemical Company), "Desmophen NH1220", "Desmophen NH1420", "Desmophen NH1422", "Desmophen NH1423", "Desmophen NH1520", "Desmophen NH1521", "Desmophen NH1523", "Desmophen NH1723LF", "Desmophen NH2885", "Desmophen NH2886" (all of the above are trade names, manufactured by Covestro AG), "FEISPARTIC F220", "FEISPARTIC F420", "FEISPARTIC F520", "FEISPARTIC F2850", "FEISPARTIC F2872", "FEISPARTIC F221", "FEISPARTIC F321", "FEISPARTIC F525", "FEISPARTIC F421", "FEISPARTIC F524", "FEISPARTIC F330", "FEISPARTIC D2925", "FEISPARTIC D2903" (all of the above are trade names, manufactured by Feiyang Protech), "TSE-EZASP 7980", "TSE-EZASP 7981", "TSE-EZASP 9033", "TSE-EZASP 8443" (all of the above are trade names, manufactured by TSE Industries), "Altor 200", "Altor 201", "Altor 202", "Altor 205LV" (all of the above are trade names, manufactured by Cargill), etc.

From the viewpoints of reducing the VOC content in the resulting coating composition and of improving the hardness, adhesion, and color unevenness of the coating film to be formed, the amino group-containing compound (a12) preferably contains at least one compound selected from an aliphatic polyamine, an alicyclic polyamine, a polyether polyamine compound, and a polyaspartic acid ester compound, more preferably contains at least one compound selected from an alicyclic polyamine and a polyaspartic acid ester, and even more preferably contains a polyaspartic acid ester compound.

Commercially available products can be used as the polyaspartic acid ester compound. Examples of the commercially available product trade names include "Desmophen NH1220", "Desmophen NH1420", "Desmophen NH1422", "Desmophen NH1423", "Desmophen NH1520", "Desmophen NH1521", "Desmophen NH1523", "Desmophen NH1723LF", "Desmophen NH2885", and "Desmophen NH2886" (all of the above are trade names, manufactured by Covestro AG), "FEISPARTIC F220", "FEISPARTIC F420", "FEISPARTIC F520", "FEISPARTIC F2850", "FEISPARTIC F2872", "FEISPARTIC F221", "FEISPARTIC F321", "FEISPARTIC F525", "FEISPARTIC F421", "FEISPARTIC F524", "FEISPARTIC F330", "FEISPARTIC D2925", "FEISPARTIC D2903" (all of the above are trade names, manufactured by Feiyang Protech), "TSE-EZASP 7980", "TSE-EZASP 7981", "TSE-EZASP 9033", "TSE-EZASP 8443" (all of the above are trade names, manufactured by TSE Industries), "Altor 200", "Altor 201", "Altor 202", "Altor 205LV" (all of the above are trade names, manufactured by Cargill), etc.

In a case where the isocyanate reactive group-containing compound (a1) includes the amino group-containing compound (a12), the content of the amino group-containing compound (a12) is preferably within a range of 10 to 100 % by mass, more preferably within a range of 40 to 95 % by mass, and even more preferably within a range of 50 to 90 % by mass, based on the total solid content of the isocyanate reactive group-containing compound (a1), from the viewpoints of reducing the VOC content in the resulting coating composition and improving the hardness, adhesion, and color unevenness of the coating film to be formed.

[The thiol group-containing compound (a13)]

The thiol group-containing compound (a13) is a compound having at least one thiol group in one molecule.

Examples of the thiol group-containing compound (a13) include pentaerythritol tetrakis(3-mercaptopropionate), trimethylolpropane tris(3-mercaptopropionate), tris-[(3-mercaptopropionyloxy)-ethyl]-isocyanurate, tetraethylene glycol bis(3-mercaptopropionate), tetramethylene glycol bis(3-mercaptopropionate), dipentaerythritol hexakis(3-mercaptopropionate), trimethylolpropane dipropanethiol, pentaerythritol tripropanethiol, pentaerythritol tetrapropanethiol, 1,4-bis(mercaptomethyl)benzene, pentaerythritol tetrakis(3-mercaptobutyrate), trimethylolpropane tris(3-mercaptobutyrate), tetramethylene glycol bis(3-mercaptobutyrate), tris-[(3-mercaptobutyroyloxy)-ethyl]-isocyanurate, trimethylolpropane tris(thioglycolate), and pentaerythritol tetrakis(thioglycolate). These compounds may be used alone or in combination of two or more kinds.

Commercially available thiol group-containing compounds (a13) can be used. Examples of the commercially available product trade names include "TMMP-LV", "TEMPIC", "PEMP-LV", "DPMP", "EGMP-4", "BDMP", "Multiol Y-2", "Multiol Y-3", "Multiol Y-4", and "PXDT" (all of the above are trade names, manufactured by SC ORGANIC CHEMICAL CO., LTD.), "BDTG", "HDTG", "TMTG", "PETG", "EGTP", "BDTP", "TMTP", and "PETP" (all of the above are trade names, manufactured by YODO KAGAKU CO., LTD.), "ADEKA Hardener EH-317" (trade name, manufactured by ADEKA Corporation), "Karenz MT PEI", "Karenz MT BDI", "Karenz MT BD1", "Karenz MT TPMB", and "Karenz MT NRI" (all of the above are trade names, manufactured by Showa Denko K.K.), "jER Cure QX11" and "jER Cure QX40" (all of the above are trade names, manufactured by Mitsubishi Chemical Corporation).

In a case where the isocyanate reactive group-containing compound (a1) includes the thiol group-containing compound (a13), the content of the thiol group-containing compound (a13) is preferably within a range of 10 to 100 % by mass, more preferably within a range of 30 to 95 % by mass, and even more preferably within a range of 50 to 90 % by mass, based on the total solid content of the isocyanate reactive group-containing compound (a1), from the viewpoints of reducing the VOC content in the resulting coating composition and improving the hardness, adhesion, and color unevenness of the coating film to be formed.

The content of the isocyanate reactive group-containing compound (a1) in the main agent (A) is preferably within a range of 30 to 99.5 % by mass, more preferably within a range of 50 to 99 % by mass, and even more preferably within a range of 70 to 98 % by mass, based on the total amount of the main agent (A), from the viewpoints of reducing the VOC content in the resulting coating composition and improving the hardness, adhesion, and color unevenness of the coating film to be formed.

[Other Components]

In addition to the above, the main agent (A) can further contain an ultraviolet absorber and/or a light stabilizer. Still further, if necessary, the composition may contain other additives commonly used in the coating industry, such as internal release agents, solvents (organic solvents, water), pigments, catalysts, dehydrating agents, antioxidants, surface conditioners, antifoaming agents, emulsifiers, surfactants, antifouling agents, wetting agents, thickeners, dyes, scratch resistance improvers, and gloss adjusters.

<Ultraviolet absorber>

Conventionally known ultraviolet absorbers can be used, such as benzotriazole-based absorbers, triazine-based absorbers, salicylic acid derivative-based absorbers, and benzophenone-based absorbers. The ultraviolet absorbers may also contain a polymerizable unsaturated group.

Specific examples of the above-mentioned benzotriazole-based absorbents include 2-(2'-hydroxy-5'-methylphenyl)benzotriazole, 2-(2'-hydroxy-5'-t-butylphenyl)benzotriazole, 2-(2'-hydroxy-3',5'-di-t-butylphenyl)benzotriazole, 2-(2'-hydroxy-3'-t-butyl-5'-methylphenyl)-5-chlorobenzotriazole, 2-(2'-hydroxy-3',5'-di-t-butylphenyl)-5-chlorobenzotriazole, 2-(2'-hydroxy-3',5'-di-t-amylphenyl)benzotriazole, 2-(2'-hydroxy-4'-octoxyphenyl)benzotriazole, 2-{2'-hydroxy-3'-(3",4",5",6"-tetrahydrophthalimidomethyl)-5'-methylphenyl}benzotriazole, and 2-[2-hydroxy-5-[2-(methacryloyloxy)ethyl]phenyl]-2H-benzotriazole, etc.

Specific examples of the triazine-based absorbent include 2,4-bis(2,4-dimethylphenyl)-6-(2-hydroxy-4-isooctyloxyphenyl)-1,3,5-triazine, 2-[4((2-hydroxy-3-dodecyloxypropyl)-oxy)-2-hydroxyphenyl]-4,6-bis(2,4-dimethylphenyl)-1,3,5-triazine, 2-[4-((2-hydroxy-3-tridecyloxypropyl)-oxy)-2-hydroxyphenyl]-4,6-bis(2,4-dimethylphenyl)-1,3,5-triazine, and 2-(2,4-dihydroxyphenyl)-4,6-bis(2,4-dimethylphenyl)-1,3,5-triazine.

Specific examples of the salicylic acid derivative-based absorbents include phenyl salicylate, p-octylphenyl salicylate, and 4-tert-butylphenyl salicylate.

Specific examples of the benzophenone-based absorbents include 4-dihydroxybenzophenone, 2-hydroxy-4-methoxybenzophenone, 2,2'-dihydroxy-4-methoxybenzophenone, 2-hydroxy-4-methoxy-2'-carboxybenzophenone, 2-hydroxy-4-methoxy-5-sulfobenzophenone trihydrate, 2,2'-dihydroxy-4,4'-dimethoxybenzophenone, 2-hydroxy-4-octoxybenzophenone, 2-hydroxy-4-octadecyloxybenzophenone, sodium 2,2'-dihydroxy-4,4'-dimethoxy-5-sulfobenzophenone, 2,2',4,4'-tetrahydroxybenzophenone, 4-dodecyloxy-2-hydroxybenzophenone, 5-chloro-2-hydroxybenzophenone, resorcinol monobenzoate, 2,4-dibenzoylresorcinol, 4,6-dibenzoylresorcinol, hydroxydodecylbenzophenone, 2,2'-dihydroxy-4(3-methacryloxy-2-hydroxypropoxy)benzophenone.

Commercially available ultraviolet absorbers include, for example, "TINUVIN 1130", "TINUVIN 900", "TINUVIN 928", "TINUVIN 384-2", "TINUVIN 479", "TINUVIN 477", "TINUVIN 405", "TINUVIN 400" (trade names, manufactured by BASF, TINUVIN is a registered trademark), and "RUVA 93" (trade name, manufactured by Otsuka Chemical Co., Ltd.).

In a case where the main agent (A) contains the above-mentioned ultraviolet absorber, the content of the ultraviolet absorber is preferably within a range of 0.5 to 10 % by mass, more preferably within a range of 0.8 to 5.0 % by mass, and even more preferably within a range of 1.0 to 4.0 % by mass, based on the total amount of the main agent (A), from the viewpoints of the weather resistance and adhesion of the coating film to be formed.

<Light stabilizer>

The above-mentioned light stabilizer is used as a radical chain inhibitor that captures active radical species generated during the degradation process of the coating film. Examples thereof include hindered amine compound light stabilizers.

Examples of the hindered amine compounds include monomer types such as bis(1,2,2,6,6-pentamethyl-4-piperidyl)sebacate, bis(2,2,6,6-tetramethyl-4-piperidinyl)sebacate, bis(N-methyl-2,2,6,6-tetramethyl-4-piperidinyl)sebacate, 4-benzoyloxy-2,2',6,6'-tetramethylpiperidine, and bis(1,2,2,6,6-pentamethyl-4-piperidyl){[3,5-bis(1,1-dimethylethyl)-4-hydroxyphenyl]methyl}butylmalonate; oligomeric types such as poly{[6-(1,1,3,3-tetramethylbutyl)imino-1,3,5-triazine-2,4-diyl][(2,2,6,6-tetramethyl-4-piperidyl)imino]hexamethylene[(2,2,6,6-tetramethyl-4-piperidyl)iminol]}; and polyester bond type such as polyesterification product of 4-hydroxy-2,2,6,6-tetramethyl-1-piperidineethanol and succinic acid, however, the light stabilizer is not limited to the aforementioned, and known polymerizable light stabilizers can also be used.

Commercially available light stabilizers include, for example, "TINUVIN 123", "TINUVIN 152", "TINUVIN 249" and "TINUVIN 292" (trade names, manufactured by BASF, TINUVIN is a registered trademark), "HOSTAVIN 3058" (trade name, manufactured by Clariant, HOSTAVIN is a registered trademark), and "ADK STAB LA-82" (trade name, manufactured by ADEKA Corporation, ADK STAB is a registered trademark).

In a case where the main agent (A) contains the above-mentioned light stabilizer, the content of the light stabilizer is preferably within a range of 0.5 to 10 % by mass, more preferably within a range of 0.8 to 9.0 % by mass, and even more preferably within a range of 1.0 to 8.0 % by mass, based on the total amount of the main agent (A), from the viewpoints of the weather resistance and adhesion of the coating film to be formed.

<Internal release agent>

In a case where the coating composition of the present invention is used as an in-mold coating composition, it is preferable that the main agent (A) contains an internal release agent from the viewpoint of the releasability of the coating film to be formed from the mold.

The internal release agents include, for example, saturated fatty acids such as stearic acid and palmitic acid; saturated fatty acid salts such as zinc stearate, aluminum stearate, magnesium stearate, calcium stearate, sodium stearate, potassium stearate, barium stearate, zinc palmitate, aluminum palmitate, magnesium palmitate, calcium palmitate, and sodium palmitate; saturated fatty acid amides such as lauramide, myristamide, palmitamide, stearamide, N,N-dimethyllauramide, N,N-dimethylmyristamide, N,N-dimethylpalmitamide, N,N-dimethylstearamide, N,N-diethyllauramide, N,N-diethylmyristamide, N,N-diethylpalmitamide, and N,N-diethylstearamide; unsaturated fatty acids such as palmitoleic acid and oleic acid; unsaturated fatty acid salts such as zinc palmitoleate, aluminum palmitoleate, magnesium palmitoleate, calcium palmitoleate, sodium palmitoleate, potassium palmitoleate, barium palmitoleate, zinc oleate, aluminum oleate, magnesium oleate, calcium oleate, sodium oleate, potassium oleate, and barium oleate; unsaturated fatty acid amides such as palmitoleic acid amide, oleic acid amide, erucic acid amide, behenic acid amide, N-oleyl palmitate amide, N-stearyl erucic acid amide, N,N-dimethyloleic acid amide, and N,N-diethyloleic acid amide; nonionic surfactants such as polyoxyethylene alkyl ether, and sorbitan alkyl ester; fluorine-based compounds such as polytetrafluoroethylene, fluoropolyether, perfluoroalkyl ester, and perfluoroalkyl ester salt; phosphate ester compounds such as phosphate monoesters and/or phosphate diesters having alkyl chains or oxyethylene chains; fatty acid esters such as stearic acid monoglyceride, stearic acid diglyceride, stearic acid triglyceride, stearic acid monosorbitate, stearic acid stearyl, palmitic acid monoglyceride, palmitic acid diglyceride, palmitic acid triglyceride, behenic acid monoglyceride, behenic acid diglyceride, behenic acid triglyceride, behenic acid behenyl, pentaerythritol monostearate, pentaerythritol tetrastearate, pentaerythritol tetrapelargonate, propylene glycol monostearate, stearyl stearate, palmityl palmitate, methyl stearate, butyl stearate, methyl laurate, methyl palmitate, isopropyl palmitate, biphenyl biphenate, sorbitan monostearate, and 2-ethylhexyl stearate; soybean oil lecithin, silicone oil, and fatty acid alcohol dibasic acid esters, which can be used alone or in combination of two or more kinds.

In a case where the main agent (A) contains the internal release agent, the content of the internal release agent is preferably within a range of 0.4 to 5.0 % by mass, more preferably within a range of 0.5 to 4.0 % by mass, and even more preferably within a range of 0.5 to 3.0 % by mass, based on the total amount of the main agent (A), from the viewpoints of adhesion of the coating film to be formed and releasability between the coating film to be formed and the mold.

<Solvents>

Examples of the solvents that can be used include organic solvents and water. Examples of such organic solvents include ketone-based solvents such as acetone, methyl ethyl ketone, and methyl isobutyl ketone; ester-based solvents such as ethyl acetate, butyl acetate, methyl benzoate, ethyl ethoxypropionate, ethyl propionate, and methyl propionate; ether-based solvents such as tetrahydrofuran, dioxane, and dimethoxyethane; glycol ether-based solvents such as ethylene glycol monomethyl ether, ethylene glycol monoethyl ether, diethylene glycol monomethyl ether, propylene glycol monomethyl ether acetate, and 3-methoxybutyl acetate; aromatic solvents such as toluene, xylene, and "Swasol 1000" (trade name, high-boiling point petroleum solvent, manufactured by Cosmo Oil Co., Ltd.); and aliphatic hydrocarbon-based solvents such as hexane and heptane.

In a case where the main agent (A) contains the above-mentioned solvent, from the viewpoints of reducing the VOC content in the resulting coating composition and improving the hardness, adhesion, and color unevenness of the coating film to be formed, the content of the solvent is preferably within a range of 0.1 to 5 % by mass, more preferably within a range of 0.3 to 4 % by mass, and even more preferably within a range of 0.5 to 3 % by mass, based on the total amount of the main agent (A).

<Catalysts>

Conventionally known catalysts can be used as the catalyst.

Examples of the catalysts include organometallic compounds such as tin octoate, dibutyltin diacetate, dibutyltin di(2-ethylhexanoate), dibutyltin dilaurate, dioctyltin diacetate, dioctyltin di(2-ethylhexanoate), dioctyltin dineodecanoate, dioctyltin diversatate, dibutyltin oxide, dibutyltin sulfide, dioctyltin oxide, dibutyltin fatty acid salts, lead 2-ethylhexanoate, zinc octoate, zinc naphthenate, zinc fatty acids, bismuth octanoate, bismuth 2-ethylhexanoate, bismuth oleate, bismuth neodecanoate, bismuth versatate, bismuth naphthenate, cobalt naphthenate, calcium octoate, copper naphthenate, tetra(2-ethylhexyl)titanate, tetra(n-butyl)titanate, titanium diisopropoxybis(acetylacetonate), titanium tetraacetylacetonate, titanium diisopropoxybis(ethylacetoacetate), titanium butoxide dimer, zirconium tetra-n-propoxide, zirconium tetra-n-butoxide, zirconium tetraacetylacetonate, and zirconium tributoxymonoacetylacetonate; tertiary amine compounds such as triethylamine, N,N'-dimethylcyclohexylamine, N,N,N',N'-tetramethylethylenediamine, N,N,N',N'-tetramethylhexamethylenediamine, N,N,N',N'',N''-pentamethyldiethylenetriamine, N,N,N',N'',N''-pentamethyldipropylenetriamine, 1,4-diazabicyclo[2.2.2.]octane (DABCO), 1,8-diazabicyclo[5.4.0.]-7-undecene (DBU), 1,5-diazabicyclo[4.3.0.]-5-nonene (DBN), N-methyl-N'-(2-dimethylaminoethyl)piperazine, N-ethylmorpholine, 1,2-dimethylimidazole, dimethylethanolamine, dimethylaminoethoxyethanol, N-methyl-N'-(2-hydroxyethyl)piperazine, 2-hydroxyethyl-1,4-diazabicyclo[2.2.2.]octane, 1,1'-{[3-(dimethylamino)propyl]imino}bis(2-propanol), bis(2-dimethylaminoethyl)ether, bis(2-morpholinoethyl)ether, and neutralized salts of these tertiary amine compounds; and quaternary ammonium salts such as carboxylates of tetraalkylammonium, tetraarylammonium, and alkylarylammonium, and halides of tetraalkylammonium, tetraarylammonium, and alkylarylammonium. The aforementioned may be used alone or in combination of two or more kinds.

In a case where the main agent (A) contains the above-mentioned catalyst, from the viewpoints of improving the hardness and adhesion of the coating film to be formed, the amount of the catalyst is preferably within a range of 0.005 to 5.0 % by mass, and more preferably within a range of 0.01 to 3.0 % by mass, based on the total amount of the main agent (A).

In addition, in a case where the coating composition of the present invention contains the above-mentioned catalyst, it may also contain organic acids such as acetic acid, propionic acid, butyric acid, isopentanoic acid, hexanoic acid, 2-ethylbutyric acid, naphthenic acid, octylic acid, nonanoic acid, decanoic acid, 2-ethylhexanoic acid, isooctanoic acid, isononanoic acid, lauric acid, palmitic acid, stearic acid, oleic acid, linoleic acid, neodecanoic acid, versatic acid, isobutyric anhydride, itaconic anhydride, acetic anhydride, citraconic anhydride, propionic anhydride, maleic anhydride, butyric anhydride, citric anhydride, trimellitic anhydride, pyromellitic anhydride, and phthalic anhydride; inorganic acids such as hydrochloric acid and phosphoric acid; and metal coordination compounds such as acetylacetone and imidazole-based compounds.

<Dehydrating agents>

Conventionally known inorganic and organic dehydrating agents can be used as the dehydrating agent.

Examples of the inorganic dehydrating agent include calcium compounds such as calcium hydride, calcium oxide (quicklime), calcium chloride, and calcium sulfate (gypsum); barium compounds such as barium oxide; magnesium compounds such as magnesium sulfate; sodium compounds such as sodium sulfate and sodium carbonate; copper compounds such as copper sulfate; inorganic silicon compounds such as silica gel; and aluminum compounds such as aluminum oxide (hydraulic alumina), lithium aluminum hydride, amorphous silica alumina, and crystalline aluminosilicates (molecular sieves). The aforementioned can be used alone or in combination of two or more kinds.

Examples of the organic dehydrating agent include alkyl orthoformate; alkyl orthoacetate; alkyl orthoborate; vinylsilane; alkoxysilane compounds; monoisocyanate compounds; aliphatic acid anhydrides such as acetic anhydride; and aromatic acid anhydrides such as benzoic anhydride. The aforementioned can be used alone or in combination of two or more kinds.

In a case where the main agent (A) contains the dehydrating agent, from the viewpoints of reducing the VOC content in the resulting coating composition and improving the adhesion of the coating film to be formed, the amount of the dehydrating agent is preferably within a range of 0.1 to 5.0 % by mass, and more preferably within a range of 0.3 to 3.0 % by mass, based on the total amount of the main agent (A).

The viscosity ($V_A$) of the main agent (A) at a shear rate of 100 sec$^{-1}$ and a temperature of 65 °C is within a range of 20 to 1800 mPa·s.

The viscosity ($V_A$) of the main agent (A) at a shear rate of 100 sec$^{-1}$ and a temperature of 65 °C is preferably within a range of 50 to 1500 mPa·s, more preferably within a range of 100 to 1000 mPa·s, and even more preferably within a range of 150 to 800 mPa·s, from the viewpoints of reducing the VOC content in the resulting coating composition and improving the hardness, adhesion, and color unevenness of the coating film to be formed.

The solid content concentration of the main agent (A) is preferably within a range of 95 to 100% by mass, more preferably within a range of 96 to 99.5% by mass, and even more preferably within a range of 97 to 99% by mass, from the viewpoints of reducing the VOC content in the resulting coating composition and of improving the hardness, adhesion, and color unevenness of the coating film to be formed.

The content of the main agent (A) in the kit of the present invention and in the three-component coating composition of the present disclosure is preferably within a range of 10 to 70 % by mass, more preferably within a range of 15 to 60 % by mass, and even preferably within a range of 25 to 50 % by mass, based on the total amount of the three-component coating composition, from the viewpoints of reducing the VOC content in the resulting coating composition and of improving the hardness, adhesion, and color unevenness of the coating film to be formed.

[The curing agent (B)]

The curing agent (B) includes the polyisocyanate compound (b1).

[The polyisocyanate compound (b1)]

The polyisocyanate compound (b1) is a compound containing at least two isocyanate groups in one molecule, and includes, for example, aliphatic polyisocyanates, alicyclic polyisocyanates, araliphatic polyisocyanates, aromatic polyisocyanates, and derivatives of these polyisocyanates.

The polyisocyanate compound (b1) preferably contains the aliphatic polyisocyanate from the viewpoints of reducing the VOC content in the resulting coating composition and improving the hardness, adhesion, and color unevenness of the coating film to be formed.

Examples of the aliphatic polyisocyanates include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); and aliphatic triisocyanates such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the alicyclic polyisocyanates include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), methyl-2,4-cyclohexane diisocyanate, methyl-2,6-cyclohexane diisocyanate, 1,3- or 1,4-bis(isocyanatomethyl)cyclohexane (common name: hydrogenated xylylene diisocyanate) or mixtures thereof, and norbornane diisocyanate; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane.

Examples of the araliphatic polyisocyanates include araliphatic diisocyanates such as 1,3- or 1,4-xylylene diisocyanate or mixtures thereof, $\omega,\omega'$-diisocyanato-1,4-diethylbenzene, 1,3- or 1,4-bis(1-isocyanato-1-methylethyl) benzene (common name: tetramethylxylylene diisocyanate) or mixtures thereof; and araliphatic triisocyanates such as 1,3,5-triisocyanatomethylbenzene.

Examples of the aromatic polyisocyanate include aromatic diisocyanates such as m-phenylene diisocyanate, p-phenylene diisocyanate, 4,4'-diphenyl diisocyanate, 1,5-naphthalene diisocyanate, 2,4'- or 4,4'-diphenylmethane diisocyanate or mixtures thereof, 2,4- or 2,6-tolylene diisocyanate or mixtures thereof, 4,4'-toluidine diisocyanate, and 4,4'-diphenylether diisocyanate; aromatic triisocyanates such as triphenylmethane-4,4',4"-triisocyanate, 1,3,5-triisocyanatobenzene, and 2,4,6-triisocyanatotoluene; and aromatic tetraisocyanates such as 4,4'-diphenylmethane-2,2',5,5'-tetraisocyanate.

Examples of the polyisocyanate derivatives include dimers, trimers, biurets, allophanates, uretdiones, uretonimines, isocyanurates, iminooxadiazinediones, polymethylene polyphenyl polyisocyanates (crude MDI, polymeric MDI), crude TDI, etc., of the polyisocyanate compounds described above. Among the aforementioned, from the viewpoint of improving the hardness and adhesion of the coating film to be formed, it is preferable to include at least one selected from allophanates, uretdiones, and isocyanurates, more preferably at least one selected from uretdiones and isocyanurates, and even more preferably isocyanurates.

The above polyisocyanates and the derivatives thereof may be used alone or in combination of two or more kinds.

Among these polyisocyanates, aliphatic diisocyanates, aliphatic triisocyanates, alicyclic diisocyanates, araliphatic diisocyanates, and derivatives thereof are preferably used alone or in combination of two or more kinds.

Furthermore, the polyisocyanate compound (b1) may be a prepolymer obtained by reacting the above polyisocyanate or a derivative thereof with a compound reactive with the polyisocyanate under conditions of excess isocyanate groups. Examples of the compounds reactive with the polyisocyanate include compounds containing active hydrogen groups such as hydroxyl groups and amino groups. Specific examples that can be used include polyhydric alcohols, low molecular weight polyester resins, amines, and water.

The polyhydric alcohols that can be used include those exemplified for the hydroxyl group-containing polyester resins.

From the view point of improving the hardness and adhesion of the coating film to be formed, the polyisocyanate compound (b1) is preferably used in such a way that the ratio of isocyanate groups in the polyisocyanate compound (b1) to isocyanate reactive groups in the isocyanate reactive group-containing compound (a1) and the isocyanate reactive group-containing compound (c1) described below is within a range of 0.7 to 2.0, and more preferably within a range of 0.9 to 1.5.

Furthermore, from the viewpoints of reducing the VOC content in the resulting coating composition and improving the hardness, adhesion, and color unevenness of the coating film to be formed, the content of the polyisocyanate compound (b1) in the curing agent (B) is preferably within a range of 30 to 100 % by mass, more preferably within a range of 40 to 99.5 % by mass, and even more preferably within a range of 50 to 99 % by mass, based on the total amount of curing agent (B).

[Other Components]

In addition to the above, the curing agent (B) can further contain a curing agent other than the polyisocyanate compound (b1). Furthermore, the curing agent (B) may optionally contain other additives commonly used in the coating field, such as ultraviolet absorbers, light stabilizers, internal release agents, solvents (organic solvents, water), pigments, catalysts, dehydrating agents, antioxidants, surface conditioners, antifoaming agents, emulsifiers, surfactants, antifouling agents, wetting agents, thickeners, dyes, scratch resistance improvers, and gloss adjusters.

<The curing agents other than polyisocyanate compound (b1)>

The curing agents other than the polyisocyanate compound (b1) include, for example, carbodiimide group-containing compounds.

<The carbodiimide group-containing compounds>

The carbodiimide group-containing compound is a compound containing at least one carbodiimide group in one molecule. For example, a compound obtained by subjecting the isocyanate groups of an isocyanate group-containing compound to a carbon dioxide desorption reaction can be used.

It should be noted however, in the present invention, compounds having a carbodiimide group and two or more isocyanate groups are not included in the carbodiimide group-containing compounds, but are included in the above-mentioned polyisocyanate compound (b1).

Commercially available products can be used as the carbodiimide group-containing compounds. Commercially available trade names include "Carbodilite V-02B", "Elastostab H01", "Carbodilite V-03", "Carbodilite V-09", "Carbodilite V-09GB", "Carbodilite V-09M", and "Carbodilite V-04PF" (all of the above are trade names, manufactured by Nisshinbo Chemical Inc.), as well as "Stabaxol I", "Stabaxol I LF", "Stabaxol P", "Stabaxol P100", and "Stabaxol P200" (all of the above are trade names, manufactured by LANXESS).

The carbodiimide group-containing compound preferably contains a solvent-free carbodiimide group-containing compound from the viewpoints of reducing the VOC content in the resulting coating composition and improving the adhesion and color unevenness of the coating film to be formed.

Commercially available products can be used as the solvent-free carbodiimide group-containing compound. Examples of commercially available trademarks include "Carbodilite V-02B", "Elastostab H01", and "Carbodilite V-04PF" (all of the above are trade names, manufactured by Nisshinbo Chemical Inc.).

Furthermore, from the viewpoints of reducing the VOC content in the resulting coating composition and improving the hardness, adhesion, and color unevenness of the coating film to be formed, the number average molecular weight of the carbodiimide group-containing compound is preferably within a range of 500 to 5,000, more preferably within a range of 600 to 3,000, and even more preferably within a range of 700 to 1,500.

Furthermore, in a case where the curing agent (B) contains the carbodiimide group-containing compound, the content of the carbodiimide group-containing compound is preferably within a range of 0.5 to 5.0 % by mass, more preferably within a range of 0.8 to 4.0 % by mass, and even more preferably within a range of 1.0 to 3.0 % by mass, based on the total amount of curing agent (B), from the viewpoints of reducing the VOC content in the resulting coating composition and improving the hardness, adhesion, and color unevenness of the coating film to be formed.

<Solvents>

The solvents that can be used include, for example, the solvents exemplified above for the main agent (A).

In a case where the curing agent (B) contains the above-mentioned solvent, from the viewpoints of reducing the VOC content in the resulting coating composition and improving the hardness, adhesion, and color unevenness of the coating film to be formed, the content of the solvent is preferably within a range of 0.1 to 5 % by mass, more preferably within a range of 0.2 to 4 % by mass, and even more preferably within a range of 0.3 to 3 % by mass, based on the total amount of curing agent (B).

<The dehydrating agents>

The dehydrating agents that can be used include, for example, the dehydrating agents exemplified above for the main agent (A).

In a case where the curing agent (B) contains the dehydrating agent, the amount of the dehydrating agent is preferably within a range of 0.1 to 5 % by mass, and more preferably within a range of 0.3 to 3 % by mass, based on the total amount of curing agent (B), from the viewpoint of improving the hardness and adhesion of the coating film to be formed.

The viscosity ($V_B$) of the curing agent (B) at a shear rate of 100 sec$^{-1}$ and a temperature of 65 °C is within a range of 20 to 1800 mPa·s.

The viscosity ($V_B$) of the curing agent (B) at a shear rate of 100 sec$^{-1}$ and a temperature of 65 °C is preferably within a range of 50 to 1500 mPa·s, more preferably within a range of 100 to 1000 mPa·s, and even more preferably within a range of 150 to 600 mPa·s, from the viewpoints of reducing the VOC content in the resulting coating composition and improving the hardness, adhesion, and color unevenness of the coating film to be formed.

The solid content concentration of the curing agent (B) is preferably within a range of 95 to 100 % by mass, more preferably within a range of 96 to 100 % by mass, and even more preferably within a range of 97 to 100 % by mass, from the standpoints of reducing the VOC content in the resulting coating composition and improving the hardness, adhesion, and color unevenness of the coating film to be formed.

In the kit of the present invention and the three-component coating composition of the present disclosure, the content of the curing agent (B) is preferably within a range of 20 to 80 % by mass, more preferably within a range of 30 to 75 % by mass, and even more preferably within a range of 40 to 70 % by mass, based on the total amount of the three-component coating composition, from the viewpoints of reducing the VOC content in the resulting coating composition and improving the hardness, adhesion, and color unevenness of the coating film to be formed.

[The pigment paste (C)]

The pigment paste (C) contains an isocyanate reactive group-containing compound (c1) and a pigment (c2).

[The isocyanate reactive group-containing compound (c1)]

The isocyanate reactive group-containing compound (c1) is a compound having at least one isocyanate-reactive group in one molecule.

From the viewpoints of reducing the VOC content in the resulting coating composition and improving the hardness, adhesion, and color unevenness of the coating film to be formed, the isocyanate reactive group-containing compound (c1) preferably contains an isocyanate reactive group-containing compound having a number average molecular weight within a range of 250 to 2500, more preferably 300 to 1800, and even more preferably 300 to 1500.

The isocyanate-reactive group is not particularly limited as long as it is a group reactive with an isocyanate group. Examples of the isocyanate-reactive group include a hydroxyl group, an amino group, and a thiol group, and from the viewpoint of improving the hardness, adhesion, and color unevenness of the coating film to be formed, it is preferable for the compound to contain at least one group selected from a hydroxyl group and an amino group, and it is more preferable for the compound to contain a hydroxyl group.

Accordingly, examples of the isocyanate-reactive group-containing compound (c1) include a hydroxyl group-containing compound (c11), an amino group-containing compound (C12), and a thiol group-containing compound (c13), and from the viewpoint of improving the hardness, adhesion, and color unevenness of the coating film to be formed, it is preferable for the compound to contain at least one compound selected from a hydroxyl group-containing compound (c11) and an amino group-containing compound (c12), and it is more preferable for the compound to contain a hydroxyl group-containing compound (c11).

[The hydroxyl group-containing compound (c11)]

The above-mentioned hydroxyl group-containing compound (c11) is a compound containing at least one hydroxyl group in one molecule. Examples of the hydroxyl group-containing compound (c11) include hydroxyl group-containing oligomers and hydroxyl group-containing polymers, such as hydroxyl group-containing polyester resins, hydroxyl group-containing polycaprolactone resins, hydroxyl group-containing polyether resins, hydroxyl group-containing polycarbonate resins, hydroxyl group-containing acrylic resins, hydroxyl group-containing polyurethane resins, hydroxyl group-containing epoxy resins, and hydroxyl group-containing alkyd resins. Among the aforementioned, from the viewpoints of reducing the VOC content in the resulting coating composition and improving the hardness, adhesion, and color unevenness of the coating film to be formed, it is preferable to include at least one resin selected from hydroxyl group-containing polyester resins, hydroxyl group-containing polycaprolactone resins, and hydroxyl group-containing polyether resins, and it is even more preferable to include at least one resin selected from hydroxyl group-containing polyester resins and hydroxyl group-containing polycaprolactone resins. Each of these may be used alone or in combination of two or more kinds.

The hydroxyl group-containing polyester resins that can be used include, for example, the hydroxyl group-containing polyester resin exemplified above for the main agent (A).

From the point of improving the hardness and adhesion of the coating film to be formed, the hydroxyl value of the hydroxyl group-containing polyester resin is preferably within a range of 50 to 800 mgKOH/g, more preferably within a range of 100 to 700 mgKOH/g, and even more preferably within a range of 300 to 600 mgKOH/g.

Furthermore, from the viewpoints of reducing the VOC content in the resulting coating composition and improving the hardness, adhesion, and color unevenness of the coating film to be formed, the number average molecular weight of the hydroxyl group-containing polyester resin is preferably within a range of 250 to 2500, more preferably within a range of 300 to 1800, and even more preferably within a range of 350 to 1500.

Furthermore, from the viewpoints of reducing the VOC content in the resulting coating composition and improving the hardness, adhesion, and color unevenness of the coating film to be formed, the glass transition temperature (Tg) of the hydroxyl group-containing polyester resin is preferably within a range of -80 to 10 °C, more preferably within a range of -70 to 5 °C, and even more preferably within a range of -60 to 0 °C.

In a case where the hydroxyl group-containing compound (c11) includes the above-mentioned hydroxyl group-containing polyester resin, the content of the hydroxyl group-containing polyester resin is preferably within a range of 50 to 100 % by mass, more preferably within a range of 60 to 95 % by mass, and even more preferably within a range of 75 to 90 % by mass, based on the total solid content of the hydroxyl group-containing compound (c11), from the viewpoints of reducing the VOC content in the resulting coating composition and improving the hardness, adhesion, and color unevenness of the coating film to be formed.

The hydroxyl group-containing polycaprolactone resins that can be used include, for example, the hydroxyl group-containing polycaprolactone resin exemplified above for the main agent (A).

The hydroxyl value of the hydroxyl group-containing polycaprolactone resin is preferably within a range of 50 to 900 mgKOH/g, more preferably within a range of 100 to 750 mgKOH/g, and even more preferably within a range of 130 to 600 mgKOH/g, from the viewpoints of improving the hardness, adhesion, and color unevenness of the coating film to be formed.

Furthermore, the number average molecular weight of the hydroxyl group-containing polycaprolactone resin is preferably within a range of 250 to 2500, more preferably within a range of 280 to 1500, and even more preferably within a range of 300 to 1000, from the viewpoints of reducing the VOC content in the resulting coating composition and of improving the hardness, adhesion, and color unevenness of the coating film to be formed.

In a case where the hydroxyl group-containing compound (c11) contains the above-mentioned hydroxyl group-containing polycaprolactone resin, the content of the hydroxyl group-containing polycaprolactone resin is preferably within a range of 5 to 100 % by mass, more preferably within a range of 10 to 75 % by mass, and even more preferably within a range of 10 to 50 % by mass, based on the total solid content of the hydroxyl group-containing compound (c11), from the viewpoints of reducing the VOC content in the resulting coating composition and improving the hardness, adhesion, and color unevenness of the coating film to be formed.

The hydroxyl group-containing polyether resins that can be used include, for example, the hydroxyl group-containing polyether resin exemplified above for the main agent (A).

The hydroxyl value of the above hydroxyl group-containing polyether resin is preferably within a range of 50 to 600 mgKOH/g, more preferably within a range of 70 to 500 mgKOH/g, and even more preferably within a range of 90 to 400 mgKOH/g, from the viewpoints of improving the hardness, adhesion, and color unevenness of the coating film to be formed.

The number average molecular weight of the above hydroxyl group-containing polyether resin is preferably within a range of 250 to 2500, more preferably within a range of 300 to 1500, and even more preferably within a range of 350 to 1000, from the viewpoints of reducing the VOC content in the resulting coating composition and the hardness, adhesion, and color unevenness of the coating film to be formed.

In a case where the hydroxyl group-containing compound (c11) contains the above-mentioned hydroxyl group-containing polyether resin, the content of the hydroxyl group-containing polyether resin is preferably within a range of 20 to 100 % by mass, more preferably within a range of 40 to 100 % by mass, and even more preferably within a range of 50 to 100 % by mass, based on the total solid content of the hydroxyl group-containing compound (c11), from the viewpoints of reducing the VOC content in the resulting coating composition and improving the hardness, adhesion, and color unevenness of the coating film to be formed.

The hydroxyl group-containing polycarbonate resins that can be used include, for example, the hydroxyl group-containing polycarbonate resin exemplified above for the main agent (A).

The hydroxyl value of the hydroxyl group-containing polycarbonate resin is preferably within a range of 50 to 800 mgKOH/g, more preferably within a range of 70 to 700 mgKOH/g, and even more preferably within a range of 90 to 600 mgKOH/g, from the viewpoints of improving the hardness and adhesion of the coating film to be formed.

The number average molecular weight of the hydroxyl group-containing polycarbonate resin is preferably within a range of 250 to 2500, more preferably within a range of 300 to 1800, and even more preferably within a range of 400 to 1500, from the viewpoints of reducing the VOC content in the resulting coating composition and the adhesion and color unevenness of the coating film to be formed.

In a case where the hydroxyl group-containing compound (c11) contains the above-mentioned hydroxyl group-containing polycarbonate resin, the content of the hydroxyl group-containing polycarbonate resin is preferably within a range of 5 to 80 % by mass, more preferably within a range of 10 to 50 % by mass, and even more preferably within a range of 10 to 40 % by mass, based on the total solid content of the hydroxyl group-containing compound (c11), from the viewpoints of reducing the VOC content in the resulting coating composition and improving the hardness, adhesion, and color unevenness of the coating film to be formed.

The hydroxyl group-containing acrylic resins that can be used include, for example, the hydroxyl group-containing acrylic resin exemplified above for the main agent (A).

The hydroxyl value of the above hydroxyl group-containing acrylic resin is preferably within a range of 5 to 240 mgKOH/g, more preferably within a range of 20 to 220 mgKOH/g, and even more preferably within a range of 25 to 200 mgKOH/g, from the viewpoints of improving the hardness and adhesion of the coating film to be formed.

Furthermore, the number average molecular weight of the above hydroxyl group-containing acrylic resin is preferably within a range of 250 to 2500, more preferably within a range of 300 to 1800, and even more preferably within a range of 500 to 1500, from the viewpoints of reducing the VOC content in the resulting coating composition and the hardness, adhesion, and color unevenness of the coating film to be formed.

Furthermore, from the viewpoint of reducing the VOC content in the resulting coating composition and improving the hardness, adhesion, and color unevenness of the coating film to be formed, the glass transition temperature (Tg) of the hydroxyl group-containing acrylic resin is preferably within a range of -60 to 80 °C, more preferably within a range of -50 to 70 °C, and even more preferably within a range of -40 to 60 °C.

In a case where the hydroxyl group-containing compound (c11) contains the above-mentioned hydroxyl group-containing acrylic resin, the content of the hydroxyl group-containing acrylic resin is preferably within a range of 5 to 100% by mass, more preferably within a range of 10 to 75% by mass, and even more preferably within a range of 15 to 50% by mass, based on the total solid content of the hydroxyl group-containing compound (c11), from the viewpoints of reducing the VOC content in the resulting coating composition and improving the hardness, adhesion, and color unevenness of the coating film to be formed.

In addition, the hydroxyl group-containing monomers exemplified above for the main agent (A) can be used as the hydroxyl group-containing compound (c11).

In a case where the hydroxyl group-containing compound (c11) contains the above-mentioned hydroxyl group-containing monomer, the content of the hydroxyl group-containing monomer is preferably within a range of 5 to 100 % by mass, more preferably within a range of 5 to 50 % by mass, and even more preferably within a range of 5 to 30 % by mass, based on the total solid content of the hydroxyl group-containing compound (c11), from the viewpoints of reducing the VOC content in the resulting coating composition and improving the hardness, adhesion, and color unevenness of the coating film to be formed.

In a case where the isocyanate reactive group-containing compound (c1) contains the hydroxyl group-containing compound (c11), the content of the hydroxyl group-containing compound (c11) is preferably within a range of 50 to 100 % by mass, more preferably within a range of 60 to 100 % by mass, and even more preferably within a range of 70 to 100 % by mass, based on the total solid content of the isocyanate reactive group-containing compound (c1), from the viewpoints of reducing the VOC content in the resulting coating composition and improving the hardness, adhesion, and color unevenness of the coating film to be formed.

[The amino group-containing compound (c12)]

The amino group-containing compounds (c12) that can be used include, for example, the amino group-containing compound (c12) exemplified above for the main agent (A).

In a case where the isocyanate reactive group-containing compound (c1) contains the amino group-containing compound (c12), the content of the amino group-containing compound (c12) is preferably within a range of 10 to 100 % by mass, more preferably within a range of 40 to 95 % by mass, and even more preferably within a range of 50 to 90 % by mass, based on the total solid content of the isocyanate reactive group-containing compound (c1), from the viewpoints of reducing the VOC content in the resulting coating composition and improving the hardness, adhesion, and color unevenness of the coating film to be formed.

[The thiol group-containing compound (c13)]

The thiol group-containing compounds (c13) that can be used include, for example, the thiol group-containing compound (c13) exemplified above for the main agent (A).

In a case where the isocyanate reactive group-containing compound (c1) contains the thiol group-containing compound (c13), the content of the thiol group-containing compound (c13) is preferably within a range of 10 to 100 % by mass, more preferably within a range of 30 to 95 % by mass, and even more preferably within a range of 50 to 90 % by mass, based on the total solid content of the isocyanate reactive group-containing compound (c1), from the viewpoints of reducing the VOC content in the resulting coating composition and improving the hardness, adhesion, and color unevenness of the coating film to be formed.

The content of the isocyanate reactive group-containing compound (c1) in the pigment paste (C) is preferably within a range of 10 to 99 % by mass, more preferably within a range of 15 to 90 % by mass, and even more preferably within a range of 20 to 80 % by mass, based on the total amount of the pigment paste (C), from the viewpoints of reducing the VOC content in the resulting coating composition and improving the hardness, adhesion, and color unevenness of the coating film to be formed.

[The pigment (c2)]

Examples of the pigment (c2) include glitter pigments, color pigments, and extender pigments. These pigments can be used alone or in combination of two or more types.

Examples of the above-mentioned glitter pigments include aluminum (including vapor-deposited aluminum), copper, zinc, brass, nickel, glass flakes, aluminum oxide, mica, aluminum oxide coated with titanium oxide and/or iron oxide, and mica coated with titanium oxide and/or iron oxide.

Examples of the above-mentioned color pigments include titanium oxide, zinc oxide, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, diketopyrrolopyrrole-based pigments, and heat-shielding pigments.

Examples of the above-mentioned extender pigments include clay, kaolin, barium sulfate, barium carbonate, calcium carbonate, talc, silica, and alumina white.

In terms of reducing the VOC content in the resulting coating composition and improving the hardness and color unevenness of the coating film to be formed, the content of the pigment (c2) in the pigment paste (C) is preferably within a range of 1.0 to 70 % by mass, more preferably within a range of 1.0 to 65 % by mass, even more preferably within a range of 2.0 to 64 % by mass, and still even more preferably within a range of 3.0 to 62 % by mass, based on the total amount of the pigment paste (C).

[Other Components]

In addition to the above, the pigment paste (C) can further contain an ultraviolet absorber and/or a light stabilizer. Furthermore, if necessary, other additives commonly used in the coating industry, such as internal release agents, solvents (organic solvents, water), pigments, catalysts, dehydrating agents, antioxidants, surface conditioners, antifoaming agents, emulsifiers, surfactants, antifouling agents, wetting agents, thickeners, dyes, scratch resistance improvers, and gloss adjusters, may also be contained.

<The ultraviolet absorber>

The ultraviolet absorbers that can be used include, for example, the ultraviolet absorber exemplified above for the main agent (A).

In a case where the pigment paste (C) contains the ultraviolet absorber, the content of the ultraviolet absorber is preferably within a range of 0.5 to 10 % by mass, more preferably within a range of 0.8 to 5.0 % by mass, and even more preferably within a range of 1.0 to 4.0 % by mass, based on the total amount of the pigment paste (C) in the coating composition, from the viewpoint of the weather resistance and adhesion of the coating film to be formed.

<The light stabilizer>

The light stabilizers that can be used include, for example, the light stabilizer exemplified above for the main agent (A).

In a case where the pigment paste (C) contains the light stabilizer, the content of the light stabilizer is preferably within a range of 0.5 to 10 % by mass, more preferably within a range of 0.8 to 9.0 % by mass, and even more preferably within a range of 1.0 to 8.0 % by mass, based on the total amount of the pigment paste (C), from the viewpoint of weather resistance, adhesion, etc., of the coating film to be formed.

<The internal release agents>

In a case where the coating composition of the present invention is used as an in-mold coating composition, the pigment paste (C) may contain internal release agents from the viewpoints of the releasability of the coating film to be formed from the mold.

The internal release agents that can be used include, for example, the internal release agents exemplified above for the main agent (A).

In a case where the pigment paste (C) contains the internal release agents, the content of the internal release agents is preferably within a range of 0.4 to 8.0 % by mass, more preferably within a range of 0.5 to 7.0 % by mass, and even more preferably within a range of 0.5 to 6.0 % by mass, based on the total amount of the pigment paste (C), from the viewpoints of the adhesion of the coating film to be formed and the releasability of the coating film to be formed from the mold.

<The solvents>

The solvents that can be used include, for example, the solvents exemplified above for the main agent (A).

In a case where the pigment paste (C) contains the solvents listed above, the content of the solvents is preferably within a range of 2 to 15 % by mass, more preferably within a range of 2 to 13 % by mass, and even more preferably within a range of 2 to 10 % by mass, based on the total amount of the pigment paste (C), from the viewpoints of reducing the VOC content in the resulting coating composition and improving the hardness, adhesion, and color unevenness of the coating film formed.

<The catalysts>

The catalysts that can be used include, for example, the catalysts exemplified above for the main agent (A).

In a case where the pigment paste (C) contains the catalysts, the amount of catalysts contained is preferably within a range of 0.01 to 5.0 % by mass, and more preferably within a range of 0.1 to 3.0 % by mass, based on the total amount of the pigment paste (C), from the viewpoint of improving the hardness and adhesion of the coating film to be formed.

<The dehydrating agents>

The dehydrating agents that can be used include, for example, the dehydrating agents exemplified above for the main agent (A).

In a case where the pigment paste (C) contains the dehydrating agents, the amount of the dehydrating agents is preferably within a range of 0.1 to 5.0 % by mass, and more preferably within a range of 0.3 to 3.0 % by mass, based on the total amount of the pigment paste (C), from the viewpoint of improving the hardness and adhesion of the coating film to be formed.

The viscosity ($V_C$) of the pigment paste (C) at a shear rate of 100 sec$^{-1}$ and a temperature of 65 °C is within a range of 20 to 1,800 mPa·s.

The viscosity ($V_C$) of the pigment paste (C) at a shear rate of 100 sec$^{-1}$ and a temperature of 65 °C is preferably within a range of 50 to 1500 mPa·s, more preferably within a range of 100 to 1000 mPa·s, and even more preferably within a range of 150 to 800 mPa·s, from the viewpoints of reducing the VOC content in the resulting coating composition and improving the hardness, adhesion, and color unevenness of the coating film to be formed.

From the viewpoint of reducing the VOC content in the resulting coating composition and improving the adhesion and color unevenness in the coating film formed, the solid content concentration of the pigment paste (C) is preferably within a range of 84 to 99 % by mass, more preferably within a range of 85 to 98 % by mass, even more preferably within a range of 87 to 98 % by mass, and still even more preferably within a range of 90 to 98 % by mass.

In the kit of the present invention and the three-component coating composition of the present disclosure, the content of the pigment paste (C) is preferably within a range of 3 to 50 % by mass, more preferably within a range of 4 to 40 % by mass, and even more preferably within a range of 5 to 30 % by mass, based on the total amount of the three-component coating composition, from the viewpoints of reducing the VOC content in the resulting coating composition and improving the hardness, adhesion, and color unevenness of the coating film to be formed.

<The method of forming a coating film using a kit and a three-component coating composition>

The kit of the present invention and the three-component coating composition of the present disclosure are applied to a substrate to form a wet coating film (uncured coating film), and the desired coating film can then be formed by curing the wet coating film.

The substrate is preferably a resin material from the viewpoint of adhesion of the coating film to be formed.

Examples of such resin materials include acrylic resins such as polymethyl methacrylate, polyester resins such as polyethylene terephthalate, polyethylene naphthalate, poly-1,4-cyclohexanedimethylene terephthalate, polyethylene-1,2-diphenoxyethane-4,4'-dicarboxylate, and polybutylene terephthalate, epoxy resins such as commercially available products such as Epicoat (trade name, manufactured by Yuka Shell Epoxy Co., Ltd.), polycarbonate resins, polyimide resins, novolac resins, phenolic resins, acrylonitrile-butadiene-styrene (ABS) resins, acrylonitrile-ethylene-styrene (AES) resins, acrylonitrile-styrene-acrylate (ASA) resins, vinyl chloride resins, vinylidene chloride resins, polyurethane resins, cellulose ester resins (e.g., triacetyl cellulose, diacetyl cellulose, propionyl cellulose, butyryl cellulose, acetylpropionyl cellulose, nitrocellulose), polyamide resins, polystyrene resins (e.g., syndiotactic polystyrene), polyolefin resins (e.g., polypropylene, polyethylene, polymethylpentene), polysulfone resins, polyethersulfone resins, polyarylate resins, polyetherimide resins, polyether ketone resins, and various fiber-reinforced plastic materials (which hereinafter may be referred to as FRP materials or simply FRP), and polymer alloys of the aforementioned resins.

The substrate may also be one in which, for example, a primer coating, an intermediate coating, or a top coating is applied to the resin material, thereby forming a primer layer, an intermediate coating layer, or a top coating layer in advance.

The substrate may also be one that has been subjected to treatment (physical treatment) using at least one physical method selected from plasma treatment, corona discharge treatment, active energy ray treatment, flame treatment, blasting treatment, and polishing treatment.

Incidentally, the three-component coating composition formed from the kit of the present invention and the three-component coating composition of the present disclosure are preferably applied directly to the substrate.

Furthermore, the usages of the three-component coating composition formed from the kit of the present invention and the substrate onto which the three-component coating composition according to the present disclosure is applied are not particularly limited, and examples include the outer panel parts of automobile bodies such as passenger cars, trucks, motorcycles, and buses; automobile interior and exterior parts such as bumpers, center pillars, mirrors, door handles, instrument panels, door trim, and center consoles; furniture and building materials such as chairs, vanity mirrors, window frames, and gates; and the outer panel parts of household electrical appliances such as mobile phones and audio equipment.

The method of applying the three-component coating composition formed from the kit of the present invention and the three-component coating composition according to the present disclosure onto a substrate is not particularly limited. For example, the application can be by air spray, airless spray, rotary atomizer, dip coating, applicator, brush, roller, in-mold coating, etc. An electrostatic application may be performed during the application.

The coating thickness, in terms of cured film thickness, is preferably within a range of 5 to 2000 $\mu$m, more preferably within a range of 10 to 1500 $\mu$m, and even more preferably within a range of 15 to 1000 $\mu$m.

The three-component coating composition formed from the kit of the present invention and the three-component coating composition of the present disclosure can be cured by heating the three-component coating composition.

<The heating>

The heating can be performed using any suitable method known in this technical field. Specifically, for example, hot air, hot gas, infrared heater, IR radiator, oven, heated roller, hot press, microwave, etc., are usable. In the present invention, heating using hot air, infrared heater, hot press, etc., is preferable from the viewpoint of ease of operation.

From the viewpoints of productivity, workability, and the thermal stability of the substrate, the heating temperature is preferably within a range of 30 to 200 °C, more preferably within a range of 50 to 180 °C, and even more preferably within a range of 70 to 160 °C.

Furthermore, the heating time is preferably within a range of 20 seconds to 60 minutes, and more preferably within a range of 40 seconds to 10 minutes.

Furthermore, the three-component coating composition of the present invention is suitable for usage in a coating by the in-mold coating method. The in-mold coating method typically allows the usage of coating compositions with low VOC content, and further reduces air conditioning energy during coating, thereby offering the advantage of reducing the environmental impact.

<The in-mold coating method>

The in-mold coating method of the present invention includes the steps of injecting the coating composition of the present invention (hereinafter, which is referred to as the in-mold coating composition, in a case where the coating composition of the present invention is used in the in-mold coating method) between a molded substrate and the inner wall of a mold, curing the in-mold coating composition, and then removing the coated molded article from the mold.

As the in-mold coating method, any conventional method of molding and coating within a mold can be used without particular limitation. Specifically, for example, the methods described in Japanese patent application laid-open publication No. 2000-141407 and Japanese patent application laid-open publication No. 2008-525212 can be used.

Incidentally, the resin molding mold used to mold the resin material and the in-mold coating mold used to coat the in-mold with the in-mold coating composition may be the same or different.

In a case where the resin molding mold and the in-mold coating mold are the same, for example, a resin material heated and melted in an injection cylinder is injected between resin molding molds having the shape of the desired molded article, and then cooled and pressurized within the resin molding mold to form the resin material into a molded article, and the resin molding mold is then separated from the surface of the molded article made of the resin material. Next, the main agent (A), the curing agent (B), and the pigment paste (C) are mixed to prepare an in-mold coating composition, a gap sufficient to inject the in-mold coating composition is provided between the surface of the molded article made of the resin material and the in-mold coating mold, the in-mold coating composition is injected between the surface of the molded article made of the resin material and the inner wall of the in-mold coating mold, the in-mold coating mold is closed, and an uncured in-mold coating film is formed on the molded article made of the resin material. The uncured in-mold coating film formed on the molded article made of the resin material is then heated and molded into the desired shape, resulting in an in-mold coated molded article in which a cured in-mold coating film is formed on the molded article made of the resin material.

In a case where the resin molding mold and the in-mold coating mold are different, for example, a resin material heated and melted in an injection cylinder is injected between resin molding molds having the shape of the desired molded article, and then cooled and pressurized within the resin molding mold to form the resin material into a molded article. The resin molding mold is then separated and removed from the surface of the molded article made of the resin material. Next, the main agent (A), the curing agent (B), and the pigment paste (C) are mixed to prepare an in-mold coating composition. The in-mold coating mold is brought close to the surface of the resin molded article, a gap sufficient to inject the in-mold coating composition is formed between the surface of the molded article made of the resin material and the in-mold coating mold. The in-mold coating composition is then injected between the surface of the molded article made of the resin material and the inner wall of the in-mold coating mold, the in-mold coating mold is closed, and an uncured in-mold coating film is formed on the molded article made of the resin material. The uncured in-mold coating film formed on the molded article made of the resin material is then heated and molded into the desired shape, resulting in an in-mold coated molded article in which a cured in-mold coating film is formed on the molded article made of the resin material.

Furthermore, from the viewpoint of releasability between the in-mold coated molded article and the in-mold coated mold, an external release agent may be applied to the mold. Examples of such external release agents that can be used include fluorine-based, silicone-based, surfactant-based, and wax-based external release agents.

The heating temperature used to melt the resin in the injection cylinder is determined arbitrarily depending on the type of resin material, etc., however is preferably 80 to 300 °C. The mold temperature used to inject the resin material is determined arbitrarily depending on the molding time, type of resin material, etc., however is preferably 30 to 120 °C.

When preparing an in-mold coating composition by mixing the main agent (A), the curing agent (B), and the pigment paste (C), it is preferable to heat the main agent (A), the curing agent (B), and the pigment paste (C) separately before mixing the same, from the viewpoint of improving the hardness, adhesion, and color unevenness of the coating film to be formed.

In a case where the main agent (A), the curing agent (B), and the pigment paste (C) are heated separately and then mixed, the temperature thereof is preferably within a range of 30 to 100 °C, more preferably within a range of 40 to 90 °C, and even more preferably within a range of 50 to 80 °C, from the viewpoint of improving the hardness, adhesion, and color unevenness of the coating film to be formed.

Furthermore, since the main agent (A), the curing agent (B), and the pigment paste (C) may be heated while being mixed, the flash point of the main agent (A) is preferably 70 °C or higher, more preferably 100 °C or higher, the flash point of the curing agent (B) is preferably 70 °C or higher, more preferably 100 °C or higher, and the flash point of the pigment paste (C) is preferably 70 °C or higher, more preferably 100 °C or higher.

The molding time for the resin material may be until the resin material is completely solidified, however, it is sufficient that the resin material is solidified to a strength that does not damage the molded shape when the in-mold coating composition is injected, and a period of 20 seconds to 60 minutes is usually preferable.

The amount of the in-mold coating composition injected is preferably an amount sufficient to obtain the desired film thickness, and is preferably an amount sufficient to obtain a cured film thickness of 15 to 2000 $\mu$m.

The heating temperature when heating the uncured in-mold coating film is preferably within a range of 20 to 160 °C, more preferably within a range of 40 to 150 °C, and even more preferably within a range of 60 to 140 °C.

The heating time when heating the uncured in-mold coating film is preferably within a range of 20 seconds to 10 minutes, more preferably within a range of 30 seconds to 5 minutes, and even more preferably within a range of 40 seconds to 4 minutes.

Pressure is preferably applied when heating and curing the uncured in-mold coating film.

In a case where the pressure is applied, it is preferable that the pressure be within a range of 2 to 14 MPa, from the viewpoint of improving the hardness and adhesion of the coating film to be formed.

EXAMPLES

The present invention will be explained in more detail below with reference to manufacturing examples, working examples, and comparative examples. Incidentally, these manufacturing examples, working examples, and comparative examples are merely illustrative and are not intended to limit the scope of the present invention. In the manufacturing examples, working examples, and comparative examples, "parts" and "%" are based on mass unless otherwise specified. Furthermore, the thickness of the coating film is based on the cured coating film.

The components used in the following examples are as follows.

<Preparation of the main agent (A)>

Manufacturing example 1

In a vessel equipped with a stirrer, 80.0 parts of "Desmophen XP2488" (trade name, manufactured by Covestro AG, hydroxyl group-containing polyester resin containing 26 % hydroxyl group-containing monomers, number average molecular weight of 500, solid content concentration of 100 %), 20.0 parts of "Placcel 303" (trade name, manufactured by Daicel Corporation, hydroxyl group-containing polycaprolactone resin, number average molecular weight of 310, solid content concentration of 100 %), 1.7 parts of "Moldwiz INT-120IMC" (trade name, manufactured by AXEL PLASTICS, fatty acid tertiary dimethylamide-containing mixture, solid content concentration of 100 %), 0.2 parts of "BYK-333" (trade name, manufactured by BYK-Chemie, a surface conditioner (polyether-modified polydimethylsiloxane), solid content concentration of 100 %), 2.9 parts of "TINUVIN 400" (trade name, manufactured by BASF Corporation, triazine-based ultraviolet absorber, solid content concentration of 85 %), 5.7 parts of "TINUVIN 292" (trade name, manufactured by BASF Corporation, hindered amine compound light stabilizer, solid content concentration of 100 %), and 1.7 parts of "NEOSTAN U-830" (trade name, manufactured by NITTO KASEI CO., LTD., dioctyltin diversatate, solid content concentration of 100 %) were added, uniformly mixed, whereby the main agent (A-1) with a solid content concentration of 98.5 % was obtained.

Manufacturing examples 2 to 11

The main agents (A-2) to (A-11) were obtained in the same manner as in manufacturing example 1, except that the formulation of manufacturing example 1 was changed to those shown in the following Table 1.

<The measurement of the viscosity ($V_A$) of the main agent (A) at a shear rate of 100 sec$^{-1}$ and a temperature of 65 °C>

The viscosity ($V_A$) of main agents (A-1) to (A-11) obtained in the manufacturing examples 1 to 11 was measured at a shear rate of 100 sec$^{-1}$ and a temperature of 65 °C in accordance with the method described below. The results are also shown in Table 1.

At a shear rate of 100 sec$^{-1}$, the temperature was raised from 20 °C to 80 °C at a rate of 5 °C/ min. The viscosity ($V_A$) was measured at a shear rate of 100 sec$^{-1}$ and a temperature of 65 °C using a cone and plate viscometer "MCR-302e" (trade name, manufactured by Anton Paar, 25 mm diameter, 2° inclined cone and plate).

[Table 1]

[Table 1]

Table 1

| Manufacturing examples | | | 1 | 2 | 3 | 4 | 5 | 6 | 7 | 8 | 9 | 10 | 11 |
|---|---|---|---|---|---|---|---|---|---|---|---|---|---|---|
| Main agent (A) No. | | | A-1 | A-2 | A-3 | A-4 | A-5 | A-6 | A-7 | A-8 | A-9 | A-10 | A-11 |
| Isocyanate reactive group-containing compound (a1) | Hydroxyl group-containing compound (a11) | "Desmophen XP2488" | 80.0 | 100.0 | | | | | | | | 80.0 | |
| | | "Desmophen VPLS2249/1" (Note 1) | | | | 100.0 | | | | | | | |
| | | "Placcel 303" | 20.0 | | 70.0 | | 100.0 | | | | | 20.0 | 60.0 |
| | | "ETERNACOL PH-300" (Note 2) | | | 30.0 | | | | | | | | 40.0 |
| | Amino group-containing compound (a12) | "Desmophen NH1220" (Note 3) | | | | | | 30.0 | | | | | |
| | | "Desmophen NH1423" (Note 4) | | | | | | 70.0 | 100.0 | | | | |
| | Thiol group-containing compound (a13) | "TMMP-LV" (Note 5) | | | | | | | | 20.0 | | | |
| | | "TEMPIC" (Note 6) | | | | | | | | 80.0 | 80.0 | | |
| | | "PEMP-LV" (Note 7) | | | | | | | | | 20.0 | | |
| Internal release agent | "Moldwiz INT-120IMC" | | 1.7 | 1.7 | 1.7 | 1.7 | 1.7 | 1.7 | 1.7 | 1.7 | 1.7 | | 1.7 |
| Surface conditioner | "BYK-333" | | 0.2 | 0.2 | 0.2 | 0.2 | 0.2 | 0.2 | 0.2 | 0.2 | 0.2 | | 0.2 |
| Ultraviolet absorber | "TINUVIN 400" | | 2.9 | 2.9 | 2.9 | 2.9 | 2.9 | 2.9 | 2.9 | 2.9 | 2.9 | | 2.9 |
| Light stabilizer | "TINUVIN 292" | | 5.7 | 5.7 | 5.7 | 5.7 | 5.7 | 5.7 | 5.7 | 5.7 | 5.7 | | 5.7 |
| Catalyst | "NEOSTAN U-830" | | 1.7 | 1.7 | 1.7 | 1.7 | 1.7 | 1.7 | 1.7 | 1.7 | 1.7 | | 1.7 |
| Solid content concentration (%) of main agent (A) | | | 98.5 | 98.5 | 98.5 | 98.5 | 98.5 | 98.5 | 98.5 | 98.5 | 98.5 | 100.0 | 98.5 |
| Total | | | 112.2 | 112.2 | 112.2 | 112.2 | 112.2 | 112.2 | 112.2 | 112.2 | 112.2 | 100.0 | 112.2 |
| Viscosity ($V_A$) (mPa·s) of main agent (A) at $100s^{-1}$ and 65 °C | | | 320 | 500 | 1700 | 110 | 150 | 45 | 80 | 180 | 180 | 350 | 1900 |

Incidentally, the components listed in the table are as follows.

(Note 1) "Desmophen VPLS 2249/1"; trade name, manufactured by Covestro AG, hydroxyl group-containing polyester resin containing 44% hydroxyl group-containing monomers, average molecular weight of 1008, solid content concentration of 100%

(Note 2) "ETERNACOL PH-300": manufactured by UBE, hydroxyl group-containing polycarbonate resin, average molecular weight of 3000, solid content concentration of 100%

(Note 3) "Desmophen NH1220": trade name, manufactured by Covestro AG, N,N'-(2-methylpentane-1,5-diyl) bisaspartate tetraethyl, average molecular weight of 461, solid content concentration of 100%

(Note 4) "Desmophen NH1423": trade name, manufactured by Covestro AG, N,N'-[methylenebis(cyclohexane-4,1-diyl)]bisaspartate tetraethyl, average molecular weight of 551, solid content concentration of 100%

(Note 5) "TMMP-LV": trade name, manufactured by SC ORGANIC CHEMICAL CO., LTD., trimethylolpropane tris(3-mercaptopropionate), average molecular weight of 399, solid content concentration of 100%

(Note 6) "TEMPIC": trade name, manufactured by SC ORGANIC CHEMICAL CO., LTD., tris-[(3-mercaptopropionyloxy)-ethyl]isocyanurate, average molecular weight of 526, solid content concentration of 100%

(Note 7) "PEMP-LV": trade name, manufactured by SC ORGANIC CHEMICAL CO., LTD., pentaerythritol tetrakis(3-mercaptopropionate), average molecular weight of 489, solid content concentration of 100%

<Preparation of the curing agent (B)>

Manufacturing example 12

In a vessel equipped with a stirrer, 40.0 parts of "Desmodur N3900" (trade name, manufactured by Sumika Covestro Urethane Co., Ltd., iminooxadiazinedione of hexamethylene diisocyanate, solid content concentration of 100%), 20.0 parts of "Desmodur N3400" (trade name, manufactured by Sumika Covestro Urethane Co., Ltd., a mixture of uretdione and isocyanurate of hexamethylene diisocyanate, solid content concentration of 100%), 40.0 parts of "Desmodur NZ200" (trade name, manufactured by Sumika Covestro Urethane Co., Ltd., a mixture of isocyanurate of hexamethylene diisocyanate and isocyanurate of isophorone diisocyanate, solid content concentration of 100%), and 2.3 parts of "Carbodilite V-05" (trade name, manufactured by Nisshinbo Chemical Inc., carbodiimide group-containing compound having an aromatic ring structure and two isocyanate groups, carbodiimide equivalent weight per solid content of 262, number average molecular weight of 800, solid content concentration of 100%) were blended and mixed uniformly to obtain the curing agent (B-1) with a solid content concentration of 100.0%.

Manufacturing examples 13 and 19

The curing agents (B-2) to (B-8) were obtained in the same manner as in manufacturing example 12, except that the formulation of manufacturing example 12 was changed to those shown in the following Table 2.

<The measurement of the viscosity ($V_B$) of the curing agent (B) at a shear rate of 100 sec$^{-1}$ and a temperature of 65 °C>

The viscosity ($V_B$) of the curing agent (B-1) to (B-8) obtained in the manufacturing examples 12 to 19 was measured at a shear rate of 100 sec$^{-1}$ and a temperature of 65 °C in accordance with the method described below. The results are also shown in Table 2.
At a shear rate of 100 sec$^{-1}$, the temperature was raised from 20 °C to 80 °C at a rate of 5 °C/ min. The viscosity ($V_B$) was measured at a shear rate of 100 sec$^{-1}$ and a temperature of 65 °C using a cone and plate viscometer "MCR-302e" (trade name, manufactured by Anton Paar, 25 mm diameter, 2° inclined cone and plate).

[Table 2]

Table 2

| Manufacturing examples | | 12 | 13 | 14 | 15 | 16 | 17 | 18 | 19 |
|---|---|---|---|---|---|---|---|---|---|
| Curing agent (B) No. | | B-1 | B-2 | B-3 | B-4 | B-5 | B-6 | B-7 | B-8 |
| Polyisocyanate compound (b1) | "Desmodur N3900" | 40.0 | 66.7 | 20.0 | | | | | |
| | "Desmodur N3400" | 20.0 | | | 100.0 | | | | |
| | "Desmodur N3600" (Note 8) | | | | | 100.0 | | | |
| | "Desmodur NZ200" | 40.0 | 33.3 | | | | 100.0 | 100.0 | |
| | "Desmodur N3500" (Note 9) | | | 80.0 | | | | | 100.0 |
| | "Carbodilite V-05" | 2.3 | 2.3 | 2.3 | 2.3 | 2.3 | 2.3 | | 2.3 |
| Solid content concentration (%) of curing agent (B) | | 100.0 | 100.0 | 100.0 | 100.0 | 100.0 | 100.0 | 100.0 | 100.0 |
| Total | | 102 | 102 | 102 | 102 | 102 | 102 | 100 | 102 |
| Viscosity ($V_B$) (mPa·s) of curing agent (B) at $100s^{-1}$ and 65 °C | | 170 | 140 | 1700 | 30 | 105 | 830 | 830 | 1900 |

Incidentally, the components listed in the table are as follows.

(Note 8) "Desmodur N3600": trade name, manufactured by Sumika Covestro Urethane Co., Ltd., isocyanurate of hexamethylene diisocyanate, solid content concentration of 100%.
(Note 9) "Desmodur N3500": trade name, manufactured by Sumika Covestro Urethane Co., Ltd., allophanate of hexamethylene diisocyanate, solid content concentration of 100%.

<Preparation of the pigment paste (C)>

Manufacturing example 20

In a vessel equipped with a stirrer, 80.0 parts of "Desmophen XP2488" (trade name, manufactured by Covestro AG, hydroxyl group-containing polyester resin containing 26 % hydroxyl group-containing monomers, number average molecular weight of 500, solid content concentration of 100 %), 20.0 parts of "Placcel 303" (trade name, manufactured by Daicel Corporation, hydroxyl group-containing polycaprolactone resin, number average molecular weight of 310, solid content concentration of 100 %), 4.8 parts of "Raven 5000 ULTRA III POWDER" (trade name, manufactured by BIRLA CARBON, carbon black pigment, solid content concentration of 100%), 0.5 parts of "SOLSPERSE 5000S" (trade name, manufactured by LUBRISOL, phthalocyanine-based pigment derivative, solid content concentration of 100%), 2.4 parts of "DISPERBYK-2013" (trade name, manufactured by BYK-Chemie, dispersant, solid content concentration of 100%), 1.7 parts of "Moldwiz INT-120IMC" (trade name, manufactured by AXEL PLASTICS, fatty acid tertiary dimethylamide-containing mixture, solid content concentration of 100 %), 0.2 parts of "BYK-333" (trade name, manufactured by BYK-Chemie, a surface conditioner (polyether-modified polydimethylsiloxane), solid content concentration of 100 %), 2.9 parts of "TINUVIN 400" (trade name, manufactured by BASF Corporation, triazine-based ultraviolet absorber, solid content concentration of 85 %), 5.7 parts of "TINUVIN 292" (trade name, manufactured by BASF Corporation, hindered amine compound light stabilizer, solid content concentration of 100 %), 1.7 parts of "NEOSTAN U-830" (trade name, manufactured by NITTO KASEI CO., LTD., dioctyltin diversatate, solid content concentration of 100 %) and 8.7 parts of butyl acetate were added, and mixed uniformly. The obtained mixed solution was then placed in a wide-mouth glass bottle, and glass beads with a diameter of approximately 1.3 mm as dispersion medium were added, and sealed, and dispersed for 3 hours on a paint shaker, whereby the pigment paste (C-1) with solid content concentration of 92.0% was obtained.

Manufacturing examples 21-81

The pigment pastes (C-2) to (C-62) were obtained in the same manner as in manufacturing example 20, except that the formulation of manufacturing example 20 was changed to those shown in the following Table 3.

<The measurement of the viscosity ($V_C$) of the pigment paste (C) at a shear rate of 100 sec$^{-1}$ and a temperature of 65 °C>

The viscosity ($V_C$) of the pigment paste (C-1) to (C-62) obtained in the manufacturing examples 20 to 81 was measured at a shear rate of 100 sec$^{-1}$ and a temperature of 65 °C in accordance with the method described below. The results are also shown in Table 3.

At a shear rate of 100 sec$^{-1}$, the temperature was raised from 20 °C to 80 °C at a rate of 5 °C/ min. The viscosity ($V_C$) was measured at a shear rate of 100 sec$^{-1}$ and a temperature of 65 °C using a cone and plate viscometer "MCR-302e" (trade name, manufactured by Anton Paar, 25 mm diameter, 2° inclined cone and plate).

[Table 3]

Table 3

| Manufacturing examples | | | 20 | 21 | 22 | 23 | 24 | 25 | 26 | 27 | 28 | 29 |
|---|---|---|---|---|---|---|---|---|---|---|---|---|
| Pigment paste (C) No. | | | C-1 | C-2 | C-3 | C-4 | C-5 | C-6 | C-7 | C-8 | C-9 | C-10 |
| Isocyanate reactive group-containing compound (c1) | Hydroxyl group-containing compound (c11) | "Desmophen XP2488" | 80.0 | 100.0 | 80.0 | 80.0 | 80.0 | | | | | |
| | | "Desmophen VPLS2249/1" (Note 1) | | | | | | | | | 100.0 | |
| | | "Placcel 303" | 20.0 | | 20.0 | 20.0 | 20.0 | 70.0 | | | | 100.0 |
| | | "ETERNACOL PH-300" (Note 2) | | | | | | 30.0 | | | | |
| | | "PTMG-2000" (Note 10) | | | | | | | 100.0 | | | |
| | | "PTMG-3000" (Note 11) | | | | | | | | 100.0 | | |
| | Amino group-containing compound (c12) | "Desmophen NH1220" (Note 3) | | | | | | | | | | |
| | | "Desmophen NH1423" (Note 4) | | | | | | | | | | |
| | Thiol group-containing compound (c13) | "TMMP-LV" (Note 5) | | | | | | | | | | |
| | | "TEMPIC" (Note 6) | | | | | | | | | | |
| | | "PEMP-LV" (Note 7) | | | | | | | | | | |
| Coloring pigment (c2) | | "RAVEN 5000 ULTRA III POWDER" | 4.8 | 4.8 | 4.8 | 4.8 | 1.1 | 4.8 | 4.8 | 4.8 | 4.8 | 4.8 |
| | | TIPAQUE CR-95 (Note 12) | | | | | | | | | | |
| | | "Chlorinated Cyanine Blue G-314" (Note 13) | | | | | | | | | | |
| | | "YELLOW 2GLMA" (Note 14) | | | | | | | | | | |
| | | "Irgazin Rubine L4025" (Note 15) | | | | | | | | | | |
| | | "ELgee neo BLUE #325" (Note 16) | | | | | | | | | | |
| | | "ELgee neo RED #325" (Note 17) | | | | | | | | | | |
| | | "Xirallic T60-23 WNT Galaxy Blue" (Note 18) | | | | | | | | | | |
| | | "Xirallic F60-51 SW RADIENT RED" (Note 19) | | | | | | | | | | |
| Pigment derivative | | "SOLSPERSE 5000S" | 0.5 | 0.5 | 0.5 | 0.5 | 0.1 | 0.5 | 0.5 | 0.5 | 0.5 | 0.5 |
| Dispersant | | "DISPERBYK-2013" | 2.4 | 2.4 | 2.4 | 2.4 | 0.6 | 2.4 | 2.4 | 2.4 | 2.4 | 2.4 |
| | | "DISPERBYK-111" (Note 20) | | | | | | | | | | |
| | | "Borchi Gen 1757" (Note 21) | | | | | | | | | | |

(continued)

| Manufacturing examples | | 20 | 21 | 22 | 23 | 24 | 25 | 26 | 27 | 28 | 29 |
|---|---|---|---|---|---|---|---|---|---|---|---|
| Pigment paste (C) No. | | C-1 | C-2 | C-3 | C-4 | C-5 | C-6 | C-7 | C-8 | C-9 | C-10 |
| Internal release agents | "Moldwiz INT-120IMC" | 1.7 | 1.7 | 1.7 | 1.7 | 1.7 | 1.7 | 1.7 | 1.7 | 1.7 | 1.7 |
| Surface conditioners | "BYK-333" | 0.2 | 0.2 | 0.2 | 0.2 | 0.2 | 0.2 | 0.2 | 0.2 | 0.2 | 0.2 |
| Ultraviolet absorber | "TINUVIN 400" | 2.9 | 2.9 | 2.9 | 2.9 | 2.9 | 2.9 | 2.9 | 2.9 | 2.9 | 2.9 |
| Light stabilizer | "TINUVIN 292" | 5.7 | 5.7 | 5.7 | 5.7 | 5.7 | 5.7 | 5.7 | 5.7 | 5.7 | 5.7 |
| Catalysts | "NEOSTAN U-830" | 1.7 | 1.7 | 1.7 | 1.7 | 1.7 | 1.7 | 1.7 | 1.7 | 1.7 | 1.7 |
| Organic solvent | Butyl acetate | 8.7 | 8.7 | 20.0 | 0.7 | 8.7 | 12.0 | 8.7 | 20.0 | 8.7 | 8.7 |
| | Ethyl 3-ethylpropionate | | | | | | | | | | |
| Solid content concentration (%) of pigment paste (C) | | 92.0 | 92.0 | 85.0 | 99.0 | 89.0 | 90.0 | 92.0 | 85.0 | 92.0 | 92.0 |
| Pigment concentration (%) of pigment paste (C) | | 3.7 | 3.7 | 3.4 | 3.9 | 0.9 | 3.6 | 3.7 | 3.4 | 3.7 | 3.7 |
| Total | | 128 | 128 | 140 | 121 | 123 | 132 | 128 | 140 | 128 | 128 |
| Viscosity ($V_C$) (mPa · s) of pigment paste (C) at 100s$^{-1}$ and 65 °C | | 420 | 800 | 160 | 1000 | 250 | 1700 | 1200 | 1700 | 180 | 200 |

[Table 4]

| Table 3 (Continuance-1) | | | | | | | | | | | | | |
|---|---|---|---|---|---|---|---|---|---|---|---|---|---|
| Manufacturing examples | | | 30 | 31 | 32 | 33 | 34 | 35 | 36 | 37 | 38 | 39 |
| Pigment paste (C) No. | | | C-11 | C-12 | C-13 | C-14 | C-15 | C-16 | C-17 | C-18 | C-19 | C-20 |
| Isocyanate reactive group-containing compound (c1) | Hydroxyl group-containing compound (c11) | "Desmophen XP2488" | | | | | 80.0 | 80.0 | 80.0 | 80.0 | 80.0 | 80.0 |
| | | "Desmophen VPLS2249/1" (Note 1) | | | | | | | | | | |
| | | "Placcel 303" | | | | | 20.0 | 20.0 | 20.0 | 20.0 | 20.0 | 20.0 |
| | | "ETERNACOL PH-300" (Note 2) | | | | | | | | | | |
| | | "PTMG-2000" (Note 10) | | | | | | | | | | |
| | | "PTMG-3000" (Note 11) | | | | | | | | | | |
| | Amino group-containing compound (c12) | "Desmophen NH1220" (Note 3) | 30.0 | | | | | | | | | |
| | | "Desmophen NH1423" (Note 4) | 70.0 | 100.0 | | | | | | | | |
| | Thiol group-containing compound (c13) | "TMMP-LV" (Note 5) | | | 20.0 | | | | | | | |
| | | "TEMPIC" (Note 6) | | | 80.0 | 80.0 | | | | | | |
| | | "PEMP-LV" (Note 7) | | | | 20.0 | | | | | | |
| Coloring pigment (c2) | | "RAVEN 5000 ULTRA III POWDER" | 4.8 | 4.8 | 4.8 | 4.8 | 20.0 | 2.0 | 4.8 | 4.8 | 4.8 | 4.8 |
| | | TIPAQUE CR-95 (Note 12) | | | | | | | | | | |
| | | "Chlorinated Cyanine Blue G-314" (Note 13) | | | | | | | | | | |
| | | "YELLOW 2GLMA" (Note 14) | | | | | | | | | | |
| | | "Irgazin Rubine L4025" (Note 15) | | | | | | | | | | |
| | | "ELgee neo BLUE #325" (Note 16) | | | | | | | | | | |
| | | "ELgee neo RED #325" (Note 17) | | | | | | | | | | |
| | | "Xirallic T60-23 WNT Galaxy Blue" (Note 18) | | | | | | | | | | |
| | | "Xirallic F60-51 SW RADIENT RED" (Note 19) | | | | | | | | | | |
| Pigment derivative | | "SOLSPERSE 5000S" | 0.5 | 0.5 | 0.5 | 0.5 | 0.8 | 0.2 | 0.5 | 0.5 | | 0.5 |
| Dispersant | | "DISPERBYK-2013" | 2.4 | 2.4 | 2.4 | 2.4 | 8.0 | 2.0 | 2.4 | 2.4 | 2.4 | 2.4 |
| | | "DISPERBYK-111" (Note 20) | | | | | | | | | | |
| | | "Borchi Gen 1757" (Note 21) | | | | | | | | | | |

EP 4 692 260 A1

| Table 3 (Continuance-1) | | | | | | | | | | | | |
|---|---|---|---|---|---|---|---|---|---|---|---|---|
| Manufacturing examples | | 30 | 31 | 32 | 33 | 34 | 35 | 36 | 37 | 38 | 39 |
| Pigment paste (C) No. | | C-11 | C-12 | C-13 | C-14 | C-15 | C-16 | C-17 | C-18 | C-19 | C-20 |
| Internal release agents | "Moldwiz INT-120IMC" | 1.7 | 1.7 | 1.7 | 1.7 | 1.7 | 1.7 | 1.7 | 1.7 | 1.7 | |
| Surface conditioners | "BYK-333" | 0.2 | 0.2 | 0.2 | 0.2 | 0.2 | 0.2 | 0.2 | 0.2 | 0.2 | |
| Ultraviolet absorber | "TINUVIN 400" | 2.9 | 2.9 | 2.9 | 2.9 | 2.9 | 2.9 | 2.9 | 2.9 | 2.9 | |
| Light stabilizer | "TINUVIN 292" | 5.7 | 5.7 | 5.7 | 5.7 | 5.7 | 5.7 | 5.7 | 5.7 | 5.7 | |
| Catalysts | "NEOSTAN U-830" | 1.7 | 1.7 | 1.7 | 1.7 | 1.7 | 1.7 | 1.7 | 1.7 | 1.7 | |
| Organic solvent | Butyl acetate | 8.7 | 8.7 | 8.7 | 8.7 | 8.7 | 8.7 | 20.8 | | 8.7 | 9.4 |
| | Ethyl 3-ethylpropionate | | | | | | | | 8.7 | | |
| Solid content concentration (%) of pigment paste (C) | | 92.0 | 92.0 | 92.0 | 92.0 | 94.7 | 91.7 | 84.0 | 92.0 | 91.9 | 92.0 |
| Pigment concentration (%) of pigment paste (C) | | 3.7 | 3.7 | 3.7 | 3.7 | 13.4 | 1.6 | 3.4 | 3.7 | 3.7 | 4.1 |
| Total | | 128 | 128 | 128 | 128 | 150 | 125 | 141 | 128 | 128 | 117 |
| Viscosity ($V_C$) (mPa·s) of pigment paste (C) at 100s$^{-1}$ and 65 °C | | 80 | 160 | 200 | 200 | 1700 | 370 | 150 | 600 | 650 | 460 |

EP 4 692 260 A1

EP 4 692 260 A1

[Table 5]

| Table 3 (Continuance-2) | | | | | | | | | | | | | | |
|---|---|---|---|---|---|---|---|---|---|---|---|---|---|---|
| Manufacturing examples | | | 40 | 41 | 42 | 43 | 44 | 45 | 46 | 47 | 48 | 49 | 50 |
| Pigment paste (C) No. | | | C-21 | C-22 | C-23 | C-24 | C-25 | C-26 | C-27 | C-28 | C-29 | C-30 | C-31 |
| Isocyanate reactive group-containing compound (c1) | Hydroxyl group-containing compound (c11) | "Desmophen XP2488" | 80.0 | | 80.0 | 80.0 | 80.0 | 80.0 | 80.0 | 80.0 | 80.0 | | 80.0 |
| | | "Desmophen VPLS2249/1" (Note 1) | | 100.0 | | | | | | | | 100.0 | |
| | | "Placcel 303" | 20.0 | | 20.0 | 20.0 | 20.0 | 20.0 | 20.0 | 20.0 | 20.0 | | 20.0 |
| | | "ETERNACOL PH-300" (Note 2) | | | | | | | | | | | |
| | | "PTMG-2000" (Note 10) | | | | | | | | | | | |
| | | "PTMG-3000" (Note 11) | | | | | | | | | | | |
| | Amino group-containing compound (c12) | "Desmophen NH1220" (Note 3) | | | | | | | | | | | |
| | | "Desmophen NH1423" (Note 4) | | | | | | | | | | | |
| | Thiol group-containing compound (c13) | "TMMP-LV" (Note 5) | | | | | | | | | | | |
| | | "TEMPIC" (Note 6) | | | | | | | | | | | |
| | | "PEMP-LV" (Note 7) | | | | | | | | | | | |

36

| Table 3 (Continuance-2) | | 40 | 41 | 42 | 43 | 44 | 45 | 46 | 47 | 48 | 49 | 50 |
|---|---|---|---|---|---|---|---|---|---|---|---|---|
| Manufacturing examples | | 40 | 41 | 42 | 43 | 44 | 45 | 46 | 47 | 48 | 49 | 50 |
| Coloring pigment (c2) | "RAVEN 5000 ULTRA III POWDER" | | | | | | | | | 0.2 | 0.2 | 0.3 |
| | TIPAQUE CR-95 (Note 12) | 167.0 | 167.0 | 250.0 | 300.0 | 100.0 | 167.0 | 167.0 | 167.0 | | | |
| | "Chlorinated Cyanine Blue G-314" (Note 13) | | | | | | | | | 7.7 | 7.7 | 13.0 |
| | "YELLOW 2GLMA" (Note 14) | | | | | | | | | | | |
| | "Irgazin Rubine L4025" (Note 15) | | | | | | | | | | | |
| | "ELgee neo BLUE #325" (Note 16) | | | | | | | | | 12.6 | 12.6 | 21.4 |
| | "ELgee neo RED #325" (Note 17) | | | | | | | | | | | |
| | "Xirallic T60-23 WNT Galaxy Blue" (Note 18) | | | | | | | | | 3.9 | 3.9 | 6.6 |
| | "Xirallic F60-51 SW RADIENT RED" (Note 19) | | | | | | | | | | | |
| Pigment derivative | "SOLSPERSE 5000S" | | | | | | | | | 0.4 | 0.4 | 0.7 |
| Dispersant | "DISPERBYK-2013" | | | | | | | | | 13.5 | 13.5 | 13.5 |
| | "DISPERBYK-111" (Note 20) | 5.0 | 5.0 | 7.5 | 9.0 | 3.0 | 5.0 | 5.0 | 5.0 | | | |
| | "Borchi Gen 1757" (Note 21) | | | | | | | | | | | |
| Internal release agents | "Moldwiz INT-120IMC" | 1.7 | 1.7 | 1.7 | 1.7 | 1.7 | 1.7 | 1.7 | 1.7 | 9.7 | 9.7 | 9.7 |
| Surface conditioners | "BYK-333" | 0.2 | 0.2 | 0.2 | 0.2 | 0.2 | 0.2 | 0.2 | 0.2 | 0.2 | 0.2 | 0.2 |
| Ultraviolet absorber | "TINUVIN 400" | 2.9 | 2.9 | 2.9 | 2.9 | 2.9 | 2.9 | 2.9 | 2.9 | 2.9 | 2.9 | 2.9 |
| Light stabilizer | "TINUVIN 292" | 5.7 | 5.7 | 5.7 | 5.7 | 5.7 | 5.7 | 5.7 | 5.7 | 5.7 | 5.7 | 5.7 |
| Catalysts | "NEOSTAN U-830" | 1.7 | 1.7 | 1.7 | 1.7 | 1.7 | 1.7 | 1.7 | 1.7 | 1.7 | 1.7 | 1.7 |
| Organic solvent | Butyl acetate | 25.0 | 25.0 | 25.0 | 25.0 | 25.0 | 3.9 | 2.0 | 50.0 | 15.9 | 15.9 | 15.9 |
| | Ethyl 3-ethylpropionate | | | | | | | | | | | |

(continued)

Table 3 (Continuance-2)

| Manufacturing examples | 40 | 41 | 42 | 43 | 44 | 45 | 46 | 47 | 48 | 49 | 50 |
|---|---|---|---|---|---|---|---|---|---|---|---|
| Solid content concentration (%) of pigment paste (C) | 92.0 | 92.0 | 93.0 | 93.0 | 88.0 | 98.0 | 99.0 | 84.0 | 90.0 | 90.0 | 90.9 |
| Pigment concentration (%) of pigment paste (C) | 54.0 | 54.0 | 63.3 | 67.2 | 41.6 | 58.0 | 58.3 | 50.0 | 13.9 | 13.9 | 21.5 |
| Total | 309 | 309 | 395 | 446 | 240 | 288 | 286 | 334 | 174 | 174 | 192 |
| Viscosity ($V_C$) (mPa·s) of pigment paste (C) at 100s$^{-1}$ and 65 °C | 130 | 160 | 700 | 1200 | 120 | 300 | 400 | 100 | 250 | 180 | 1400 |

[Table 6]

Table 3 (Continuance-3)

| Manufacturing examples | | | 51 | 52 | 53 | 54 | 55 | 56 | 57 | 58 | 59 | 60 |
|---|---|---|---|---|---|---|---|---|---|---|---|---|
| Pigment paste (C) No. | | | C-32 | C-33 | C-34 | C-35 | C-36 | C-37 | C-38 | C-39 | C-40 | C-41 |
| Isocyanate reactive group-containing compound (c1) | Hydroxyl group-containing compound (c11) | "Desmophen XP2488" | 80.0 | 80.0 | 80.0 | 80.0 | | 80.0 | 80.0 | 80.0 | 80.0 | 80.0 |
| | | "Desmophen VPLS2249/1" (Note 1) | | | | | 100.0 | | | | | |
| | | "Placcel 303" | 20.0 | 20.0 | 20.0 | 20.0 | | 20.0 | 20.0 | 20.0 | 20.0 | 20.0 |
| | | "ETERNACOL PH-300" (Note 2) | | | | | | | | | | |
| | | "PTMG-2000" (Note 10) | | | | | | | | | | |
| | | "PTMG-3000" (Note 11) | | | | | | | | | | |
| | Amino group-containing compound (c12) | "Desmophen NH1220" (Note 3) | | | | | | | | | | |
| | | "Desmophen NH1423" (Note 4) | | | | | | | | | | |
| | Thiol group-containing compound (c13) | "TMMP-LV" (Note 5) | | | | | | | | | | |
| | | "TEMPIC" (Note 6) | | | | | | | | | | |
| | | "PEMP-LV" (Note 7) | | | | | | | | | | |
| Coloring pigment (c2) | | "RAVEN 5000 ULTRA III POWDER" | 0.1 | 0.2 | 0.2 | | | | | | | |
| | | "TIPAQUE CR-95" (Note 12) | 4.0 | 7.7 | 7.7 | | | | | | | 271.4 |
| | | "Chlorinated Cyanine Blue G-314" (Note 13) | | | | | | | | | | |
| | | "YELLOW 2GLMA" (Note 14) | | | | | | | | | | 155.8 |
| | | "Irgazin Rubine L4025" (Note 15) | | | | 8.9 | 8.9 | 12.0 | 4.0 | 8.9 | 8.9 | |
| | | "ELgee neo BLUE #325" (Note 16) | 6.6 | 12.6 | 12.6 | | | | | | | |
| | | "ELgee neo RED #325" (Note 17) | | | | 17.5 | 17.5 | 23.7 | 7.9 | 17.5 | 17.5 | |
| | | "Xirallic T60-23 WNT Galaxy Blue" (Note 18) | 2.0 | 3.9 | 3.9 | | | | | | | |
| | | "Xirallic F60-51 SW RADIENT RED" (Note 19) | | | | 5.8 | 5.8 | 7.9 | 2.6 | 5.8 | 5.8 | |
| Pigment derivative | | "SOLSPERSE 5000S" | 0.2 | 0.4 | 0.4 | | | | | | | |
| | | "DISPERBYK-2013" | 13.5 | 13.5 | 13.5 | 6.3 | 6.3 | 6.3 | 6.3 | 6.3 | 6.3 | |
| Dispersant | | "DISPERBYK-111" (Note 20) | | | | | | | | | | |
| | | "Borchi Gen 1757" (Note 21) | | | | | | | | | | 68.0 |

| Table 3 (Continuance-3) | | | | | | | | | | | | |
|---|---|---|---|---|---|---|---|---|---|---|---|---|
| Manufacturing examples | | 51 | 52 | 53 | 54 | 55 | 56 | 57 | 58 | 59 | 60 |
| Internal release agents | "Moldwiz INT-120IMC" | 9.7 | 9.7 | 9.7 | 9.5 | 9.5 | 9.5 | 9.5 | 9.5 | 9.5 | 1.7 |
| Surface conditioners | "BYK-333" | 0.2 | 0.2 | 0.2 | 0.2 | 0.2 | 0.2 | 0.2 | 0.2 | 0.2 | 0.2 |
| Ultraviolet absorber | "TINUVIN 400" | 2.9 | 2.9 | 2.9 | 2.9 | 2.9 | 2.9 | 2.9 | 2.9 | 2.9 | 2.9 |
| Light stabilizer | "TINUVIN 292" | 5.7 | 5.7 | 5.7 | 5.7 | 5.7 | 5.7 | 5.7 | 5.7 | 5.7 | 5.7 |
| Catalysts | "NEOSTAN U-830" | 1.7 | 1.7 | 1.7 | 1.7 | 1.7 | 1.7 | 1.7 | 1.7 | 1.7 | 1.7 |
| Organic solvent | Butyl acetate | 15.9 | 1.0 | 28.4 | 13.7 | 13.7 | 13.7 | 13.7 | 1.0 | 28.3 | 81.4 |
| | Ethyl 3-ethylpropionate | | | | | | | | | | |
| Solid content concentration (%) of pigment paste (C) | | 88.7 | 99.0 | 84.0 | 91.1 | 91.1 | 92.0 | 90.0 | 99.0 | 84.0 | 88.0 |
| Pigment concentration (%) of pigment paste (C) | | 7.8 | 15.2 | 13.0 | 18.7 | 18.7 | 23.7 | 9.4 | 20.1 | 17.2 | 62.0 |
| Total | | 163 | 159 | 187 | 172 | 172 | 184 | 155 | 159 | 187 | 689 |
| Viscosity ($V_C$) (mPa·s) of pigment paste (C) at 100s$^{-1}$ and 65 °C | | 200 | 1800 | 180 | 450 | 170 | 1600 | 320 | 1700 | 320 | 115 |

EP 4 692 260 A1

[Table 7]

| Table 3 (Continuance-4) | | | | | | | | | | | | | | |
|---|---|---|---|---|---|---|---|---|---|---|---|---|---|---|
| Manufacturing examples | | | 61 | 62 | 63 | 64 | 65 | 66 | 67 | 68 | 69 | 70 | 71 |
| Pigment paste (C) No. | | | C-42 | C-43 | C-44 | C-45 | C-46 | C-47 | C-48 | C-49 | C-50 | C-51 | C-52 |
| Isocyanate reactive group-con-taining com-pound (c1) | Hydroxyl group-con-taining compound (c11) | "Desmophen XP2488" | | 80.0 | 80.0 | 80.0 | 80.0 | | | 80.0 | | | 80.0 |
| | | "Desmophen VPLS2249/1" (Note 1) | 100.0 | | | | | | | | | | |
| | | "Placcel 303" | | 20.0 | 20.0 | 20.0 | 20.0 | 60.0 | | 20.0 | | 60.0 | 20.0 |
| | | "ETERNACOL PH-300" (Note 2) | | | | | | 40.0 | 100.0 | | | 40.0 | |
| | | "PTMG-2000" (Note 10) | | | | | | | | | 100.0 | | |
| | | "PTMG-3000" (Note 11) | | | | | | | | | | | |
| | Amino group-containing compound (c12) | "Desmophen NH1220" (Note 3) | | | | | | | | | | | |
| | | "Desmophen NH1423" (Note 4) | | | | | | | | | | | |
| | Thiol group-containing compound (c13) | "TMMP-LV" (Note 5) | | | | | | | | | | | |
| | | "TEMPIC" (Note 6) | | | | | | | | | | | |
| | | "PEMP-LV" (Note 7) | | | | | | | | | | | |

Table 3 (Continuance-4)

| Manufacturing examples | | 61 | 62 | 63 | 64 | 65 | 66 | 67 | 68 | 69 | 70 | 71 |
|---|---|---|---|---|---|---|---|---|---|---|---|---|
| Coloring pigment (c2) | "RAVEN 5000 ULTRA III POWDER" | | | | | | 4.8 | 4.8 | 40.0 | 20.0 | | |
| | TIPAQUE CR-95 (Note 12) | 271.4 | 298.5 | 217.1 | 271.4 | 271.4 | | | | | 167.0 | 400.0 |
| | "Chlorinated Cyanine Blue G-314" (Note 13) | | | | | | | | | | | |
| | "YELLOW 2GLMA" (Note 14) | 155.8 | 171.3 | 124.6 | 155.8 | 155.8 | | | | | | |
| | "Irgazin Rubine L4025" (Note 15) | | | | | | | | | | | |
| | "ELgee neo BLUE #325" (Note 16) | | | | | | | | | | | |
| | "ELgee neo RED #325" (Note 17) | | | | | | | | | | | |
| | "Xirallic T60-23 WNT Galaxy Blue" (Note 18) | | | | | | | | | | | |
| | "Xirallic F60-51 SW RADIENT RED" (Note 19) | | | | | | | | | | | |
| Pigment derivative | "SOLSPERSE 5000S" | | | | | | 0.5 | 0.5 | 2.0 | 2.0 | | |
| Dispersant | "DISPERBYK-2013" | | | | | | 2.4 | 2.4 | 20.0 | 20.0 | | |
| | "DISPERBYK-111" (Note 20) | | | | | | | | | | 5.0 | 12.0 |
| | "Borchi Gen 1757" (Note 21) | 68.0 | 74.8 | 54.4 | 68.0 | 68.0 | | | | | | |
| Internal release agents | "Moldwiz INT-120IMC" | 1.7 | 1.7 | 1.7 | 1.7 | 1.7 | 1.7 | 1.7 | 1.7 | 1.7 | 1.7 | 1.7 |
| Surface conditioners | "BYK-333" | 0.2 | 0.2 | 0.2 | 0.2 | 0.2 | 0.2 | 0.2 | 0.2 | 0.2 | 0.2 | 0.2 |
| Ultraviolet absorber | "TINUVIN 400" | 2.9 | 2.9 | 2.9 | 2.9 | 2.9 | 2.9 | 2.9 | 2.9 | 2.9 | 2.9 | 2.9 |
| Light stabilizer | "TINUVIN 292" | 5.7 | 5.7 | 5.7 | 5.7 | 5.7 | 5.7 | 5.7 | 5.7 | 5.7 | 5.7 | 5.7 |
| Catalysts | "NEOSTAN U-830" | 1.7 | 1.7 | 1.7 | 1.7 | 1.7 | 1.7 | 1.7 | 1.7 | 1.7 | 1.7 | 1.7 |
| Organic solvent | Butyl acetate | 50.0 | 81.4 | 81.4 | 5.0 | 114.0 | 8.7 | 8.7 | 8.7 | 8.7 | 25.0 | 25.0 |
| | Ethyl 3-ethylpropionate | | | | | | | | | | | |

EP 4 692 260 A1

(continued)

| Table 3 (Continuance-4) | | | | | | | | | | | |
|---|---|---|---|---|---|---|---|---|---|---|---|
| Manufacturing examples | 61 | 62 | 63 | 64 | 65 | 66 | 67 | 68 | 69 | 70 | 71 |
| Solid content concentration (%) of pigment paste (C) | 92.0 | 88.0 | 88.0 | 99.0 | 84.0 | 92.0 | 92.0 | 95.2 | 94.7 | 92.0 | 95.4 |
| Pigment concentration (%) of pigment paste (C) | 65.0 | 63.6 | 57.9 | 69.8 | 59.2 | 3.7 | 3.7 | 21.9 | 12.3 | 54.0 | 72.8 |
| Total | 657 | 738 | 590 | 612 | 721 | 129 | 129 | 183 | 163 | 309 | 549 |
| Viscosity ($V_C$) (mPa·s) of pigment paste (C) at $100s^{-1}$ and 65 °C | 110 | 160 | 100 | 1650 | 100 | 2000 | 10000 | 1900 | 2100 | 2200 | 2000 |

EP 4 692 260 A1

[Table 8]

Table 3 (Continuance-5)

| | | | 72 | 73 | 74 | 75 | 76 | 77 | 78 | 79 | 80 | 81 |
|---|---|---|---|---|---|---|---|---|---|---|---|---|
| Manufacturing examples | | | 72 | 73 | 74 | 75 | 76 | 77 | 78 | 79 | 80 | 81 |
| Pigment paste (C) No. | | | C-53 | C-54 | C-55 | C-56 | C-57 | C-58 | C-59 | C-60 | C-61 | C-62 |
| Isocyanate reactive group-containing compound (c1) | Hydroxyl group-containing compound (c11) | "Desmophen XP2488" | | | 80.0 | | | 80.0 | | | 80.0 | |
| | | "Desmophen VPLS2249/1" (Note 1) | | | | | | | | | | |
| | | "Placcel 303" | | 60.0 | 20.0 | | 60.0 | 20.0 | | 60.0 | 20.0 | |
| | | "ETERNACOL PH-300" (Note 2) | | 40.0 | | | 40.0 | | | 40.0 | | |
| | | "PTMG-2000" (Note 10) | 100.0 | | | 100.0 | | | 100.0 | | | 100.0 |
| | | "PTMG-3000" (Note 11) | | | | | | | | | | |
| | Amino group-containing compound (c12) | "Desmophen NH1220" (Note 3) | | | | | | | | | | |
| | | "Desmophen NH1423" (Note 4) | | | | | | | | | | |
| | Thiol group-containing compound (c13) | "TMMP-LV" (Note 5) | | | | | | | | | | |
| | | "TEMPIC" (Note 6) | | | | | | | | | | |
| | | "PEMP-LV" (Note 7) | | | | | | | | | | |
| Coloring pigment (c2) | | "RAVEN 5000 ULTRA III POWDER" | | 0.2 | 0.3 | 0.2 | | | | | | |
| | | TIPAQUE CR-95 (Note 12) | 300.0 | | | | | | | 271.4 | 407.1 | 325.7 |
| | | "Chlorinated Cyanine Blue G-314" (Note 13) | | 7.7 | 15.3 | 11.5 | | | | | | |
| | | "YELLOW 2GLMA" (Note 14) | | | | | | | | 155.8 | 233.6 | 186.9 |
| | | "Irgazin Rubine L4025" (Note 15) | | | | | 8.9 | 17.7 | 13.3 | | | |
| | | "ELgee neo BLUE #325" (Note 16) | | 12.6 | 25.2 | 18.9 | | | | | | |
| | | "ELgee neo RED #325" (Note 17) | | | | | 17.5 | 34.9 | 26.2 | | | |
| | | "Xirallic T60-23 WNT Galaxy Blue" (Note 18) | | 3.9 | 7.8 | 5.8 | | | | | | |
| | | "Xirallic F60-51 SW RADIENT RED" (Note 19) | | | | | 5.8 | 11.7 | 8.7 | | | |
| Pigment derivative | | "SOLSPERSE 5000S" | | 0.4 | 0.9 | 0.6 | | | | | | |
| Dispersant | | "DISPERBYK-2013" | | 13.5 | 27.0 | 20.2 | 6.3 | 12.7 | 6.3 | | | |
| | | "DISPERBYK-111" (Note 20) | 5.0 | | | | | | | | | |
| | | "Borchi Gen 1757" (Note 21) | | | | | | | | 68.0 | 102.0 | 81.6 |

EP 4 692 260 A1

44

| Table 3 (Continuance-5) | | | | | | | | | | | |
|---|---|---|---|---|---|---|---|---|---|---|---|
| Manufacturing examples | | 72 | 73 | 74 | 75 | 76 | 77 | 78 | 79 | 80 | 81 |
| Internal release agents | "Moldwiz INT-120IMC" | 1.7 | 9.7 | 9.7 | 9.7 | 9.5 | 9.5 | 9.5 | 1.7 | 1.7 | 1.7 |
| Surface conditioners | "BYK-333" | 0.2 | 0.2 | 0.2 | 0.2 | 0.2 | 0.2 | 0.2 | 0.2 | 0.2 | 0.2 |
| Ultraviolet absorber | "TINUVIN 400" | 2.9 | 2.9 | 2.9 | 2.9 | 2.9 | 2.9 | 2.9 | 2.9 | 2.9 | 2.9 |
| Light stabilizer | "TINUVIN 292" | 5.7 | 5.7 | 5.7 | 5.7 | 5.7 | 5.7 | 5.7 | 5.7 | 5.7 | 5.7 |
| Catalysts | "NEOSTAN U-830" | 1.7 | 1.7 | 1.7 | 1.7 | 1.7 | 1.7 | 1.7 | 1.7 | 1.7 | 1.7 |
| Organic solvent | Butyl acetate | 25.0 | 15.9 | 15.9 | 15.9 | 13.7 | 13.7 | 13.7 | 81.4 | 81.4 | 81.4 |
| | Ethyl 3-ethylpropionate | | | | | | | | | | |
| Solid content concentration (%) of pigment paste (C) | | 94.3 | 90.0 | 92.5 | 91.8 | 91.1 | 93.5 | 92.7 | 88.0 | 91.3 | 89.7 |
| Pigment concentration (%) of pigment paste (C) | | 67.8 | 13.9 | 22.9 | 18.8 | 18.7 | 30.5 | 25.6 | 62.0 | 68.4 | 65.1 |
| Total | | 442 | 174 | 213 | 193 | 172 | 211 | 188 | 689 | 936 | 788 |
| Viscosity ($V_C$) (mPa·s) of pigment paste (C) at 100s$^{-1}$ and 65 °C | | 2300 | 2400 | 2500 | 2000 | 2800 | 3000 | 2100 | 2300 | 2200 | 2000 |

EP 4 692 260 A1

Incidentally, the components listed in the table are as follows.

(Note 10) "PTMG-2000": trade name, manufactured by Mitsubishi Chemical Corporation, polytetramethylene glycol, number average molecular weight of 2000, solid content concentration of 100%

(Note 11) "PTMG-3000": trade name, manufactured by Mitsubishi Chemical Corporation, polytetramethylene glycol, number average molecular weight of 3000, solid content concentration of 100%

(Note 12) "TIPAQUE CR-95": trade name, manufactured by ISHIHARA SANGYO KAISHA,LTD., titanium oxide, solid content concentration of 100%

(Note 13) "Chlorinated Cyanine Blue G-314": trade name, manufactured by Sanyo Color Works, LTD., phthalocyanine blue pigment, solid content concentration of 100%

(Note 14) "YELLOW 2GLMA": trade name, manufactured by Dominion Colour Corporation, bismuth vanadate-based yellow pigment, solid content concentration of 100%

(Note 15) "Irgazin Rubine L4025": trade name, manufactured by BASF, diketopyrrolopyrrolebased red pigment, solid content concentration of 100%

(Note 16) "ELgee neo BLUE #325": trade name, manufactured by Oike Metallic Design, evaporated colored aluminum pigment, solid content concentration of 100%

(Note 17) "ELgee neo RED #325": trade name, manufactured by Oike Metallic Design, evaporated colored aluminum pigment, solid content concentration of 100%

(Note 18) "Xirallic T60-23 WNT Galaxy Blue": trade name, manufactured by Merck, titanium oxide coated alumina oxide flake pigment, solid content concentration of 100%

(Note 19) "Xirallic F60-51 SW RADIENT RED": trade name, manufactured by Merck, iron oxide coated alumina flake pigment, solid content concentration of 100%

(Note 20) "DISPERBYK-111": trade name, manufactured by BYK-Chemie, dispersant, solid content concentration of 100%

(Note 21) "Borchi Gen 1757": trade name, manufactured by Borchers Americas, dispersant, solid content concentration of 100%

<Production of in-mold coated molded article>

Example 1

(Production of the in-mold coated molded article (M1))

First, "DIARAC TW20" (trade name, manufactured by TechnoUMG, acrylonitrile-styrene-acrylate resin (ASA resin)) was filled into the injection molded cylinder and heated and melted at 230 °C. Thereafter, the mixture was injected between resin molding molds at 60 °C, and was cooled while maintaining the pressure for 30 seconds to obtain a 100 mm × 100 mm × 2 mm plate-shaped "DIARAC TW20" molded product.

Next, a kit consisting of the main agent (A-1) obtained in Manufacturing example 1, the curing agent (B-1) obtained in Manufacturing example 12, and the pigment paste (C-1) obtained in Manufacturing example 20 was prepared, and the kit was heated up to 65 °C. Next, the mixture was blended in a vessel equipped with a stirrer so that the mass ratio of the main agent (A-1), the curing agent (B-1) and the pigment paste (C-1) was 30.3 / 62.1 / 7.6 in a ratio of (A-1) / (B-1) / (C-1), and the mixture was uniformly mixed, whereby the in-mold coating composition No. 1 with a solid content concentration of 98.9% was obtained.

Next, the resin molding mold was opened, the in-mold coating composition No. 1 was injected between the obtained plate-shaped "DIARAC TW20" molded product and the coating film coated mold, the inside of the coating film coated mold was heated to 80 °C. to maintain the temperature, and pressurized at a molding pressure of 5 MPa for 1 minute, then reduced pressure, and the coating film coated mold was opened, whereby an in-mold coated molded article (M1-1) was produced in which a coating film was coated with a cured film thickness of 200 μm on a plate-shaped "DIARAC TW20" molded product.

(Production of the in-mold coated molded article (M2))

First, "Makroblend UT235M" (trade name, manufactured by Covestro AG, polymer alloy of polyethylene terephthalate resin and polycarbonate resin) was filled into the injection molded cylinder and heated and melted at 270 °C. Thereafter, the mixture was injected between resin molding molds at 70 °C, and was cooled while maintaining the pressure for 30 seconds to obtain a 100 mm × 100 mm × 2 mm plate-shaped "Makroblend UT235M" molded product.

Next, a kit consisting of the main agent (A-1) obtained in Manufacturing example 1, the curing agent (B-1) obtained in Manufacturing example 12, and the pigment paste (C-1) obtained in Manufacturing example 20 was prepared, and the kit was heated up to 65 °C. Next, the mixture was blended in a vessel equipped with a stirrer so that the mass ratio of the main agent (A-1), the curing agent (B-1) and the pigment paste (C-1) was 30.3 / 62.1 / 7.6 in a ratio of (A-1) / (B-1) / (C-1), and the mixture was uniformly mixed, whereby the in-mold coating composition No. 1 with a solid content concentration of 98.9% was obtained .

Next, the resin molding mold was opened, the in-mold coating composition No. 1 was injected between the obtained plate-shaped "Makroblend UT235M" molded product and the coating film coated mold, the inside of the coating film coated mold was heated to 80 °C. to maintain the temperature, and pressurized at a molding pressure of 5 MPa for 1 minute, then reduced pressure, and the coating film coated mold was opened, whereby an in-mold coated molded article (M2-1) was produced in which a coating film was coated with a cured film thickness of 200 μm on a plate-shaped "Makroblend UT235M" molded product.

Examples 2 to 59, and Comparative examples 1 and 26

The in-mold coated molded articles (M1-2) to (M1-85) and (M2-2) to (M2-85) were obtained in the same manner as in Example 1, except that the formulation of Example 1 was changed to those shown in the following Table 4.

<Evaluation of the in-mold coated molded article>

The color unevenness, hardness and adhesion were evaluated for the cured coating film of each of the obtained in-mold coated molded articles. The evaluation results are shown in Table 4.

(The color unevenness)

The surfaces of each of the in-mold coated molded articles obtained in Examples 1 to 59 and Comparative examples 1 to 26 were observed visually, and the extent to which color unevenness occurred was evaluated based on the following criteria. A and B are acceptable.

    A: Color unevenness is hardly recognized,
    B: Color unevenness is slightly recognized,
    C: Color unevenness is recognized,
    D: Color unevenness is remarkably recognized.

(The hardness)

The Martens hardness (N/ mm$^2$) of the cured coating film of each of the in-mold coated molded articles obtained in Examples 1 to 59 and Comparative examples 1 to 26 was measured using a "Fisher Scope (registered trademark) HM2000S" (trade name, manufactured by Fisher Instruments), and evaluated based on the following criteria. The measurement conditions were: indenter: a square pyramidal Vickers indenter (material: diamond, facing angle: 136 °), maximum test load: 20 mN, pushing speed: 20 mN/ 25 seconds, temperature: 21 ± 2 °C, humidity: 50 ± 5 % relative humidity. A and B are acceptable.

    A: Martens hardness is 110 N/ mm$^2$ or more;
    B: Martens hardness is 100 N/ mm$^2$ or more, and less than 110 N/ mm$^2$;
    C: Martens hardness is 75 N/ mm$^2$ or more, and less than 100 N/ mm$^2$;
    D: Martens hardness is less than 75 N/ mm$^2$.

(The adhesion)

The coating film of each of the in-mold coated molded articles obtained in Examples 1 to 59 and Comparative examples 1 to 26 was cut into a grid-like shape with a cutter so as to reach the base, and 100 squares with a size of 2 mm × 2 mm were made. Next, adhesive cellophane tape was adhered to the surface of each in-mold coated molded article which was cut, and the adhesive cellophane tape was rapidly peeled off at a temperature of 23 ± 2 °C and humidity of 50 ± 5 % relative humidity. The remaining state of the square coating film after peeling was examined, and the adhesion was evaluated based on the following criteria. A and B are acceptable.

    A: 100 square coating films remain, and there are no small gaps or floats in the coating films at the edge of the notch of the cutter,
    B: 100 square coating films remain, and small gaps and floats of the coating film appear at the edge of the notch of the cutter,

C: 90 to 99 square coating films remain,

D: The remaining number of square coating films is 89 or less.

[Table 9]

| Table 4 | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| In-mold coating composition Nos. | | | 1 | 2 | 3 | 4 | 5 | 6 | 7 | 8 | 9 | 10 |
| Main agent (A) No. | | | A-1 | A-2 | A-1 | A-1 | A-1 | A-3 | A-1 | A-1 | A-1 | A-1 |
| Curing agent (B) No. | | | B-1 | B-2 | B-2 | B-2 | B-2 | B-2 | B-3 | B-2 | B-2 | B-2 |
| Pigment paste (C) No. | | | C-1 | C-2 | C-3 | C-4 | C-5 | C-1 | C-1 | C-6 | C-7 | C-8 |
| Main agent (A)/ curing agent (B)/ pigment paste (C) proportion | | | 30.3/ 62.1/ 7.6 | 30.8/ 61.5/ 7.7 | 39.7/ 2.3/ 58 | 30.8/ 61.5/ 7.7 | 30.3/ 62.1/ 7.6 | 35.1/ 56.1/ 8.8 | 28.8/ 64/ 7.2 | 30.8/ 61.5/ 7.7 | 32/ 60/ 8 | 69.6/ 13/ 17.4 |
| Solid content concentration (%) of coating composition | | | 98.9 | 98.9 | 94.0 | 100.0 | 99.0 | 98.8 | 99.0 | 98.8 | 98.9 | 96.3 |
| Viscosity $(V_A)$ (mPa·s) of main agent (A) at $100s^{-1}$ and 65 °C | | | 320 | 500 | 320 | 320 | 320 | 1700 | 320 | 320 | 320 | 320 |
| Viscosity $(V_B)$ (mPa·s) of curing agent (B) at $100s^{-1}$ and 65 °C | | | 170 | 140 | 140 | 140 | 140 | 140 | 1700 | 140 | 140 | 140 |
| Viscosity $(V_C)$ (mPa·s) of pigment paste (C) at $100s^{-1}$ and 65 °C | | | 420 | 800 | 160 | 1000 | 250 | 420 | 420 | 1700 | 1200 | 1700 |
| $(V_B) / (V_A)$ | | | 0.5 | 0.3 | 0.4 | 0.4 | 0.4 | 0.1 | 5.3 | 0.4 | 0.4 | 0.4 |
| $(V_C) / (V_A)$ | | | 1.3 | 1.6 | 0.5 | 3.1 | 0.8 | 0.2 | 1.3 | 5.3 | 3.8 | 5.3 |
| Evaluation | Article (M1) | In-mold coated molded article name | (M1-1) | (M1-2) | (M1-3) | (M1-4) | (M1-5) | (M1-6) | (M1-7) | (M1-8) | (M1-9) | (M1-10) |
| | | Color unevenness | A | A | B | B | B | B | B | B | B | B |
| | | Hardness | A | B | B | A | A | B | B | B | B | B |
| | | Adhesion | A | A | A | A | A | B | B | B | A | B |
| | Article (M2) | In-mold coated molded article name | (M2-1) | (M2-2) | (M2-3) | (M2-4) | (M2-5) | (M2-6) | (M2-7) | (M2-8) | (M2-9) | (M2-10) |
| | | Color unevenness | A | A | B | B | B | B | B | B | B | B |
| | | Hardness | A | B | B | A | A | B | B | B | B | B |
| | | Adhesion | A | B | A | B | B | B | B | B | A | B |

49

[Table 10]

| Table 4 (Cintinuance-1) | | | | | | | | | | | | |
|---|---|---|---|---|---|---|---|---|---|---|---|---|
| | | | Examples | | | | | | | | | |
| | | | 11 | 12 | 13 | 14 | 15 | 16 | 17 | 18 | 19 | 20 |
| In-mold coating composition Nos. | | | 11 | 12 | 13 | 14 | 15 | 16 | 17 | 18 | 19 | 20 |
| Main agent (A) No. | | | A-4 | A-5 | A-6 | A-7 | A-8 | A-9 | A-1 | A-1 | A-1 | A-1 |
| Curing agent (B) No. | | | B-2 | B-2 | B-2 | B-2 | B-2 | B-2 | B-1 | B-1 | B-4 | B-5 |
| Pigment paste (C) No. | | | C-9 | C-10 | C-11 | C-12 | C-13 | C-14 | C-15 | C-16 | C-1 | C-1 |
| Main agent (A)/ curing agent (B)/ pigment paste (C) proportion | | | 31/ 61.2 / 7.8 | 30/ 62.5 / 7.5 | 47.9/ 40.1 / 12 | 48.8/ 39 / 12.2 | 44.3/ 50.7 / 4.9 | 44.1/ 51 / 4.9 | 30.3/ 62.1 / 7.6 | 30.3/ 62.1 / 7.6 | 30.3/ 62.1 / 7.6 | 29.2/ 63.5 / 7.3 |
| Solid content concentration (%) of coating composition | | | 98.9 | 99.0 | 98.3 | 98.3 | 98.9 | 98.9 | 99.1 | 98.9 | 98.9 | 99.0 |
| Viscosity $(V_A)$ (mPa·s) of main agent (A) at $100s^{-1}$ and 65 °C | | | 110 | 150 | 45 | 80 | 180 | 180 | 320 | 320 | 320 | 320 |
| Viscosity $(V_B)$ (mPa·s) of curing agent (B) at $100s^{-1}$ and 65 °C | | | 140 | 140 | 320 | 320 | 140 | 140 | 170 | 170 | 30 | 105 |
| Viscosity $(V_C)$ (mPa·s) of pigment paste (C) at $100s^{-1}$ and 65 °C | | | 180 | 200 | 80 | 160 | 200 | 200 | 1700 | 370 | 420 | 420 |
| $(V_B) / (V_A)$ | | | 1.3 | 0.9 | 7.1 | 4.0 | 0.8 | 0.8 | 0.5 | 0.5 | 0.1 | 0.3 |
| $(V_C) / (V_A)$ | | | 1.6 | 1.3 | 1.8 | 2.0 | 1.1 | 1.1 | 5.3 | 1.2 | 1.3 | 1.3 |
| Evaluation | Article (M1) | In-mold coated molded article name | (M1-11) | (M1-12) | (M1-13) | (M1-14) | (M1-15) | (M1-16) | (M1-17) | (M1-18) | (M1-19) | (M1-20) |
| | | Color unevenness | A | A | B | A | A | A | B | A | B | B |
| | | Hardness | A | A | A | B | A | A | B | A | A | A |
| | | Adhesion | A | A | B | B | A | A | B | A | B | B |
| | Article (M2) | In-mold coated molded article name | (M2-11) | (M2-12) | (M2-13) | (M2-14) | (M2-15) | (M2-16) | (M2-17) | (M2-18) | (M2-19) | (M2-20) |
| | | Color unevenness | A | A | B | A | A | A | B | A | B | B |
| | | Hardness | A | A | A | B | A | A | B | A | A | A |
| | | Adhesion | A | A | B | B | B | B | B | A | B | B |

[Table 11]

| Table 4 (Cintinuance-2) | | | | | | | | | | | | |
|---|---|---|---|---|---|---|---|---|---|---|---|---|
| | | | Examples | | | | | | | | | |
| | | | 21 | 22 | 23 | 24 | 25 | 26 | 27 | 28 | 29 | 30 |
| In-mold coating composition Nos. | | | 21 | 22 | 23 | 24 | 25 | 26 | 27 | 28 | 29 | 30 |
| Main agent (A) No. | | | A-1 | A-1 | A-1 | A-1 | A-1 | A-1 | A-1 | A-1 | A-10 | A-1 |
| Curing agent (B) No. | | | B-6 | B-1 | B-1 | B-1 | B-1 | B-1 | B-1 | B-1 | B-1 | B-1 |
| Pigment paste (C) No. | | | C-1 | C-1 | C-1 | C-17 | C-18 | C-1 | C-1 | C-19 | C-20 | C-21 |
| Main agent (A)/ curing agent (B)/ pigment paste (C) proportion | | | 29.6/ 63 / 7.4 | 30.5/ 62.4 / 7.1 | 4.5/ 54.5 / 40.9 | 9.1/ 58.8/ 32.1 | 32.1/ 58.8 / 9.1 | 32.4/ 59.5 / 8.1 | 26.9/ 66.3 / 6.7 | 30.3/ 62.1 / 7.6 | 10.8/ 64 / 25.2 | 29.4/ 58 / 12.6 |
| Solid content concentration (%) of coating composition | | | 99.0 | 99.4 | 97.6 | 94.7 | 98.8 | 98.9 | 99.1 | 98.9 | 98.0 | 98.6 |
| Viscosity ($V_A$) (mPa·s) of main agent (A) at $100s^{-1}$ and 65 °C | | | 320 | 320 | 320 | 320 | 320 | 320 | 320 | 320 | 350 | 320 |
| Viscosity ($V_B$) (mPa·s) of curing agent (B) at $100s^{-1}$ and 65 °C | | | 830 | 170 | 170 | 170 | 170 | 170 | 170 | 170 | 170 | 170 |
| Viscosity ($V_C$) (mPa·s) of pigment paste (C) at $100s^{-1}$ and 65 °C | | | 420 | 860 | 150 | 150 | 600 | 420 | 420 | 650 | 460 | 130 |
| ($V_B$) / ($V_A$) | | | 2.6 | 0.5 | 0.5 | 0.5 | 0.5 | 0.5 | 0.5 | 0.5 | 0.5 | 0.5 |
| ($V_C$) / ($V_A$) | | | 1.3 | 2.7 | 0.5 | 0.5 | 1.9 | 1.3 | 1.3 | 2.0 | 1.3 | 0.4 |
| Evaluation | Article (M1) | In-mold coated molded article name | (M1-21) | (M1-22) | (M1-23) | (M1-24) | (M1-25) | (M1-26) | (M1-27) | (M1-28) | (M1-29) | (M1-30) |
| | | Color unevenness | B | A | A | B | A | A | A | B | A | A |
| | | Hardness | A | A | A | B | B | B | A | A | B | A |
| | | Adhesion | B | A | A | A | A | B | A | A | B | A |
| | Article (M2) | In-mold coated molded article name | (M2-21) | (M2-22) | (M2-23) | (M2-24) | (M2-25) | (M2-26) | (M2-27) | (M2-28) | (M2-29) | (M2-30) |
| | | Color unevenness | B | A | A | B | A | A | A | B | A | A |
| | | Hardness | A | A | A | B | B | B | A | A | B | A |
| | | Adhesion | B | B | B | A | A | B | A | B | B | A |

EP 4 692 260 A1

[Table 12]

| Table 4 (Cintinuance-3) | | | | | | | | | | | |
|---|---|---|---|---|---|---|---|---|---|---|---|
| | Examples | | | | | | | | | | |
| | 31 | 32 | 33 | 34 | 35 | 36 | 37 | 38 | 39 | 40 | 41 |
| In-mold coating composition Nos. | 31 | 32 | 33 | 34 | 35 | 36 | 37 | 38 | 39 | 40 | 41 |
| Main agent (A) No. | A-4 | A-1 | A-1 | A-1 | A-1 | A-1 | A-1 | A-1 | A-1 | A-4 | A-1 |
| Curing agent (B) No. | B-1 | B-1 | B-1 | B-1 | B-6 | B-1 | B-1 | B-1 | B-1 | B-1 | B-1 |
| Pigment paste (C) No. | C-22 | C-23 | C-24 | C-25 | C-21 | C-26 | C-27 | C-28 | C-29 | C-30 | C-31 |
| Main agent (A)/ curing agent (B)/ pigment paste (C) proportion | 27.2/ 61.1 / 11.7 | 28.8/ 56.3 / 14.8 | 28.5/ 56.1 / 15.4 | 30.9/ 59.3 / 9.8 | 25.5/ 63.6 / 10.9 | 30/ 58.8 / 11.1 | 30.3/ 58.6 / 11.1 | 29.8/ 58 / 12.2 | 28/ 60 / 12 | 28.6/ 59.2 / 12.2 | 27.6/ 59.3 / 13 |
| Solid content concentration (%) of coating composition | 98.7 | 98.5 | 98.5 | 98.4 | 98.7 | 99.3 | 99.4 | 97.6 | 98.4 | 98.3 | 98.4 |
| Viscosity ($V_A$) (mPa·s) of main agent (A) at $100s^{-1}$ and 65 °C | 110 | 320 | 320 | 320 | 320 | 320 | 320 | 320 | 320 | 110 | 320 |
| Viscosity ($V_B$) (mPa·s) of curing agent (B) at $100s^{-1}$ and 65 °C | 170 | 170 | 170 | 170 | 830 | 170 | 170 | 170 | 170 | 170 | 170 |

| Table 4 (Cintinuance-3) | | | | | | | | | | | | | |
|---|---|---|---|---|---|---|---|---|---|---|---|---|---|
| | | | Examples | | | | | | | | | | |
| | | | 31 | 32 | 33 | 34 | 35 | 36 | 37 | 38 | 39 | 40 | 41 |
| Viscosity ($V_C$) (mPa·s) of pigment paste (C) at $100s^{-1}$ and 65 °C | | | 160 | 700 | 1200 | 120 | 130 | 300 | 400 | 100 | 250 | 180 | 1400 |
| ($V_B$) / ($V_A$) | | | 1.5 | 0.5 | 0.5 | 0.5 | 2.6 | 0.5 | 0.5 | 0.5 | 0.5 | 1.5 | 0.5 |
| ($V_C$) / ($V_A$) | | | 1.5 | 2.2 | 3.8 | 0.4 | 0.4 | 0.9 | 1.3 | 0.3 | 0.8 | 1.6 | 4.4 |
| Evaluation | Article (M1) | In-mold coated molded article name | (M1-31) | (M1-32) | (M1-33) | (M1-34) | (M1-35) | (M1-36) | (M1-37) | (M1-38) | (M1-39) | (M1-40) | (M1-41) |
| | | Color unevenness | A | A | B | B | A | A | B | B | A | A | B |
| | | Hardness | A | A | A | A | B | A | A | B | A | B | A |
| | | Adhesion | A | B | B | A | B | A | A | A | A | B | A |
| | Article (M2) | In-mold coated molded article name | (M2-31) | (M2-32) | (M2-33) | (M2-34) | (M2-35) | (M2-36) | (M2-37) | (M2-38) | (M2-39) | (M2-40) | (M2-41) |
| | | Color unevenness | A | A | B | B | A | A | B | B | A | A | B |
| | | Hardness | A | A | A | A | B | A | A | B | A | B | A |
| | | Adhesion | A | B | B | A | B | B | B | A | A | B | A |

[Table 13]

| Table 4 (Cintinuance-4) | | | | | | | | | | | | |
|---|---|---|---|---|---|---|---|---|---|---|---|---|
| | Examples | | | | | | | | | | | |
| | 42 | 43 | 44 | 45 | 46 | 47 | 48 | 49 | 50 | 51 | 52 | |
| In-mold coating composition Nos. | 42 | 43 | 44 | 45 | 46 | 47 | 48 | 49 | 50 | 51 | 52 | |
| Main agent (A) No. | A-1 | A-1 | A-1 | A-1 | A-1 | A-4 | A-1 | A-1 | A-1 | A-1 | A-1 | |
| Curing agent (B) No. | B-1 | B-7 | B-1 | B-1 | B-1 | B-1 | B-1 | B-1 | B-6 | B-1 | B-1 | |
| Pigment paste (C) No. | C-32 | C-29 | C-33 | C-34 | C-35 | C-36 | C-37 | C-38 | C-35 | C-39 | C-40 | |
| Main agent (A)/ curing agent (B)/ pigment paste (C) proportion | 28.1/ 60.9 / 10.9 | 26.8/ 61.7 / $11.5$ | 28.3/ 60.6 / 11 | 27.9/ 59.5 / 12.6 | 27.9/ 60.2 / 12 | 28.6/ 59.2 / 12.2 | 27.5/ 59.5 / 13 | 27.9/ 61.2 / 10.9 | 26.7/ 61.8 / $11.5$ | 28.3/ 60.6 / 11 | 27.5/ 59.5 / 13 | |
| Solid content concentration (%) of coating composition | 98.3 | 98.4 | 99.5 | 97.6 | 98.5 | 98.5 | 98.6 | 98.5 | 98.6 | 99.5 | 97.5 | |
| Viscosity $(V_A)$ (mPa·s) of main agent (A) at 100s$^{-1}$ and 65 °C | 320 | 320 | 320 | 320 | 320 | 110 | 320 | 320 | 320 | 320 | 320 | |
| Viscosity $(V_B)$ (mPa·s) of curing agent (B) at 100s$^{-1}$ and 65 °C | 170 | 830 | 170 | 170 | 170 | 170 | 170 | 170 | 830 | 170 | 170 | |
| Viscosity $(V_C)$ (mPa·s) of pigment paste (C) at 100s$^{-1}$ and 65 °C | 200 | 250 | 1800 | 180 | 450 | 170 | 1600 | 320 | 450 | 1700 | 320 | |
| $(V_B) / (V_A)$ | 0.5 | 2.6 | 0.5 | 0.5 | 0.5 | 1.5 | 0.5 | 0.5 | 2.6 | 0.5 | 0.5 | |
| $(V_C) / (V_A)$ | 0.6 | 0.8 | 5.6 | 0.6 | 1.4 | 1.5 | 5.0 | 1.0 | 1.4 | 5.3 | 1.0 | |

Table 4 (Cintinuance-4)

| Evaluation | | | Examples | | | | | | | | | | | |
|---|---|---|---|---|---|---|---|---|---|---|---|---|---|---|
| | | | 42 | 43 | 44 | 45 | 46 | 47 | 48 | 49 | 50 | 51 | 52 | |
| | Article (M1) | In-mold coated molded article name | (M1-42) | (M1-43) | (M1-44) | (M1-45) | (M1-46) | (M1-47) | (M1-48) | (M1-49) | (M1-50) | (M1-51) | (M1-52) | |
| | | Color unevenness | B | B | B | B | A | A | B | B | B | B | B |
| | | Hardness | A | B | B | A | A | B | A | B | A | B | A |
| | | Adhesion | A | B | B | B | A | B | A | A | B | B | A |
| | Article (M2) | In-mold coated molded article name | (M2-42) | (M2-43) | (M2-44) | (M2-45) | (M2-46) | (M2-47) | (M2-48) | (M2-49) | (M2-50) | (M2-51) | (M2-52) |
| | | Color unevenness | B | B | B | B | A | A | B | B | B | B | B |
| | | Hardness | A | B | B | A | A | B | A | B | A | B | A |
| | | Adhesion | A | B | B | B | A | B | A | A | B | B | A |

EP 4 692 260 A1

[Table 14]

Table 4 (Cintinuance-5)

| | | | Examples | | | | | | | Comparative examples | | | |
|---|---|---|---|---|---|---|---|---|---|---|---|---|---|
| | | | 53 | 54 | 55 | 56 | 57 | 58 | 59 | 1 | 2 | 3 | 4 |
| In-mold coating composition Nos. | | | 53 | 54 | 55 | 56 | 57 | 58 | 59 | 60 | 61 | 62 | 63 |
| Main agent (A) No. | | | A-1 | A-4 | A-1 | A-1 | A-1 | A-1 | A-1 | A-1 | A-1 | A-1 | A-1 |
| Curing agent (B) No. | | | B-1 | B-1 | B-1 | B-1 | B-6 | B-1 | B-1 | B-1 | B-1 | B-1 | B-1 |
| Pigment paste (C) No. | | | C-41 | C-42 | C-43 | C-44 | C-41 | C-45 | C-46 | C-47 | C-48 | C-49 | C-50 |
| Main agent (A)/ curing agent (B)/ pigment paste (C) proportion | | | 31/ 55.8 / 13.3 | 28.2/ 59.7 / 12.1 | 27.3/ 60.9 / 11.7 | 31/ 55.8 / 13.3 | 26.5/ 62.1 / 11.4 | 31.6/ 56.1 / 12.3 | 30.4/ 55.4 / 14.3 | 30.8/ 61.5 / 7.7 | 30.8/ 61.5 / 7.7 | 30.8/ 61.5 / 7.7 | 33.3/ 58.3 / 8.3 |
| Solid content concentration (%) of coating composition | | | 97.9 | 98.6 | 98.2 | 97.9 | 98.2 | 99.4 | 97.3 | 98.9 | 98.9 | 99.2 | 99.1 |
| Viscosity $(V_A)$ (mPa·s) of main agent (A) at $100s^{-1}$ and 65 °C | | | 320 | 110 | 320 | 320 | 320 | 320 | 320 | 320 | 320 | 320 | 110 |
| Viscosity $(V_B)$ (mPa·s) of curing agent (B) at $100s^{-1}$ and 65 °C | | | 170 | 170 | 170 | 170 | 830 | 170 | 170 | 170 | 170 | 170 | 170 |
| Viscosity $(V_C)$ (mPa·s) of pigment paste (C) at $100s^{-1}$ and 65 °C | | | 115 | 110 | 160 | 100 | 115 | 1650 | 100 | 2000 | 10000 | 1900 | 2100 |
| $(V_B) / (V_A)$ | | | 0.5 | 1.5 | 0.5 | 0.5 | 2.6 | 0.5 | 0.5 | 0.5 | 0.5 | 0.5 | 1.5 |
| $(V_C) / (V_A)$ | | | 0.4 | 1.0 | 0.5 | 0.3 | 0.4 | 5.2 | 0.3 | 6.3 | 31.3 | 5.9 | 19.1 |
| Evaluation | Article (M1) | In-mold coated molded article name | (M1-53) | (M1-54) | (M1-55) | (M1-56) | (M1-57) | (M1-58) | (M1-59) | (M1-60) | (M1-61) | (M1-62) | (M1-63) |
| | | Color unevenness | A | A | A | B | A | B | B | D | D | D | D |
| | | Hardness | A | B | A | A | B | B | A | D | D | C | D |
| | | Adhesion | A | B | A | A | B | B | B | C | D | C | D |
| | Article (M2) | In-mold coated molded article name | (M2-53) | (M2-54) | (M2-55) | (M2-56) | (M2-57) | (M2-58) | (M2-59) | (M2-60) | (M2-61) | (M2-62) | (M2-63) |
| | | Color unevenness | A | A | A | B | A | B | B | D | D | D | D |
| | | Hardness | A | B | A | A | B | B | A | D | D | C | D |
| | | Adhesion | A | B | B | A | B | B | B | C | D | C | D |

[Table 15]

Table 4 (Cintinuance-6)

| | Comparative examples | | | | | | | | | | |
|---|---|---|---|---|---|---|---|---|---|---|---|
| | 5 | 6 | 7 | 8 | 9 | 10 | 11 | 12 | 13 | 14 | 15 |
| In-mold coating composition Nos. | 64 | 65 | 66 | 67 | 68 | 69 | 70 | 71 | 72 | 73 | 74 |
| Main agent (A) No. | A-1 | A-11 | A-1 | A-1 | A-4 | A-1 | A-11 | A-1 | A-1 | A-4 | A-1 |
| Curing agent (B) No. | B-8 | B-1 | B-1 | B-1 | B-1 | B-8 | B-1 | B-1 | B-1 | B-1 | B-8 |
| Pigment paste (C) No. | C-1 | C-1 | C-51 | C-52 | C-53 | C-21 | C-21 | C-54 | C-55 | C-56 | C-29 |
| Main agent (A)/ curing agent (B)/ pigment paste (C) proportion | 27.6/ 65.5 / 6.9 | 36.4/ 54.5 / 9.1 | 29.4/ 58 / 12.6 | 31/ 55.8 / 13.3 | 30.4/ 56.5 / 13 | 26.5/ 62.1 / 11.4 | 29.2/ 58.3 / 12.5 | 29.2/ 58.3 / 12.5 | 28/ 60 / 12 | 28.1/ 59.8 /12 | 25/ 64.3 / 10.7 |
| Solid content concentration (%) of coating composition | 99.0 | 98.7 | 98.6 | 98.9 | 98.8 | 98.7 | 98.6 | 98.3 | 98.7 | 98.6 | 98.6 |
| Viscosity ($V_A$) (mPa·s) of main agent (A) at $100 s^{-1}$ and 65 °C | 320 | 110 | 320 | 1900 | 320 | 320 | 110 | 320 | 1900 | 320 | 320 |
| Viscosity ($V_B$) (mPa·s) of curing agent (B) at $100 s^{-1}$ and 65 °C | 1900 | 170 | 1900 | 170 | 170 | 170 | 170 | 1900 | 170 | 170 | 1900 |
| Viscosity ($V_C$) (mPa·s) of pigment paste (C) at $100 s^{-1}$ and 65 °C | 420 | 2000 | 420 | 420 | 2200 | 2000 | 2300 | 130 | 130 | 2400 | 250 |
| ($V_B$) / ($V_A$) | 5.9 | 1.5 | 5.9 | 0.1 | 0.5 | 0.5 | 1.5 | 5.9 | 0.1 | 0.5 | 5.9 |
| ($V_C$) / ($V_A$) | 1.3 | 18.2 | 1.3 | 0.2 | 6.9 | 6.3 | 20.9 | 0.4 | 0.1 | 7.5 | 0.8 |

(continued)

| Table 4 (Cintinuance-6) | | | | | | | | | | | | | |
|---|---|---|---|---|---|---|---|---|---|---|---|---|---|
| | | | Comparative examples | | | | | | | | | | |
| | | | 5 | 6 | 7 | 8 | 9 | 10 | 11 | 12 | 13 | 14 | 15 |
| Evaluation | Article (M1) | In-mold coated molded article name | (M1-64) | (M1-65) | (M1-66) | (M1-67) | (M1-68) | (M1-69) | (M1-70) | (M1-71) | (M1-72) | (M1-73) | (M1-74) |
| | | Color unevenness | C | D | D | D | D | C | D | D | D | D | C |
| | | Hardness | D | D | D | C | D | D | D | D | C | D | D |
| | | Adhesion | D | D | C | C | D | D | D | C | C | D | D |
| | Article (M2) | In-mold coated molded article name | (M2-64) | (M2-65) | (M2-66) | (M2-67) | (M2-68) | (M2-69) | (M2-70) | (M2-71) | (M2-72) | (M2-73) | (M2-74) |
| | | Color unevenness | C | D | D | D | D | C | D | D | D | D | C |
| | | Hardness | D | D | D | C | D | D | D | D | C | D | D |
| | | Adhesion | D | D | C | D | D | D | D | C | D | D | D |

[Table 16]

**Table 4 (Cintinuance-7)**

| | | | 16 | 17 | 18 | 19 | 20 | 21 | 22 | 23 | 24 | 25 | 26 |
|---|---|---|---|---|---|---|---|---|---|---|---|---|---|
| | | | | | | | | Comparative examples | | | | | |
| In-mold coating composition Nos. | | | 75 | 76 | 77 | 78 | 79 | 80 | 81 | 82 | 83 | 84 | 85 |
| | Main agent (A) No. | | A-11 | A-1 | A-1 | A-4 | A-1 | A-11 | A-1 | A-1 | A-4 | A-1 | A-11 |
| | Curing agent (B) No. | | B-1 | B-1 | B-1 | B-1 | B-8 | B-1 | B-1 | B-1 | B-1 | B-8 | B-1 |
| | Pigment paste (C) No. | | C-29 | C-57 | C-58 | C-59 | C-35 | C-35 | C-60 | C-61 | C-62 | C-41 | C-41 |
| Main agent (A)/ curing agent (B)/ pigment paste (C) proportion | | | 28.9/58.7/12.4 | 27.9/60.2/12 | 29.2/58.3/12.5 | 28.6/59.2/12.2 | 24.9/64.4/10.7 | 27.7/60.5/11.9 | 31/55.8/13.3 | 33.3/52.4/14.3 | 32.1/54.1/13.8 | 29/58.5/12.4 | 30.4/56.5/13 |
| Solid content concentration (%) of coating composition | | | 98.3 | 98.5 | 98.8 | 98.7 | 98.7 | 98.5 | 97.9 | 98.3 | 98.1 | 98.1 | 98.0 |
| Viscosity ($V_A$) (mPa·s) of main agent (A) at $100s^{-1}$ and 65 °C | | | 1900 | 320 | 320 | 110 | 320 | 1900 | 320 | 320 | 110 | 320 | 1900 |
| Viscosity ($V_B$) (mPa·s) of curing agent (B) at $100s^{-1}$ and 65 °C | | | 170 | 170 | 170 | 170 | 1900 | 170 | 170 | 170 | 170 | 1900 | 170 |
| Viscosity ($V_C$) (mPa·s) of pigment paste (C) at $100s^{-1}$ and 65 °C | | | 250 | 2800 | 3000 | 2100 | 450 | 450 | 2300 | 2200 | 2000 | 115 | 115 |
| ($V_B$)/($V_A$) | | | 0.1 | 0.5 | 0.5 | 1.5 | 5.9 | 0.1 | 0.5 | 0.5 | 1.5 | 5.9 | 0.1 |
| ($V_C$)/($V_A$) | | | 0.1 | 8.8 | 9.4 | 19.1 | 1.4 | 0.2 | 7.2 | 6.9 | 18.2 | 0.4 | 0.1 |
| Evaluation | Article (M1) | In-mold coated molded article name | (M1-75) | (M1-76) | (M1-77) | (M1-78) | (M1-79) | (M1-80) | (M1-81) | (M1-82) | (M1-83) | (M1-84) | (M1-85) |
| | | Color unevenness | D | D | D | D | C | D | D | D | D | C | D |
| | | Hardness | D | D | C | D | D | D | D | C | D | D | D |
| | | Adhesion | D | C | C | D | D | D | C | C | D | D | D |
| | Article (M2) | In-mold coated molded article name | (M2-75) | (M2-76) | (M2-77) | (M2-78) | (M2-79) | (M2-80) | (M2-81) | (M2-82) | (M2-83) | (M2-84) | (M2-85) |
| | | Color unevenness | D | D | D | D | C | D | D | D | D | C | D |
| | | Hardness | D | D | C | D | D | D | D | C | D | D | D |
| | | Adhesion | D | C | D | D | D | D | C | D | D | D | D |

**Claims**

1. A kit for a three-component coating composition, comprising:

   a main agent (A) containing an isocyanate reactive group-containing compound (a1);
   a curing agent (B) containing a polyisocyanate compound (b1); and
   a pigment paste (C) containing an isocyanate reactive group-containing compound (c1) and a pigment (c2), wherein
   a viscosity ($V_A$) of the main agent (A) under a shear rate of $100 \, \text{sec}^{-1}$ and a temperature of 65 °C is within a range of 20 to 1800 mPa·s,
   a viscosity ($V_B$) of the curing agent (B) under a shear rate of $100 \, \text{sec}^{-1}$ and a temperature of 65 °C is within a range of 20 to 1800 mPa·s, and
   a viscosity ($V_C$) of the pigment paste (C) under a shear rate of $100 \, \text{sec}^{-1}$ and a temperature of 65 °C is within a range of 20 to 1800 mPa·s.

2. The kit according to claim 1, wherein a solid content concentration of the three-component coating composition to be formed from the kit is 95 % by mass or more.

3. The kit according to claim 1 or 2, wherein a solid content concentration of the pigment paste (C) is within a range of 85 to 98 % by mass.

4. The kit according to any one of claims 1 to 3, wherein the isocyanate reactive group-containing compound (c1) includes an isocyanate reactive group-containing compound with a number average molecular weight within a range of 250 to 2500.

5. The kit according to any one of claims 1 to 4, wherein a content of the pigment (c2) is within a range of 1.0 to 65 % by mass based on a total amount of the pigment paste (C).

6. The kit according to any one of claims 1 to 5, wherein the ($V_A$), the ($V_B$) and the ($V_C$) satisfy following formulae (1) and (2).

$$0.4 \leqq (V_B) / (V_A) \leqq 2.5 \qquad \text{Formula (1)}$$

$$0.3 \leqq (V_C) / (V_A) \leqq 3.0 \qquad \text{Formula (2)}$$

7. A three-component coating composition, comprising:

   a main agent (A) containing an isocyanate reactive group-containing compound (a1);
   a curing agent (B) containing a polyisocyanate compound (b1); and
   a pigment paste (C) containing an isocyanate reactive group-containing compound (c1) and a pigment (c2), wherein
   a viscosity ($V_A$) of the main agent (A) under a shear rate of $100 \, \text{sec}^{-1}$ and a temperature of 65 °C is within a range of 20 to 1800 mPa·s,
   a viscosity ($V_B$) of the curing agent (B) under a shear rate of $100 \, \text{sec}^{-1}$ and a temperature of 65 °C is within a range of 20 to 1800 mPa·s, and
   a viscosity ($V_C$) of the pigment paste (C) under a shear rate of $100 \, \text{sec}^{-1}$ and a temperature of 65 °C is within a range of 20 to 1800 mPa·s.

8. An in-mold coating method comprising steps of:

   injecting an in-mold coating composition between a molded substrate and an inner wall of a mold;
   curing the in-mold coating composition, and
   removing a coated molded article from the mold, wherein

   the in-mold coating composition is the three-component coating composition formed from the kit according to any one of claims 1 to 6, or the three-component coating composition according to claim 7.

## INTERNATIONAL SEARCH REPORT

| International application No. |
| --- |
| **PCT/JP2024/010162** |

| | |
| --- | --- |
| **A.** | **CLASSIFICATION OF SUBJECT MATTER** |

*C09D 175/04*(2006.01)i; *B05D 3/00*(2006.01)i; *B05D 5/00*(2006.01)i; *B05D 7/00*(2006.01)i; *B05D 7/14*(2006.01)i; *B05D 7/24*(2006.01)i; *C09D 7/61*(2018.01)i
FI:  C09D175/04; B05D3/00 D; B05D5/00 A; B05D7/00 K; B05D7/14 P; B05D7/24 302T; B05D7/24 303A; C09D7/61

According to International Patent Classification (IPC) or to both national classification and IPC

| | |
| --- | --- |
| **B.** | **FIELDS SEARCHED** |

Minimum documentation searched (classification system followed by classification symbols)

C09D175/04; B05D3/00; B05D5/00; B05D7/00; B05D7/14; B05D7/24; C09D7/61

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2022-71678 A (NIPPON PAINT AUTOMOTIVE COATINGS CO., LTD.) 16 May 2022 (2022-05-16)<br>claims 1, 6, paragraph [0071], examples | 1-8 |
| A | JP 2022-71676 A (NIPPON PAINT AUTOMOTIVE COATINGS CO., LTD.) 16 May 2022 (2022-05-16)<br>claims 1, 8, paragraphs [0060]-[0068], examples | 1-8 |
| A | JP 6949291 B1 (KANSAI PAINT CO., LTD.) 13 October 2021 (2021-10-13)<br>claims 1, 7, paragraphs [0102]-[0106], examples | 1-8 |
| A | JP 2020-183455 A (NIPPON PAINT AUTOMOTIVE COATINGS CO., LTD.) 12 November 2020 (2020-11-12)<br>claims 1, 5, paragraph [0040] | 1-8 |
| A | JP 2017-534477 A (COVESTRO LLC.) 24 November 2017 (2017-11-24)<br>claim 1 | 1-8 |

| ✓ | Further documents are listed in the continuation of Box C. | ✓ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 April 2024** | **14 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/010162**

| C. | DOCUMENTS CONSIDERED TO BE RELEVANT | |
|---|---|---|
| Category* | Citation of document, with indication, where appropriate, of the relevant passages | Relevant to claim No. |
| A | JP 8-41208 A (NOF CORPORATION) 13 February 1996 (1996-02-13)<br>  claims 1, 5, examples | 1-8 |
| A | JP 2-14273 A (DAINICHISEIKA COLOR & CHEM MFG CO., LTD., UKIMA CHEM &<br>COLOUR MFG CO., LTD.) 18 January 1990 (1990-01-18)<br>  claims 1, 2, examples 1-4 | 1-8 |
| A | JP 1-240577 A (TANABE KAGAKU KOGYO KK, NISSAN MOTOR CO., LTD.) 26<br>September 1989 (1989-09-26)<br>  claim 1, examples 1-5 | 1-8 |

Form PCT/ISA/210 (second sheet) (July 2022)

## INTERNATIONAL SEARCH REPORT
### Information on patent family members

| International application No. |
|---|
| **PCT/JP2024/010162** |

| Patent document cited in search report | | | Publication date (day/month/year) | Patent family member(s) | | Publication date (day/month/year) |
|---|---|---|---|---|---|---|
| JP | 2022-71678 | A | 16 May 2022 | (Family: none) | | |
| JP | 2022-71676 | A | 16 May 2022 | US 2024/0018386 A1 claims 1, 8, paragraphs [0078]-[0086], examples<br>WO 2022/092163 A1<br>EP 4238736 A1<br>CN 116472159 A | | |
| JP | 6949291 | B1 | 13 October 2021 | US 2023/0159788 A1 claims 1, 8, paragraphs [0111]-[0115], examples<br>WO 2021/205934 A1<br>CN 115279850 A | | |
| JP | 2020-183455 | A | 12 November 2020 | WO 2020/218535 A1 | | |
| JP | 2017-534477 | A | 24 November 2017 | US 2017/0274564 A1 claim 1<br>WO 2016/028568 A1<br>EP 3183283 A1<br>KR 10-2017-0051416 A<br>CN 106661174 A | | |
| JP | 8-41208 | A | 13 February 1996 | US 5922633 A claim 1, examples<br>US 5661219 A<br>US 6030571 A<br>EP 643112 A2<br>KR 10-1995-0008579 A<br>TW 328548 B<br>CA 2131416 A1 | | |
| JP | 2-14273 | A | 18 January 1990 | (Family: none) | | |
| JP | 1-240577 | A | 26 September 1989 | US 5115048 A claim 1, examples 1-5<br>GB 2216534 A | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020528103 W
- JP 2000141407 A
- JP 2008525212 A

**Non-patent literature cited in the description**

- POLYMER HANDBOOK. 1999